(19) Europäisches Patentamt
European Patent Office
Office européen des brevets

(11) **EP 3 016 183 A2**

(12) **EUROPEAN PATENT APPLICATION**

(43) Date of publication:
**04.05.2016 Bulletin 2016/18**

(21) Application number: **15192168.1**

(22) Date of filing: **29.10.2015**

(51) Int Cl.:
***H01M 4/36*** *(2006.01)* ***H01M 4/505*** *(2010.01)*
***H01M 4/525*** *(2010.01)* ***H01M 4/62*** *(2006.01)*
*H01M 4/02* *(2006.01)* *H01M 4/131* *(2010.01)*
*H01M 10/052* *(2010.01)* *H01M 10/42* *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **29.10.2014 KR 20140148503**

(71) Applicant: **IUCF-HYU (Industry-University Cooperation Foundation Hanyang University)**
**Seoul 133-791 (KR)**

(72) Inventors:
- **Noh, Hyung-Joo**
**Bucheon-si, Gyeonggi-do (KR)**
- **Sun, Yang-Kook**
**Seoul (KR)**

(74) Representative: **Raynor, Stuart Andrew**
**J A Kemp**
**14 South Square**
**Gray's Inn**
**London WC1R 5JJ (GB)**

# (54) POSITIVE ELECTRODE ACTIVE MATERIAL AND SECONDARY BATTERY COMPRISING THE SAME

(57) In the positive electrode active material according to the inventive concept, the amount of residual lithium is decreased although the concentration of nickel is high, and thus the positive electrode active material exhibits excellent cycle-life characteristics and charge and discharge characteristics, has a stabilized crystal structure while having a high capacity, and is structurally stabilized even when being used at a high voltage. In the positive electrode active material, a shell portion (120) in which the concentration of nickel is controlled and the concentrations of other metals are constant is formed on the surface of a core portion (110) having gradients of concentrations of nickel, manganese, and cobalt. Thus, the positive electrode active material exhibits excellent cycle-life characteristics and charge and discharge characteristics, has a stabilized crystal structure while having a high capacity, and is structurally stabilized even when being used at a high voltage.

【Fig. 1a】

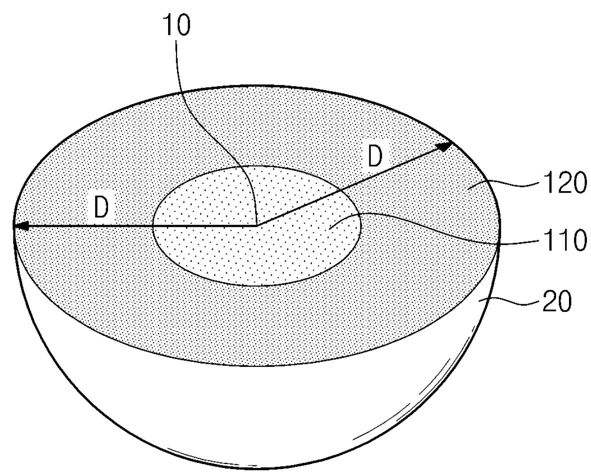


EP 3 016 183 A2

## Description

CROSS-REFERENCE TO RELATED APPLICATIONS

This application also claims priority from Korean Patent Application No. 10-2014-0148503 filed on October 29, 2014, in the Korean Intellectual Property Office, the entire content of which is incorporated herein by reference.

BACKGROUND

Embodiments of the inventive concepts described herein relate to a positive electrode active material for lithium secondary battery, and more particularly, relate to a positive electrode active material for lithium secondary battery including a core portion in which concentrations of nickel, manganese, and cobalt have gradients in a direction from the center to the surface or concentrations of nickel, manganese, and cobalt are constant; a concentration gradient portion which is formed on the outside of the core portion and in which concentrations of nickel, manganese, and cobalt have gradients; and a shell portion which is formed on the outside of the concentration gradient portion and in which concentrations of nickel, manganese, and cobalt are constant.

In addition, embodiments of the inventive concepts described herein relate to a positive electrode active material for lithium secondary battery, and more particularly, relate to a positive electrode active material for lithium secondary battery including a core portion in which concentrations of nickel, manganese, and cobalt have gradients in a direction from the center to the surface and a shell portion in which concentrations of nickel, manganese, and cobalt are constant.

In addition, embodiments of the inventive concepts described herein relate to a positive electrode active material and a secondary battery including the same, and more particularly, relate to a positive electrode active material including a concentration gradient portion and a concentration maintained portion and a secondary battery including the same.

The development of portable electronic devices such as a smart phone, an MP3 player, a tablet PC has led an explosive increase in demand for a secondary battery which can store electrical energy. In particular, the demand for a lithium secondary battery has increased in association with the advent of electric vehicles, medium to large energy storage systems, portable devices which require a high energy density.

In order to cope with such an increase in demand for a lithium secondary battery, the research and development on the positive electrode active material used in a lithium secondary battery is in progress. For example, in Korea Patent Unexamined Publication No. 10-2014-0119621 (Application No. 10-2013-0150315), a secondary battery is disclosed which has a high voltage capacity and long cycle-life characteristics as a precursor that is for producing a positive electrode active material with an excess amount of lithium and represented by $Ni_{\alpha}Mn_{\beta}Co_{\gamma-\delta}A_{\delta}CO_3$ (A is one or two or more selected from the group consisting of B, Al, Ga, Ti and In , $\alpha$ is from 0.05 to 0.4, and $\beta$ is from 0.5 to 0.8, $\gamma$ is from 0 to 0.4, and $\delta$ is from 0.001 to 0.1) is used and the kind and composition of the metal to be substituted in the precursor and the kind and amount of metal to be added to the precursor are controlled.

A lithium secondary battery has an operating voltage of 3.7 V or more, and the demand for the lithium secondary battery as a power source for driving portable electronic information and communication devices is increasing day by day since the energy density per unit weight thereof is higher than a nickel-cadmium battery or a nickel-hydrogen battery.

In recent years, the study to hybridize an internal combustion engine and a lithium secondary battery as a power source for an electric vehicle has been actively carried out in US, Japan, Europe, and the like. A battery for plug-in hybrid (PHEV) used in a vehicle which has a travel distance of less than 60 miles a day is actively developed mainly in US. The battery for PHEV is a battery which has characteristics close to an electric vehicle, and thus it is a great task to develop a battery having a high capacity. In particular, it is the most important task to develop a positive electrode material which has a high tap density of 2.0 g/cc or more and a high capacity of 230 mAh/g or more.

The positive electrode material which has been currently commercialized or is being developed includes $LiCoO_2$, $LiNiO_2$, $LiMnO_2$, $LiMn_2O_4$, $Li_{1+X}[Mn_{2-x}M_x]O_4$, $LiFePO_4$, and the like. Among these, $LiCoO_2$ is an excellent material which has stable charge and discharge characteristics, excellent electron conductivity, a high battery voltage, high stability, and flat discharge voltage characteristics. However, Co is expensive and toxic to a human body and its reserves is little, and thus the development of another positive electrode material is desired. Moreover, the thermal characteristics of $LiCoO_2$ are significantly poor since its crystal structure is unstable due to delithiation during charge.

In order to improve this, it is attempted that the start temperature of heat generation is shifted to a higher temperature side by substituting some of Ni with transition metal elements or the exothermic peak is made broad so as to prevent a rapid heat generation. However, satisfactory results have not yet been obtained. In other words, the material $LiNi_{1-x}Co_xO_2$ (x = 0.1 - 0.3) obtained by substituting some of Ni with Co exhibits excellent charge and discharge characteristics and cycle-life characteristics but the problem of thermal stability has not yet been solved. In addition, in European Patent No. 0872450, the material $Li_aCo_bMn_cM_dNi_{1-(b+c+d)}O_2$ (M = B, Al, Si. Fe, Cr, Cu, Zn, W, Ti, Ga) obtained by substituting some of Ni with other metals as well as Co and Mn is disclosed, but the thermal stability of the Ni-based material has not yet been solved.

In order to overcome such a disadvantage, a lithium transition metal oxide which has a concentration gradient of the metal composition has been proposed in Korea Patent Unexamined Publication No. 2005-0083869. In this method, a material is prepared in a double layer by once synthesizing an inner material having a certain composition and then covering it with a material having a different composition and then mixed with a lithium salt, and the mixture is subjected to the heat treatment. A commercially available lithium transition metal oxide may be used as the inner material.

In this method, however, the metal composition of the positive electrode active material discontinuously changes between the inner material and the outer material thus prepared but not continuously and gradually changes. Moreover, the powder synthesized by this invention has a low tap density since ammonia of a chelating agent is not used therein, and thus it is not suitable for being used as a positive electrode active material for a lithium secondary battery.

In order to improve this point, in Korea Patent Unexamined Publication No. 2007-0097923, a positive electrode active material which has an inner bulk portion and an outer bulk portion and a continuous concentration distribution of the metal components depending on the location in the outer bulk portion has been proposed. However, in this method, the concentration is constant in the inner bulk portion and the metal composition is only changed in the outer bulk portion, and thus it is desired to develop a positive electrode active material having a new structure so as to exhibit excellent stability and to have a higher capacity.

In addition, the reversible capacity relatively increases but the thermal stability significantly decreases when the content of Ni is high, and when the content of Ni is relatively low and the content of Mn is high, the thermal stability is improved but the advantage in terms of energy density is eliminated as compared to the existing $LiCoO_2$. Hence, it is desired to have the optimum composition of Ni : Mn : Co and the ratio of Li/M in terms of capacity and safety in order to completely or partly replace the existing LiCoO2.

The control of the ratio of Li/M in the positive electrode active material is associated with the content of Mn in the transition metal composite, and it is possible to insert an excess amount of lithium into the transition metal layer when the amount of Mn substituted is equal to or more than a certain value. In terms of battery characteristics, a relatively high high-rate characteristics and cycle-life characteristics are exerted by the excess amount of lithium inserted into the transition metal layer, and it is easy to insert lithium into the transition metal layer in a composition system having a relatively high content of Mn as compared to the ternary system having a low content of Mn, thus it is possible to control the content of watersoluble bases such as $Li_2CO_3$ and LiOH which remain on the surface of the active material after firing by minimizing the amount of lithium added at the time of synthesis. The residual lithium components are decomposed during charge and discharge or react with the electrolytic solution to generate $CO_2$ gas, as a result, the swelling phenomenon of the battery is caused and particularly the high-temperature stability of the battery deteriorates.

In particular, impurities such as LiOH or $Li_2CO_3$ are formed on the surface when a ternary positive electrode active material containing Ni as a main component is exposed to air and moisture (see Reaction Formulas 1 and 2; J. Power Sources, 134, page 293, 2004).

Reaction Formula 1: $LiNiO_2 + yH2O \rightarrow Li_{1-y}NiO_{2-y/2} + yLiOH$

Reaction Formula 2: $LiNi_{0.8}Co_{0.15}Al_{0.05}O_2 + 4xO_2 + yH_2O \rightarrow Li_{1-y}Ni_{0.8}Co_{0.15}Al_{0.05}O_2 + 2xLi_2CO_3$

The residual lithium component thus formed raise the pH during the preparation of slurry for plate, the slurry containing NMP (1-methyl-2-pyrrolidinone) and a binder begins to be polymerized to form gel, and thus a problem is caused in the plate producing process. Lithium hydroxide decreases the dispersibility of the positive electrode active material, a binder, a conductive material, and the like in a solvent, and thus it takes a long period of time to stabilize the viscosity of the slurry. In addition, when the slurry is coated on the current collector while the viscosity is not stabilized, it is not uniformly coated on the current collector, the smoothness of the electrode surface decreases, and thus the performance of the battery deteriorates.

Hence, a number of prior arts have focused on the improvement of characteristics and the producing process of the positive electrode active material containing nickel as a main component in order to decrease the amount of residual lithium.

## SUMMARY

Embodiments of the inventive concepts may provide a positive electrode active material having a new structure which includes a core portion and a shell portion and in which the content of nickel is increased to have a high capacity and the content of residual lithium is decreased.

Embodiments of the inventive concepts may also provide a positive electrode active material exhibiting high reliability and a secondary battery including the same.

Embodiments of the inventive concepts may also provide a secondary battery having a high capacity.

Embodiments of the inventive concepts may also provide a secondary battery exhibiting high stability.

Embodiments of the inventive concepts may also provide a secondary battery having a long cycle-life.

Embodiments of the inventive concepts may also provide a secondary battery having an improved charge and discharge efficiency.

Embodiments of the inventive concepts are not limited to those described above.

One aspect of embodiments of the inventive concept is directed to provide a positive electrode active material for lithium secondary battery.

According to an embodiment of the inventive concept, the positive electrode active material for lithium secondary battery may include a core portion, a concentration gradient portion that is formed on the outside of the core portion and has gradients of concentrations of nickel, manganese, and cobalt, and a shell portion that is formed on the outside of the concentration gradient portion and has constant concentrations of nickel, manganese, and cobalt.

According to an embodiment of the inventive concept, the positive electrode active material for lithium secondary battery includes the shell portion having the constant concentrations of nickel, manganese, and cobalt on the outside of the core portion, and thus it is possible to decrease the amount of residual lithium on the surface of a particle although the concentration of nickel in the inside of the particle is high.

According to an embodiment of the inventive concept, in the positive electrode active material, the core portion may have constant concentrations of nickel, manganese, and cobalt.

According to an embodiment of the inventive concept, in the positive electrode active material, the concentration of nickel in the core portion may be equal to the maximum value of the concentration of nickel in the concentration gradient portion.

According to an embodiment of the inventive concept, in the positive electrode active material, the core portion may have gradients of concentrations of nickel, manganese, and cobalt.

In embodiments of the inventive concept, the fact that the concentrations of nickel, manganese, and cobalt in the core portion have gradients may mean that the concentrations of nickel, manganese, and cobalt change depending on the distance from the center of the positive electrode active material particle.

According to an embodiment of the inventive concept, in the positive electrode active material, the core portion may have constant magnitudes of concentration gradients of nickel, manganese, and cobalt. According to embodiments of the inventive concept, the magnitudes of concentration gradients of nickel, manganese, and cobalt may be constant in the core portion, and thus relational functions of the concentrations of nickel, manganese, and cobalt according to the distance from the center may be linear.

In addition, according to embodiments of the inventive concept, the magnitudes of concentration gradients of nickel, manganese, and cobalt of the core portion may change depending on the distance from the center of the positive electrode active material particle. In other words, the relational function of the concentrations of nickel, manganese, and cobalt and the according to distance from the center may be curved. In other words, the rate of change in concentrations of nickel, manganese, and cobalt at the location having a distance D from the center in the core portion may include a constant, a linear function, or a polynomial function.

According to an embodiment of the inventive concept, in the positive electrode active material, the core portion may include n ($5 \geq n \geq 1$) core portions in which magnitudes of concentration gradients of nickel, manganese, and cobalt are represented by CSn-Ni, CSn-Mn, and CSn-Co, respectively. In a case in which n is 2, the core portion may include a first core portion in which magnitudes of concentration gradients of nickel, manganese, and cobalt are represented by CS1-Ni, CS1-Mn, and CS1-Co, respectively, and a second core portion in which magnitudes of concentration gradients of nickel, manganese, and cobalt are represented by CS2-Ni, CS2-Mn, and CS2-Co, respectively.

According to an embodiment of the inventive concept, in the positive electrode active material, the concentration gradients of nickel, manganese, and cobalt in the core portion may have linear shapes or curved shapes.

According to an embodiment of the inventive concept, in the positive electrode active material, the magnitudes |CSn-Ni|, |CSn-Mn|, and |CSn-Co| of concentration gradients of nickel, manganese, and cobalt in the n core portions and magnitudes |CG-Ni|, |CG-Mn|, and |CG-Co| of concentration gradients of nickel, manganese, and cobalt in the concentration gradient portion may satisfy the following relational expressions.

$$|CSn\ Ni| \leq |CG\text{-}Ni|$$

$$|CSn\text{-}Mn| \leq |CG\text{-}Mn|$$

$$|CSn\text{-}Co| \leq |CG\text{-}Co|$$

In other words, according to an embodiment of the inventive concept, in the positive electrode active material, the absolute values of the magnitudes of concentration gradients in the concentration gradient portion may be equal to or greater than the absolute values of the magnitudes of concentration gradients in the core portion.

According to an embodiment of the inventive concept, in the positive electrode active material, the concentration gradient portion may include n ($5 \geq n \geq 1$) concentration gradient portions in which magnitudes of concentration gradients of nickel, manganese, and cobalt are represented by CGn-Ni, CGn-Mn, and CGn-Co, respectively.

According to an embodiment of the inventive concept, in the positive electrode active material, the shell portion may include n ($5 \geq n \geq 1$) shell portions in which concentrations of nickel, manganese, and cobalt are represented by SCn-Ni, SCn-Mn, and SCn-Co, respectively.

According to an embodiment of the inventive concept, in the positive electrode active material, the concentrations SCn-Ni, SCn-Mn, and SCn-Co of nickel, manganese, and cobalt in the $n^{th}$ shell portion may satisfy the following relational expressions.

$$0.3 \leq \text{SCn-Ni} \leq 0.8$$

$$0.2 \leq \text{SCn-Mn} \leq 0.4$$

$$0.05 \leq \text{SCn-Co} \leq 0.2$$

According to an embodiment of the inventive concept, in the positive electrode active material, the concentration of nickel in the $n^{th}$ shell portion preferably may satisfy the following relational expression.

$$0.5 \leq \text{SCn-Ni} \leq 0.7$$

According to an embodiment of the inventive concept, in the positive electrode active material, the concentrations SC1-Ni, SC1-Mn, and SC1-Co of nickel, manganese, and cobalt in the first shell portion may be equal to the concentrations of nickel, manganese, and cobalt of the outermost part of the concentration gradient portion, namely, the contact point between the concentration gradient portion and the first shell portion.

According to an embodiment of the inventive concept, in the positive electrode active material, the concentration SC1-Ni of nickel in the shell portion may be equal to the minimum value of the concentration of nickel in the concentration gradient portion. In other words, the concentration of nickel in the shell portion may be continuously connected to the concentration gradient of nickel in the concentration gradient portion.

According to an embodiment of the inventive concept, in the positive electrode active material, the concentration SC1-Ni of nickel in the shell portion may be different from the minimum value of the concentration of nickel in the concentration gradient portion. For example, the concentration SC1-Ni of nickel in the shell portion may be higher than the minimum value of the concentration of nickel in the concentration gradient portion. On the other hand, the concentration SC1-Ni of nickel in the shell portion may be lower than the minimum value of the concentration of nickel in the concentration gradient portion. In other words, the concentration SC1-Ni of nickel in the shell portion may be discontinuous from the concentration gradient of nickel in the concentration gradient portion.

According to an embodiment of the inventive concept, in the positive electrode active material, the concentration gradients of nickel, manganese, and cobalt in the concentration gradient portion may have linear shapes or curved shapes.

According to an embodiment of the inventive concept, in the positive electrode active material, the shell portion has a thickness of from 0.1 $\mu$m to 0.6 $\mu$m. In the positive electrode active material, an effect derived from the formation of the shell portion may be not obtained when the thickness of the shell portion is 0.1 $\mu$m or less and the overall capacity rather may decrease when the thickness is 0.6 $\mu$m or more.

According to an embodiment of the inventive concept, in the positive electrode active material, the volume of the shell portion may be 30% or less of the total volume of the particle.

According to an embodiment of the inventive concept, in the positive electrode active material, the content of $Li_2CO_3$ of the surface of the positive electrode active material may be 2,000 ppm or less.

According to an embodiment of the inventive concept, in the positive electrode active material, the content of LiOH of the surface of the positive electrode active material may be 2,000 ppm or less.

According to an embodiment of the inventive concept, the inventive concept is also directed to provide a lithium secondary battery including the positive electrode active material described above.

According to an embodiment of the inventive concept, a positive electrode active material for lithium secondary battery may include a core portion having gradients of concentrations of nickel, manganese, and cobalt in a direction from a center to a surface and a shell portion having constant concentrations of nickel, manganese, and cobalt. The concentrations of nickel, manganese, and cobalt in a center of the core portion may be represented by CC1-Ni, CC1-Mn, and CC1-Co. The core portion may include a first core portion in which magnitudes of concentration gradients of nickel, manganese, and cobalt are represented by CS1-Ni, CS1-Mn, and CS1-Co, respectively, and a second core portion in which magnitudes of concentration gradients of nickel, manganese, and cobalt are represented by CS2-Ni, CS2-Mn, and CS2-Co, respectively. The concentration of the nickel CC1-Ni in the center may be 0.95 or more, and the concentrations of nickel, manganese, and cobalt in the shell portion may be represented by SC-Ni, SC-Mn, and SC-Co, respectively. The concentration of nickel SC-Ni in the shell portion may be 0.6 or less.

According to an embodiment of the inventive concept, in the positive electrode active material, the magnitudes CS1-Ni, CS1-Mn, and CS1-Co of concentration gradients of nickel, manganese, and cobalt in the first core portion and the magnitudes CS2-Ni, CS2-Mn, and CS2-Co of concentration gradients of nickel, manganese, and cobalt in the second core portion may satisfy the following relation expressions: CS1-Ni $< 0$, CS1-Mn $> 0$, CS1-Co $> 0$, CS2-Ni $< 0$, CS2-Mn $> 0$, and CS2-Co $>0$.

According to an embodiment of the inventive concept, in the positive electrode active material, the concentrations of nickel, manganese, and cobalt in the shell portion may be represented by SC1-Ni, SC1-Mn, and SC1-Co, respectively, and the concentrations of nickel, manganese, and cobalt in the shell portion may be constant.

According to an embodiment of the inventive concept, in the positive electrode active material, the concentrations SC1-Ni, SC1-Mn, and SC1-Co of nickel, manganese, and cobalt in the shell portion may be equal to the concentrations of nickel, manganese, and cobalt of the outermost part of the core portion.

According to an embodiment of the inventive concept, in the positive electrode active material, an average cobalt concentration of the core portion and the shell portion may be 6%. In the positive electrode active material according to the inventive concept, the average concentration of cobalt may be the average concentration of cobalt in the entire positive electrode active material particle prepared according to the inventive concept. Rate characteristics and capacity of the lithium secondary battery may decrease when the average concentration of cobalt in the entire particles is 6% or less.

According to an embodiment of the inventive concept, in the positive electrode active material, the concentration of nickel at the contact point between the first core portion and the second core portion may be 0.9. In other words, the minimum value of the concentration of nickel in the first core portion may be 0.9, and the maximum value of the concentration of nickel in the second core portion may be 0.9.

According to an embodiment of the inventive concept, in the positive electrode active material, the volume of the shell portion may be 30% or less of the total volume of the positive electrode active material particle.

Still another aspect of embodiments of the inventive concept is directed to provide a positive electrode active material.

According to an embodiment of the inventive concept, the positive electrode active material may include a first element formed of a plurality of metals including a first metal and a second element composed of one or more first elements. The first element may extend from a center part of the second element toward a surface part of the second element. The second element may include a concentration gradient portion in which a content of the first metal changes, and a concentration maintained portion in which a content of the first metal is constant.

According to an embodiment of the inventive concept, the plurality of metals may further include a second metal. The content of the second metal may decrease as the content of the first metal increases in a direction from the center part to the surface part in the concentration gradient portion. The content of the second metal may increase as the content of the first metal decreases in the direction from the center part to the surface part in the concentration gradient portion.

According to an embodiment of the inventive concept, the center part may include a region of the inside of the second element and the first element may have a rod shape radiated from the center part toward the surface part.

According to an embodiment of the inventive concept, an average content of the first metal in the concentration gradient portion may be higher than an average content of the first metal in the concentration maintained portion.

According to an embodiment of the inventive concept, a content of the first metal may continuously change in a direction from the center part to the surface part.

According to an embodiment of the inventive concept, a content of the first metal may discontinuously change between the concentration gradient portion and the concentration maintained portion.

According to an embodiment of the inventive concept, the concentration maintained portion may include a first concentration maintained portion and a second concentration maintained portion having a content of the first metal different from that in the first concentration maintained portion. A content of the first metal may discontinuously change between the first concentration maintained portion and the second concentration maintained portion.

According to an embodiment of the inventive concept, the content of the first metal in the concentration gradient portion may gradually increase or decrease in a direction from the center part to the surface part.

According to an embodiment of the inventive concept, each of the concentration gradient portion and the concentration maintained portion may be provided in plurality.

According to an embodiment of the inventive concept, the first metal may be nickel (Ni) and the second metal may be manganese (Mn).

## BRIEF DESCRIPTION OF THE FIGURES

The above and other objects and features will become apparent from the following description with reference to the following figures, wherein like reference numerals refer to like parts throughout the various figures unless otherwise specified, and wherein

Fig. 1A illustrates the cross section of the second element for explaining the second element of the positive electrode active material according to a first embodiment of the inventive concept.
Fig. 1B illustrates the positive electrode active material containing the second element composed of the first element having a rod shape according to a first embodiment of the inventive concept.
Fig. 2 is a graph illustrating the change in content of the first metal in the second element of the positive electrode active material according to a first embodiment of the inventive concept.
Fig. 3 illustrates the cross section of the second element for explaining the second element of the positive electrode active material according to a second embodiment of the inventive concept.
Figs. 4 and 5 are graphs illustrating the change in content of the first metal in the second element of the positive electrode active material according to a second embodiment of the inventive concept.
Fig. 6 illustrates the cross section of the second element for explaining the second element of the positive electrode active material according to a third embodiment of the inventive concept.
Fig. 7 is a graph illustrating the change in content of the first metal in the second element of the positive electrode active material according to a third embodiment of the inventive concept.
Fig. 8 illustrates the cross section of the second element for explaining the second element of the positive electrode active material according to a fourth embodiment of the inventive concept.
Figs. 9 and 10 are graphs illustrating the change in content of the first metal in the second element of the positive electrode active material according to a fourth embodiment of the inventive concept.
Fig. 11 illustrates the cross section of the second element for explaining the second element of the positive electrode active material according to a modified example of a fourth embodiment of the inventive concept.
Fig. 12 illustrates the cross section of the second element for explaining the second element of the positive electrode active material according to a fifth embodiment of the inventive concept.
Fig. 13 is a graph illustrating the change in content of the first metal in the second element of the positive electrode active material according to a fifth embodiment of the inventive concept.
Fig. 14 illustrates the cross section of the second element for explaining the second element of the positive electrode active material according to a sixth embodiment of the inventive concept.
Figs. 15 and 16 are graphs illustrating the change in content of the first metal in the second element of the positive electrode active material according to a sixth embodiment of the inventive concept.
Fig. 17 illustrates the cross section of the second element for explaining the second element of the positive electrode active material according to a modified example of a sixth embodiment of the inventive concept.
Fig. 18 illustrates the cross section of the second element for explaining the second element of the positive electrode active material according to a seventh embodiment of the inventive concept.
Figs. 19 and 20 are graphs illustrating the change in content of the first metal in the second element of the positive electrode active material according to a seventh embodiment of the inventive concept.
Fig. 21 illustrates the cross section of the second element for explaining the second element of the positive electrode active material according to a modified example of a seventh embodiment of the inventive concept.
Fig. 22 is a diagram for explaining a secondary battery which contains the positive electrode active material according to embodiments of the inventive concept.
Fig. 23 illustrates the concentrations of Ni, Mn, Co depending on the distance from the center in the particles prepared according to an embodiment of the inventive concept and Comparative Example, which are measured by EDX.
Fig. 24 illustrates SEM images of the particles prepared according to an embodiment of the inventive concept and Comparative Example.
Figs. 25 and 26 illustrate the measurement results on charge and discharge characteristics, cycle-life characteristics, and DSC characteristics of the batteries containing the active materials prepared according to an embodiment of the inventive concept and Comparative Example, respectively.
Fig. 27 illustrates the concentrations of Ni, Mn, Co depending on the distance from the center in the particles prepared according to an embodiment of the inventive concept and Comparative Example, which are measured by EDX.

Fig. 28 illustrates the measurement results on charge and discharge characteristics of the batteries containing the active materials prepared according to an embodiment of the inventive concept and Comparative Example.

Figs. 29 and 30 illustrate the concentrations of Ni, Mn, Co depending on the distance from the center in the particles prepared according to embodiments of the inventive concept, which are measured by EDX.

Figs. 31 to 33 illustrate the measurement results on charge and discharge characteristics, cycle-life characteristics, and DSC characteristics of the particles prepared according to an embodiment of the inventive concept and Comparative Example, respectively.

Figs. 34 to 36 illustrate the measurement results on charge and discharge characteristics, cycle-life characteristics, and DSC characteristics of the particles prepared according to an embodiment of the inventive concept and Comparative Example, respectively.

Fig. 37 illustrates the concentrations of Ni, Mn, Co depending on the distance from the center in the particles prepared according to an embodiment of the inventive concept, which are measured by EDX.

Figs. 38 to 40 illustrate the measurement results on charge and discharge characteristics, cycle-life characteristics, and DSC characteristics of the particles prepared according to an embodiment of the inventive concept and Comparative Example, respectively.

Fig. 41 illustrates the tap density and surface area by the BET method of the particles prepared according to an embodiment of the inventive concept and Comparative Example.

Fig. 42 illustrates the concentrations of Ni, Mn, Co depending on the distance from the center in the particles prepared according to an embodiment of the inventive concept, which are measured by EDX.

Figs. 43 to 45 illustrate the measurement results on charge and discharge characteristics, cycle-life characteristics, and DSC characteristics of the particles prepared according to an embodiment of the inventive concept and Comparative Example, respectively.

Fig. 46 illustrates the concentrations of Ni, Mn, Co depending on the distance from the center in the particles prepared according to an embodiment of the inventive concept, which are measured by EDX.

Figs. 47 to 49 illustrate the measurement results on charge and discharge characteristics, cycle-life characteristics, and DSC characteristics of the particles prepared according to an embodiment of the inventive concept and Comparative Example, respectively.

Fig. 50 illustrates the concentrations of Ni, Mn, Co depending on the distance from the center in the particles prepared according to an embodiment of the inventive concept measured by EDX.

Figs. 51 to 54 illustrate the measurement results on charge and discharge characteristics, cycle-life characteristics, and DSC characteristics of the batteries containing the active materials prepared according to an embodiment of the inventive concept and Comparative Example, respectively.

## DETAILED DESCRIPTION

The inventive concepts will now be described more fully hereinafter with reference to the accompanying drawings, in which exemplary embodiments of the inventive concepts are shown. The advantages and features of the inventive concepts and methods of achieving them will be apparent from the following exemplary embodiments that will be described in more detail with reference to the accompanying drawings. It should be noted, however, that the inventive concepts are not limited to the following exemplary embodiments, and may be implemented in various forms. Accordingly, the exemplary embodiments are provided only to disclose the inventive concepts and let those skilled in the art know the category of the inventive concepts. In the drawings, embodiments of the inventive concepts are not limited to the specific examples provided herein and are exaggerated for clarity.

It will be understood that when an element such as a layer, region or substrate is referred to as being "on" another element, it can be directly on the other element or intervening elements may be present. In contrast, the term "directly" means that there are no intervening elements. In the drawings, the thicknesses of layers and regions are exaggerated for clarity.

It will be understood that, although the terms "first", "second", etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed below could be termed a second element, component, region, layer or section without departing from the teachings of example embodiments. Exemplary embodiments of aspects of the present inventive concepts explained and illustrated herein include their complementary counterparts. As used herein, the term "and/or" includes any and all combinations of one or more of the associated listed items.

As used herein, the singular terms "a," "an" and "the" are intended to include the plural forms as well, unless the context clearly indicates otherwise. It will be further understood that the terms "comprises", "comprising,", "includes" and/or "including", when used herein, specify the presence of stated features, integers, steps, operations, elements, and/or components, but do not preclude the presence or addition of one or more other features, integers, steps, operations, elements, components, and/or groups thereof.

In addition, in explanation of the present invention, the descriptions to the elements and functions of related arts may be omitted if they obscure the subjects of the present invention.

The same reference numerals or the same reference designators denote the same elements throughout the specification.

In addition, the terms "to be constant" and/or "constant" as described herein are interpreted to mean to be substantially constant. In addition, the term "center part" as described herein is interpreted to mean to include a region of the inside, but it is not limited to the intermediate position and/or the central position. In addition, the term "content" as described herein is interpreted to include the atomic ratio and/or the concentration.

Fig. 1A illustrates the cross section of the second element for explaining the second element of the positive electrode active material according to a first embodiment of the inventive concept. Fig. 1 B illustrates the positive electrode active material containing the second element composed of the first element having a rod shape according to a first embodiment of the inventive concept. Fig. 2 is a graph illustrating the change in content of the first metal in the second element of the positive electrode active material according to a first embodiment of the inventive concept.

Referring to Fig. 1A, Fig. 1 B, and Fig. 2, the second element of the positive electrode active material according to the first embodiment of the inventive concept may include a center part 10 and a surface part 20. The center part 10 may include a region of the intermediate position, the central position, and/or the inside of the second element, as described in the boilerplate of the description. The surface part 20 may be the exterior surface of the second element.

The second element is illustrated as a sphere in Fig. 1A and Fig. 1 B. However, embodiments of the inventive concepts are not limited thereto. In another embodiment, the second element may have a shape with an oval cross section.

The second element may be composed of one or more first elements 30. In other words, the second element may be formed by aggregation of the first elements 30. The first element 30 may extend from the center part 10 toward the surface part 20. In other words, the first element 30 may have a rod shape radiated from the center part 10 toward the surface part 20.

The pathway for a metal ion (e.g., lithium ion) and an electrolyte may be provided between the first elements 30 having the rod shape, namely, between the first elements 30 extending in a direction D from the center part 10 to the surface part 20 of the second element. This enables the positive electrode active material according to an embodiment of the inventive concept to improve the charge and discharge efficiency of a secondary battery.

The first element 30 may be formed of a plurality of metals including a first metal, a second metal, and a third metal. Hence, the second element containing the first element 30 may include the plurality of metals including the first to third metals. For example, the first metal may be nickel (Ni), the second metal may be manganese (Mn), and the third metal may be cobalt (Co). In this case, the second element may be formed of a compound of lithium, nickel, manganese, and cobalt.

The second element may include a concentration gradient portion 110 in which the content of the first metal changes, and a concentration maintained portion 120 in which the content of the first metal is constant. The concentration maintained portion 120 may surround the concentration gradient portion 110. In other words, the concentration gradient portion 110 may correspond to the core of the second element and the concentration maintained portion 120 may correspond to the shell of the second element.

The second element including the concentration gradient portion 110 and the concentration maintained portion 120 may be prepared by controlling the contents of an aqueous solution containing the first metal, an aqueous solution containing the second metal, and an aqueous solution containing the third metal. For example, in a case in which the aqueous solution containing the first metal includes nickel sulfate, the aqueous solution containing the second metal includes manganese sulfate, and the aqueous solution containing the third metal includes cobalt sulfate, nickel-manganese-cobalt hydroxide is prepared using nickel sulfate, manganese sulfate, cobalt sulfate, and a coprecipitation reactor. The second element containing lithium, nickel, manganese, and cobalt may be prepared by mixing the nickel, manganese, cobalt hydroxide with lithium hydroxide and heating and sintering the mixture.

The content of the first metal in the concentration gradient portion 110 may gradually decrease in the direction D from the center part 10 to the surface part 20. The content of at least one of the second metal or the third metal in the concentration gradient portion 110 may gradually increase in a case in which the content of the first metal in the concentration gradient portion 110 gradually decreases. According to an embodiment of the inventive concept, the content 200 of the second metal may gradually increase in the direction D from the center part 10 to the surface part 20 in a case in which the content of the first metal gradually decreases in the direction D from the center part 10 to the surface part 20, as illustrated in (a) of Fig. 2. In this case, the content of the third metal may increase, be maintained, or decrease.

According to an embodiment of the inventive concept, the content of the first metal may continuously change between the concentration gradient portion 110 and the concentration maintained portion 120 as illustrated in (a) of Fig. 2. In this case, the minimum value of the content of the first metal in the concentration gradient portion 110 may be substantially equal to the average value of the content of the first metal in the concentration maintained portion 120. As described above, the minimum value of the content of the first metal in the concentration gradient portion 110 may be the value of the content of the first metal at a part of the outside of the concentration gradient portion 110 close to the concentration maintained portion 120 in a case in which the content of the first metal in the concentration gradient portion 110 gradually decreases in the direction D from the center part 10 to the surface part 20.

Alternatively, according to another embodiment of the inventive concept, the content of the first metal may discontinuously change between the concentration gradient portion 110 and the concentration maintained portion 120, as illustrated in (b) of Fig. 2. In this case, the minimum value of the content of the first metal in the concentration gradient portion 110 may be different from the average value of the content of the first metal in the concentration maintained portion 120. The content 210 or 220 of the first metal in the concentration maintained portion 120 may be higher or lower than the minimum value of the content of the first metal in the concentration gradient portion 110, namely, the value of the content of the first metal at a part of the outside of the concentration gradient portion 110 close to the concentration maintained portion 120.

According to an embodiment of the inventive concept, the contents of the second metal and the third metal in the concentration maintained portion 120 may be constant. Alternatively, according to another embodiment of the inventive concept, the content of at least one of the second metal or the third metal may change in the concentration maintained portion 120.

Unlike the first embodiment of the inventive concept described above, a rate of change in content of the first metal may change in the concentration gradient portion in a second embodiment of the inventive concept. Hereinafter, this will be described with reference to Figs. 3 to 5.

Fig. 3 illustrates the cross section of the second element for explaining the second element of the positive electrode active material according to a second embodiment of the inventive concept, and Figs. 4 and 5 are graphs illustrating the change in content of the first metal in the second element of the positive electrode active material according to a second embodiment of the inventive concept.

Referring to Figs. 3 to 5, a second element of a positive electrode active material according to the second embodiment of the inventive concept may be composed of one or more first elements 30 extending from the center part 10 toward the surface part 20 as described with reference to Fig. 1 B. The first element 30 may be formed of a plurality of metals including the first metal to the third metal as described with reference to Fig. 1A, Fig. 1 B, and Fig. 2.

The second element may include a first concentration gradient portion 110a in which the content of the first metal changes, a second concentration gradient portion 110b which has a rate of change in content of the first metal different from the rate of change in content of the first metal in the first concentration gradient portion 110a, and a concentration maintained portion 120 in which the content of the first metal is constant. The second concentration gradient portion 110b may surround the first concentration gradient portion 110a, and the concentration maintained portion 120 may surround the second concentration gradient portion 110b.

According to an embodiments of the inventive concept, as illustrated in (a) and (b) of Fig. 4, the content of the first metal in the first concentration gradient portion 110a and the content of the first metal in the second concentration gradient portion 110b may gradually decrease in the direction D from the center part 10 to the surface part 20. For example, in the direction D from the center part 10 to the surface part 20, the rate of decrease in content of the first metal in the first concentration gradient portion 110a may be smaller than the rate of decrease in content of the first metal in the second concentration gradient portion 110b, as illustrated in (a) of Fig. 4. Alternatively, for another example, in the direction D from the center part 10 to the surface part 20, the rate of decrease in content of the first metal in the first concentration gradient portion 110a may be greater than the rate of decrease in content of the first metal in the second concentration gradient portion 110b, as illustrated in (b) of Fig. 4.

According to another embodiment of the inventive concept, as illustrated in (a) and (b) of Fig. 5, one of the content of the first metal in the first concentration gradient portion 110a and the content of the first metal in the second concentration gradient portion 110b may increase and the other thereof may decrease in the direction D from the center part 10 to the surface part 20. For example, in the direction D from the center part 10 to the surface part 20, the content of the first metal in the first concentration gradient portion 110a may increase and the content of the first metal in the second concentration gradient portion 110b may decrease, as illustrated in (a) of Fig. 5. Alternatively, for another example, in the direction D from the center part 10 to the surface part 20, the content of the first metal in the first concentration gradient portion 110a may decrease and the content of the first metal in the second concentration gradient portion 110b may increase, as illustrated in (b) of Fig. 5.

In a case in which the contents of the first metal in the first and second concentration gradient portions 110a and 110b gradually decrease or increase in the direction D from the center part 10 to the surface part 20, the contents of the second metal in the first and second concentration gradient portions (110a and 110b) may gradually increase or decrease in the direction D from the center part 10 to the surface part 20, as described with reference to Fig. 2.

According to an embodiment of the inventive concept, as illustrated in Figs. 4 and 5, the content of the first metal may continuously change between the second concentration gradient portion 110b and the concentration maintained portion 120. In this case, the minimum value or the maximum value of the content of the first metal in the second concentration gradient portion 110b may be equal to the average value of the content of the first metal in the concentration maintained portion 120. Alternatively, according to another embodiment of the inventive concept, as described with reference to (b) of Fig. 2, the content of the first metal may discontinuously change between the second concentration gradient portion 110b and the concentration maintained portion 120. In this case, the minimum value or the maximum value of the content of the first metal in the second concentration gradient portion 110b may be different from the average value of the content of the first metal in the concentration maintained portion 120.

Unlike the embodiments of the inventive concept described above, the concentration maintained portion may include a first concentration maintained portion and a second concentration maintained portion which have different contents of the first metal from each other in according to a third embodiment of the inventive concept,. Hereinafter, this will be described with reference to Figs. 6 and 7.

Fig. 6 illustrates the cross section of the second element for explaining the second element of the positive electrode active material according to a third embodiment of the inventive concept, and Fig. 7 is a graph illustrating the change in content of the first metal in the second element of the positive electrode active material according to a third embodiment of the inventive concept.

Referring to Figs. 6 and 7, a second element of a positive electrode active material according to a third embodiment of the inventive concept may be composed of one or more first elements 30 extending from the center part 10 toward the surface part 20, as described with reference to Fig. 1 B. The first element 30 may be formed of a plurality of metals including the first metal to the third metal as described with reference to Fig. 1A, Fig. 1 B, and Fig. 2.

The second element may include the concentration gradient portion 110 in which the content of the first metal changes, a first concentration maintained portion 120a in which the content of the first metal is constant, and a second concentration maintained portion 120b in which the content of the first metal is constant but different from the content of the first metal in first concentration maintained portion 120a. The first concentration maintained portion 120a may surround the concentration gradient portion 110. The second concentration maintained portion 120b may surround the first concentration maintained portion 120a.

According to an embodiment of the inventive concept, the content of the first metal in the concentration gradient portion 110 may gradually decrease in the direction D from the center part 10 to the surface part 20. In this case, the content of the second metal in the concentration gradient portion 110 may gradually increase as described with reference to Fig. 2.

The content of the first metal may discontinuous change between the first concentration maintained portion 120a and the second concentration maintained portion 120b. According to an embodiment of the inventive concept, the content of the first metal in the first concentration maintained portion 120a may be lower than a content 310 of the first metal in the second concentration maintained portion 120b. Alternatively, unlike this, according to another embodiment of the inventive concept, the content of the first metal in the first concentration maintained portion 120a may be higher than a content 320 of the first metal in the second concentration maintained portion 120b.

According to an embodiment of the inventive concept, the content of the first metal may continuous change between the concentration gradient portion 110 and the first concentration maintained portion 120a, as illustrated in FIG. 7. In this case, the minimum value of the content of the first metal in the concentration gradient portion 110 may be equal to the average value of the content of the first metal in the first concentration maintained portion 120a. Alternatively, according to another embodiment of the inventive concept, the content of the first metal in the concentration gradient portion 110 may be discontinuous with the average value of the content of the first metal in the first concentration maintained portion 120a, as described with reference to (b) of Fig. 2. In this case, the minimum value of the content of the first metal in the concentration gradient portion 110 may be different from the average value of the content of the first metal in the first concentration maintained portion 120a.

Unlike the embodiments of the inventive concept described above, according to a fourth embodiment of the inventive concept, an outer portion of the second element may correspond to a concentration gradient portion. Hereinafter, this will be described with reference to Figs. 8 to 10.

Fig. 8 illustrates the cross section of the second element for explaining the second element of the positive electrode active material according to a fourth embodiment of the inventive concept, and Figs. 9 and 10 are graphs illustrating the change in content of the first metal in the second element of the positive electrode active material according to a fourth embodiment of the inventive concept.

Referring to Figs. 8 to 10, the second element of the positive electrode active material according to the fourth embodiment of the inventive concept may be composed of one or more first elements 30 extending from the center part 10 toward the surface part 20 as described with reference to Fig. 1 B. The first element 30 may be formed of a plurality of metals including the first metal to the third metal as described with reference to Fig. 1A, Fig. 1 B, and Fig. 2.

The second element may include a first concentration gradient portion 110a in which the content of the first metal changes, a concentration maintained portion 120 in which the content of the first metal is constant, and a second concentration gradient portion 110b in which the content of the first metal changes. The concentration maintained portion 120 may surround the first concentration gradient portion 110a, and the second concentration gradient portion 110b may surround the concentration maintained portion 120.

According to an embodiment of the inventive concept, as illustrated in (a) of Fig. 9, the content of the first metal in the first concentration gradient portion 110a and the content of the first metal in the second concentration gradient portion 110b may gradually decrease in the direction D from the center part 10 to the surface part 20. According to another embodiment of the inventive concept, as illustrated in (b) of Fig. 9, the content of the first metal in the first concentration gradient portion 110a and the content of the first metal in the second concentration gradient portion 110b may gradually increase in the direction D from the center part 10 to the surface part 20.

Alternatively, according to still another embodiment of the inventive concept, in the direction D from the center part 10 to the surface part 20, the content of the first metal in the first concentration gradient portion 110a may gradually decrease and the content of the first metal in the second concentration gradient portion 110b may gradually increase, as illustrated in (a) of Fig. 10. In this case, the content of the first metal at a part including the interface between the first concentration gradient portion 110a and the second concentration gradient portion 110b may be highest in the inside of the second element.

Alternatively, according to yet still another embodiments of the inventive concept, in the direction D from the center part 10 to the surface part 20, the content of the first metal in the first concentration gradient portion 110a may gradually increase and the content of the first metal in the second concentration gradient portion 110b may gradually decrease, as illustrated in (b) of Fig. 10. In this case, the content of the first metal at a part including the interface between the first concentration gradient portion 110a and the second concentration gradient portion 110b may be lowest in the inside of the second element.

In a case in which the contents of the first metal in the first and second concentration gradient portions 110a and 110b gradually decrease or increase in the direction D from the center part 10 to the surface part 20, the contents of the second metal in the first and second concentration gradient portions (110a and 110b) may gradually increase or decrease in the direction D from the center part 10 to the surface part 20, as described with reference to Fig. 2.

According to an embodiment of the inventive concept, as illustrated in Figs. 9 and 10, the content of the first metal may continuously change between the first concentration gradient portion 110a and the concentration maintained portion 120 and between the concentration maintained portion 120 and the second concentration gradient portion 110b. In this case, the maximum values or the minimum values of the contents of the first metal in the first and second concentration gradient portions 110a and 110b may be equal to the average value of the content of the first metal in the concentration maintained portion 120. Alternatively, according to another embodiment of the inventive concept, the content of the first metal may discontinuously change between the first concentration gradient portion 110a and the concentration maintained portion 120 and between the concentration maintained portion 120 and the second concentration gradient portion 110b.

Unlike the fourth embodiment of the inventive concept described above, according to a modified example of the fourth embodiment of the inventive concept, a second concentration maintained portion may surround the second concentration gradient portion 110b of the second element according to the fourth embodiment of the inventive concept described with reference to Fig. 8. Hereinafter, this will be described with reference to Fig. 11.

Fig. 11 illustrates the cross section of the second element for explaining the second element of the positive electrode active material according to a modified example of a fourth embodiment of the inventive concept.

Referring to Fig. 11, a second element of a positive electrode active material according to a modified example of the fourth embodiment of the inventive concept may be composed of one or more first elements 30 extending from the center part 10 toward the surface part 20 as described with reference to Fig. 1 B. The first element 30 may be formed of a plurality of metals including the first metal to the third metal as described with reference to Fig. 1A, Fig. 1 B, and Fig. 2.

The second element may include the first concentration gradient portion 110a in which the content of the first metal changes, the first concentration maintained portion 120a in which the content of the first metal is constant, the second concentration gradient portion 110b in which the content of the first metal changes, and the second concentration maintained portion 120b in which the content of the first metal is constant. The first concentration maintained portion 120a may surround the first concentration gradient portion 110a, the second concentration gradient portion 110b may surround the first concentration maintained portion 120a, and the second concentration maintained portion 120b may surround the second concentration gradient portion 110b.

The first concentration gradient portion 110a, the first concentration maintained portion 120a, and the second concentration gradient portion 110b may respectively correspond to the first concentration gradient portion 110a, the concentration maintained portion 120, and the second concentration gradient portion 110b, which are described with reference to Figs. 8 to 10.

In a case in which the contents of the first metal in the first and second concentration gradient portions 110a and 110b are the same as described with reference to Fig. 9, the average value of the content of the first metal in the second concentration maintained portion 120b may be different from the average value of the content of the first metal in the first concentration maintained portion 120a. In a case in which the contents of the first metal in the first and second concentration gradient portions 110a and 110b are the same as described with reference to Fig. 10, the average value of the content of the first metal in the second concentration maintained portion 120b may be the same as or different from the average value of the content of the first metal in the first concentration maintained portion 120a.

According to an embodiment of the inventive concept, the content of the first metal may continuously change between the second concentration gradient portion 110b and the second concentration maintained portion 120b. In this case, the maximum value or the minimum value of the content of the first metal in the second concentration gradient portion 110b may be equal to the average value of the content of the first metal in the second concentration maintained portion 120b. Alternatively, according to another embodiment of the inventive concept, the content of the first metal may discontinuously change between the second concentration gradient portion 110b and the second concentration maintained portion 120b.

Unlike the embodiments of the inventive concept described above, according to a fifth embodiment of the inventive concept, a concentration gradient portion may be disposed between concentration maintained portions. Hereinafter, this will be described with reference to Figs. 12 and 13.

Fig. 12 illustrates the cross section of the second element for explaining the second element of the positive electrode active material according to a fifth embodiment of the inventive concept. Fig. 13 is a graph illustrating the change in content of the first metal in the second element of the positive electrode active material according to a fifth embodiment of the inventive concept.

Referring to Figs. 12 and 13, a second element of a positive electrode active material according to the fifth embodiment of the inventive concept may be composed of one or more first elements 30 extending from the center part 10 toward the surface part 20 as described with reference to Fig. 1 B. The first element 30 may be formed of a plurality of metals including the first metal to the third metal as described with reference to Fig. 1A, Fig. 1 B, and Fig. 2.

The second element may include the first concentration maintained portion 120a in which the content of the first metal is constant, the concentration gradient portion 110 in which the content of the first metal changes, and the second concentration maintained portion 120b in which the content of the first metal is constant. The concentration gradient portion 110 may surround the first concentration maintained portion 120a and the second concentration maintained portion 120b may surround the concentration gradient portion 110.

According to an embodiment of the inventive concept, the content of the first metal in the concentration gradient portion 110 may gradually decrease in the direction D from the center part 10 to the surface part 20, as illustrated in (a) of FIG. 13. In this case, the content of the first metal in the first concentration maintained portion 120a may be higher than the content of the first metal in the second concentration maintained portion 120b.

Alternatively, according to another embodiment of the inventive concept, the content of the first metal in the concentration gradient portion 110 may gradually increase in the direction D from the center part 10 to the surface part 20, as illustrated in (b) of FIG. 13. In this case, the content of the first metal in the first concentration maintained portion 120a may be lower than the content of the first metal in the second concentration maintained portion 120b.

In a case in which the content of the first metal in the concentration gradient portion 110 gradually decreases or increases in the direction D from the center part 10 to the surface part 20, the content of the second metal in the concentration gradient portion 110 may gradually increase or decrease in the direction D from the center part 10 to the surface part 20, as described with reference to Fig. 2.

According to an embodiment of the inventive concept, the content of the first metal may continuously change between the first maintained concentration portion 120a and the concentration gradient portion 110 and between the concentration gradient portion 110 and the second concentration maintained portion 120b. In this case, the maximum value and the minimum value of the content of the first metal in the concentration gradient portion 110 may be equal to the average values of the contents of the first metal in the concentration maintained portions 120a and 120b (or 120b and 120a), respectively. Alternatively, according to another embodiment of the inventive concept, the content of the first metal may discontinuously change between the first maintained concentration portion 120a and the concentration gradient portion 110 and between the concentration gradient portion 110 and the second concentration maintained portion 120b.

Unlike the embodiments of the inventive concept described above, according to a sixth embodiment of the inventive concept, concentration gradient portions may surround a plurality of concentration maintained portions. Hereinafter, this will be described with reference to Figs. 14 to 16.

Fig. 14 illustrates the cross section of the second element for explaining the second element of the positive electrode active material according to a sixth embodiment of the inventive concept. Figs. 15 and 16 are graphs illustrating the change in content of the first metal in the second element of the positive electrode active material according to a sixth embodiment of the inventive concept.

Referring to Figs. 14 to 16, a second element of a positive electrode active material according to the sixth embodiment of the inventive concept may be composed of one or more first elements 30 extending from the center part 10 toward the surface part 20 as described with reference to Fig. 1 B. The first element 30 may be formed of a plurality of metals including the first metal to the third metal as described with reference to Fig. 1A, Fig. 1 B, and Fig. 2.

The second element may include the first concentration maintained portion 120a in which the content of the first metal is constant, the first concentration gradient portion 110a in which the content of the first metal changes, the second concentration maintained portion 120b in which the content of the first metal is constant, and the second concentration gradient portion 110b in which the content of the first metal changes. The first concentration gradient portion 110a may surround the first concentration maintained portion 120a, the second concentration maintained portion 120b may surround the first concentration gradient portion 110a, and the second concentration gradient portion 110b may surround the second concentration maintained portion 120b.

According to an embodiment of the inventive concept, as illustrated in (a) of Fig. 15, the contents of the first metal in the first and second concentration gradient portions 110a and 110b may gradually decrease in the direction D from the center part 10 to the surface part 20. Alternatively, according to another embodiment of the inventive concept, as illustrated in (b) of Fig. 15, the contents of the first metal in the first and second concentration gradient portions 110a and 110b may gradually increase in the direction D from the center part 10 to the surface part 20.

Alternatively, according to still another embodiments of the inventive concept, in the direction D from the center part 10 to the surface part 20, the content of the first metal in the first concentration gradient portion 110a may gradually increase and the content of the first metal in the second concentration gradient portion 110b may gradually decrease, as illustrated in (a) of Fig. 16. Alternatively, according to yet still another embodiments of the inventive concept, in the direction D from the center part 10 to the surface part 20, the content of the first metal in the first concentration gradient portion 110a may gradually decrease and the content of the first metal in the second concentration gradient portion 110b may gradually increase, as illustrated in (b) of Fig. 16.

In a case in which the contents of the first metal in the first and second concentration gradient portions 110a and 110b gradually decrease or increase in the direction D from the center part 10 to the surface part 20, the contents of the second metal in the first and second concentration gradient portions (110a and 110b) may gradually increase or decrease in the direction D from the center part 10 to the surface part 20 as described with reference to Fig. 2.

The content of the first metal may continuously or discontinuously change between the first maintained concentration portion 120a and the first concentration gradient portion 110a, between the first concentration gradient portion 110a and the second concentration maintained portion 120b, and between the second concentration maintained portion 120b and the second concentration gradient portion 110b.

Unlike the sixth embodiment of the inventive concept described above, according to a modified example of the sixth embodiment of the inventive concept, a third concentration maintained portion may surround the second concentration gradient portion 110b of the second element according to the sixth embodiment of the inventive concept described with reference to Fig. 14. Hereinafter, this will be described with reference to Fig. 17.

Fig. 17 illustrates the cross section of the second element for explaining the second element of the positive electrode active material according to a modified example of a sixth embodiment of the inventive concept.

Referring to Fig. 17, a second element of a positive electrode active material according to a modified example of the sixth embodiment of the inventive concept may be composed of one or more first elements 30 extending from the center part 10 toward the surface part 20 as described with reference to Fig. 1A. The first element 30 may be formed of a plurality of metals including the first metal to the third metal as described with reference to Fig. 1A, Fig. 1 B, and Fig. 2.

The second element may further include a third concentration maintained portion 120c which has a constant content of the first metal and surrounds the second concentration gradient portion 110b in addition to the first concentration maintained portion 120a, the first concentration gradient portion 110a, the second concentration maintained portion 120b, and the second concentration gradient portion 110b described with reference to Fig. 14.

In a case in which the contents of the first metal in the first and second concentration gradient portions 110a and 110b are the same as described with reference to Fig. 15, the average value of the content of the first metal in the third concentration maintained portion 120c may be different from the average values of the contents of the first metal in the first and second concentration maintained portions 120a and 120b. Unlike this, in a case in which the contents of the first metal in the first and second concentration gradient portions 110a and 110b are the same as described with reference to Fig. 16, the average value of the content of the first metal in the third concentration maintained portion 120c may be the same as or different from at least one of the average values of the contents of the first metal in the first and second concentration maintained portions 120a and 120b.

According to an embodiment of the inventive concept, the content of the first metal may continuously change between the second concentration gradient portion 110b and the second concentration maintained portion 120b. In this case, the minimum value or maximum value of the content of the first metal in the second concentration gradient portion 110b may be equal to the average value of the content of the first metal in the third concentration maintained portion 120c. Unlike this, according to another embodiment of the inventive concept, the content of the first metal may discontinuously change between the second concentration gradient portion 110b and the third concentration maintained portion 120c.

Unlike the embodiments of the inventive concept described above, according to a seventh embodiment of the inventive concept, a first concentration gradient portion and a second concentration gradient portion which have different rates of change in content of the first metal from each other may compose an outer portion of the second element. Hereinafter, this will be described with reference to Figs. 18 to 20.

Fig. 18 illustrates the cross section of the second element for explaining the second element of the positive electrode active material according to a seventh embodiment of the inventive concept. Figs. 19 and 20 are graphs illustrating the change in content of the first metal in the second element of the positive electrode active material according to a seventh embodiment of the inventive concept.

Referring to Figs. 18 to 20, a second element of a positive electrode active material according to the seventh embodiment of the inventive concept may be composed of one or more first elements 30 extending from the center part 10 toward the surface part 20 as described with reference to Fig. 1 B. The first element 30 may be formed of a plurality of metals including the first metal to the third metal as described with reference to Fig. 1A, Fig. 1 B, and Fig. 2.

The second element may include the concentration maintained portion 120 in which the content of the first metal is constant, the first concentration gradient portion 110a in which the content of the first metal changes, and the second concentration gradient portion 110b in which the content of the first metal changes. The first concentration gradient portion 110a may surround the concentration maintained portion 120 and the second concentration gradient portion 110b may surround the first concentration gradient portion 110a.

According to an embodiment of the inventive concept, as illustrated in (a) of Fig. 19, the content of the first metal in the first concentration gradient portion 110a and the content of the first metal in the second concentration gradient portion 110b may gradually decrease in the direction D from the center part 10 to the surface part 20. Alternatively, according to another embodiment of the inventive concept, as illustrated in (b) of Fig. 19, the content of the first metal in the first concentration gradient portion 110a and the content of the first metal in the second concentration gradient portion 110b may gradually increase in the direction D from the center part 10 to the surface part 20.

Alternatively, according to still another embodiment of the inventive concept, in the direction D from the center part 10 to the surface part 20, the content of the first metal in the first concentration gradient portion 110a may gradually increase and the content of the first metal in the second concentration gradient portion 110b may gradually decrease, as illustrated in (a) of Fig. 20. In this case, the content of the first metal at a part including the interface between the first concentration gradient portion 110a and the second concentration gradient portion 110b may be highest in the inside of the second element.

Alternatively, according to yet still another embodiment of the inventive concept, in the direction D from the center part 10 to the surface part 20, the content of the first metal in the first concentration gradient portion 110a may gradually decrease and the content of the first metal in the second concentration gradient portion 110b may gradually increase, as illustrated in (b) of Fig. 20. In this case, the content of the first metal at a part including the interface between the first concentration gradient portion 110a and the second concentration gradient portion 110b may be lowest in the inside of the second element.

In a case in which the contents of the first metal in the first and second concentration gradient portions 110a and 110b gradually decrease or increase in the direction D from the center part 10 to the surface part 20, the contents of the second metal in the first and second concentration gradient portions 110a and 110b may gradually increase or decrease in the direction D from the center part 10 to the surface part 20 as described with reference to Fig. 2.

According to an embodiment of the inventive concept, the content of the first metal may continuously change between the first concentration gradient portion 110a and the concentration maintained portion 120. In this case, the minimum value or maximum value of the content of the first metal in the first concentration gradient portion 110a may be equal to the average value of the content of the first metal in the concentration maintained portion 120. Alternatively, according to another embodiment of the inventive concept, the content of the first metal may discontinuously change between the first concentration gradient portion 110a and the concentration maintained portion 120.

Unlike the seventh embodiment according to the inventive concept, according to a modified example of the seventh embodiment of the inventive concept, a second concentration maintained portion may surround the second concentration gradient portion 110b of the second element according to the seventh embodiment of the inventive concept described with reference to Fig. 18. Hereinafter, this will be described with reference to Fig. 21.

Fig. 21 illustrates the cross section of the second element for explaining the second element of the positive electrode active material according to a modified example of a seventh embodiment of the inventive concept.

Referring to Fig. 21, a second element of a positive electrode active material according to a modified example of the seventh embodiment of the inventive concept may be composed of one or more first elements 30 extending from the center part 10 toward the surface part 20 as described with reference to Fig. 1 B. The first element 30 may be formed of a plurality of metals including the first metal to the third metal as described with reference to Fig. 1A, Fig. 1 B, and Fig. 2.

The second element may include the first concentration maintained portion 120a in which the content of the first metal is constant, the first and second concentration gradient portions 110a and 110b in which the content of the first metal changes, and the second concentration maintained portion 120b in which the content of the first metal is constant. The first concentration gradient portion 110a may surround the first concentration maintained portion 120a, the second concentration gradient portion 110b may surround the first concentration gradient portion 110a, and the second concentration maintained portion 120b may surround the second concentration gradient portion 110b.

The first concentration maintained portion 120a, the first concentration gradient portion 110a, and the second concentration gradient portion 110b may respectively correspond to the concentration maintained portion 120, the first concentration gradient portion 110a, and the second concentration gradient portion 110b which are described with reference to Figs. 18 to 20.

In a case in which the contents of the first metal in the first and second concentration gradient portions 110a and 110b are the same as described with reference to Fig. 19, the average value of the content of the first metal in the second concentration maintained portion 120b may be different from the average value of the content of the first metal in the first concentration maintained portion 120a. In a case in which the contents of the first metal in the first and second concentration gradient portions 110a and 110b are the same as described with reference to Fig. 20, the average value of the content of the first metal in the second concentration maintained portion 120b may be the same as or different from the average value of the content of the first metal in the first concentration maintained portion 120a.

According to an embodiment of the inventive concept, the content of the first metal may continuously change between the second concentration gradient portion 110b and the second concentration maintained portion 120b. In this case, the minimum value or maximum value of the content of the first metal in the second concentration gradient portion 110b may be the same as the average value of the content of the first metal in the second concentration maintained portion 120b. Unlike this, according to another embodiment of the inventive concept, the content of the first metal may discontinuously change between the second concentration gradient portion 110b and the second concentration maintained portion 120b.

As described above, the second element according to the embodiments of the inventive concept may include the concentration gradient portion in which the content of the first metal changes and the concentration maintained portion in which the content of the first metal is constant. Hence, the first element can be formed in a rod shape, and at the same time, the content of the first metal in the second element can be controlled. This makes it possible to provide the positive electrode active material in which the characteristics (e.g., capacity and/or safety) are maximized due to the first metal.

The positive electrode active material containing the second element according to the embodiments of the inventive concept described above may be included in a positive electrode of a secondary battery. Hereinafter, a secondary battery which contains the positive electrode active material according to the aforementioned embodiments of the inventive concept will be described.

Fig. 22 is a diagram for explaining a secondary battery which contains the positive electrode active material according to embodiments of the inventive concept.

Referring to Fig. 22, a secondary battery which contains the positive electrode active material according to embodiments of the inventive concept may include a positive electrode 410, a negative electrode 420 facing the positive electrode 410, a separation layer 440 disposed between the positive electrode 410 and the negative electrode 420, and an electrolyte 430 filling a space between the positive electrode 410 and the negative electrode 420.

The positive electrode 410 may contain the positive electrode active material according to the aforementioned embodiments described above.

The negative electrode 420 may contain a negative electrode active material. For example, the negative electrode active material may include at least one of a carbon material (e.g., graphite or hard carbon), a metal material (e.g., Li, Na, Mg, Al, Si, In, Ti, Pb, Ga, Ge, Sn, Bi, Sb, or an alloy thereof), silicon, silicon oxide, or a Ti-based oxide (e.g., $Li_4Ti_5O_{12}$).

The separation layer 440 may include at least one of a polyolefin-based resin, a fluorine-based resin, a polyester-based resin, a polyacrylonitrile resin, or a micro-porous layer formed of a cellulose-based material, or the separation membrane 440 may be obtained by coating at least one of these layers with an inorganic material such as ceramic.

The electrolyte 430 may be impregnated into the separation layer 440, the positive electrode 410, and/or the negative electrode 420. The electrolyte 430 may be a gel polymer-type electrolyte or a liquid electrolyte.

Hereinafter, the results of characteristic evaluation on the positive electrode active material according to the aforementioned embodiments of the inventive concept will be described.

<Examples 1-1 to 1-6>

Into a coprecipitation reactor (volume: 16 L, output of rotary motor: 80 W or more), 2.5 L of distilled water was introduced, $N_2$ gas was then supplied thereto at a rate of 2 L/min, and the distilled water was stirred at 400 rpm while maintaining the temperature of the reactor at 45°C.

A first aqueous metal solution and a second aqueous metal solution were prepared by mixing nickel sulfate, cobalt sulfate, and manganese sulfate so as to have a composition of $Ni_{X1}Co_{y1}Mn_{z1}OH_2$ (X1, Y1, Z1) and a composition of $Ni_{X2}Co_{y2}Mn_{z2}OH_2$ (x2, y2, z2), respectively, the first aqueous metal solution and the second aqueous metal solution were continuously introduced into the reactor at 0.7 L/hr while mixing them and changing the mixing ratio thereof, and an ammonia solution having a concentration of 25 mol was also continuously introduced into the reactor at 0.07 L/hr, thereby forming the core portion and the concentration gradient portion which had a concentration gradient. In addition, a sodium hydroxide solution having a concentration of 5 mol was supplied into the reactor in order to adjust the pH so that the pH was maintained at 11.5. The speed of impeller was controlled at 400 rpm.

Thereafter, only the second aqueous metal solution was supplied into the reactor for a certain period of time to form the shell portion having constant concentrations of nickel, manganese, and cobalt on the outside of the core portion and the concentration gradient portion which had a concentration gradient, thereby producing a composite metal hydroxide.

The concentrations of the aqueous metal solutions in Examples 1-1 to 1-6 are as presented in the following Table 1.

[Table 1]

| | First aqueous metal solution | | | Second aqueous metal solution | | |
|---|---|---|---|---|---|---|
| | Ni | Co | Mn | Ni | Co | Mn |
| Example 1-1 | 75 | 0 | 25 | 55 | 20 | 25 |
| Example 1-2 | 70 | 0 | 30 | 50 | 20 | 30 |
| Example 1-3 | 78 | 0 | 22 | 54 | 19 | 27 |
| Example 1-4 | 90 | 0 | 10 | 54 | 15 | 31 |
| Example 1-5 | 90 | 5 | 5 | 65 | 10 | 25 |
| Example 1-6 | 96 | 0 | 1 | 54 | 15 | 31 |

The composite metal hydroxide thus prepared was filtered, washed with water, and then dried for 12 hours in a hot air dryer at 110°C. The composite metal hydroxide and lithium hydroxide (LiOH) were mixed at a molar ratio of 1 : 1, the mixture was subjected to the preliminary firing by heating at a temperature rise rate of 2°C/min and then maintaining at 450°C for 10 hours and then fired at from 700 to 900°C for 10 hours, thereby obtaining a positive electrode active material powder.

<Comparative Examples 1-1 to 1-3>

In Comparative Example 1-1, the positive electrode active material particles containing only the core portion and the concentration gradient portion which had a concentration gradient were prepared in the same manner as in Example 1-1 except that the shell portion having constant concentrations of nickel, manganese, and cobalt was not formed.

In Comparative Example 1-2, composite oxide particles having constant concentrations of nickel, manganese, and cobalt was prepared using an aqueous metal solution having a composition of $Ni_{55}Co_{20}Mn_{25}OH_2$ which corresponds to the composition of the shell portion in Example 1-1. In Comparative Example 1-3, composite oxide particles having constant concentrations of nickel, manganese, and cobalt was prepared using an aqueous metal solution having a composition of $Ni_{65}Co_{10}Mn_{25}OH_2$ which corresponds to the composition of the shell portion in Example 1-5.

<Experimental Example> Taking of EDX image

The concentrations of Ni, Mn, and Co depending on the distance from the center in the particles prepared in Example 1-1 and Comparative Example 1-1 were measured by EDX, and the results are illustrated in Fig. 23. From Fig. 23, it can be seen that the magnitude of the concentration gradient in the core portion and the concentration gradient portion is constant as the core portion and the concentration gradient portion have a concentration gradient, a shell portion that is continuous with respect to the core portion and the concentration gradient portion and has constant concentrations of nickel, manganese, and cobalt is formed, and the functional relation of the concentration to the distance is linear in the core portion and the concentration gradient portion in the case of the particles according to Example of the inventive concept.

<Experimental Example> Taking of SEM image

The images of the particles prepared in Example 1-5 and Comparative Example 1-3 were taken using a SEM, and the results are illustrated in Fig. 24.

<Experimental Example> Measurement of residual lithium

Into 100 ml of distilled water, 10 g of the active material particles prepared in Example 1-1 and Comparative Example 1-1 were added, respectively, stirred for 10 minutes, then filtered, and subjected to the titration with 10% hydrochloric acid, thereby determining the amount of residual lithium. The amounts of LiOH and $Li_2CO_3$ measured are as presented in the following Table 2.

[Table 2]

| | Residual LiOH | $Li_2CO_3$ | Sum |
|---|---|---|---|
| Example 1-1 | 4728 | 2101 | 6829 |
| Comparative Example 1-1 | 5728 | 2733 | 8461 |

<Experimental Example> Measurement of charge and discharge characteristics, cycle-life characteristics, and DSC

The charge and discharge characteristics, cycle-life characteristics, and DSC characteristics of the batteries containing the active materials prepared in Examples 1-1 to 1-6 and Comparative Examples 1-1 to 1-3 were measured, and the results are presented in the following Table 3 and illustrated in Figs. 25 and 26.

[Table 3]

| | Discharge capacity | Cycle-life characteristics ($100^{th}$) | DSC |
|---|---|---|---|
| Example 1-1 | 189 mAh/g | 95.2% | 288°C |
| Example 1-2 | 184 mAh/g | 96.2% | 298°C |
| Example 1-3 | 190 mAh/g | 96.0% | 289°C |
| Example 1-4 | 195 mAh/g | 96.1% | 288°C |
| Example 1-5 | 203 mAh/g | 94.3% | 266°C |
| Example 1-6 | 196 mAh/g | 95.2% | 286°C |
| Comparative Example 1-1 | 191 mAh/g | 96.7% | 273°C |
| Comparative Example 1-2 | 176 mAh/g | 89.2% | 267°C |
| Comparative Example 1-3 | 186 mAh/g | 90.4% | 272°C |

<Examples 1-7 to 1-10>

Into a coprecipitation reactor (volume: 16 L, output of rotary motor: 80 W or more), 2.5 L of distilled water was introduced, $N_2$ gas was then supplied thereto at a rate of 2 L/min, and the distilled water was stirred at 400 rpm while maintaining the temperature of the reactor at 45°C.

A first aqueous metal solution and a second aqueous metal solution were prepared by mixing nickel sulfate, cobalt sulfate, and manganese sulfate so as to have a composition of $Ni_{x1}Co_{y1}Mn_{z1}OH_2$ (X1, Y1, Z1) and a composition of $Ni_{x2}Co_{y2}Mn_{z2}OH_2$ (x2, y2, z2), respectively, the first aqueous metal solution and the second aqueous metal solution were continuously introduced into the reactor at 0.7 L/hr while mixing them and changing the mixing ratio thereof, and an ammonia solution having a concentration of 25 mol was also continuously introduced into the reactor at 0.07 L/hr, thereby forming the core portion and the concentration gradient portion which had a concentration gradient. In addition, a sodium hydroxide solution having a concentration of 5 mol was supplied into the reactor in order to adjust the pH so that the pH was maintained at 11.5. The speed of impeller was controlled at 400 rpm.

Thereafter, a third aqueous metal solution prepared by mixing nickel sulfate, cobalt sulfate, and manganese sulfate so as to have a constant composition of $Ni_{X3}Co_{y3}Mn_{z3}OH_2$ was supplied into the reactor to form the shell portion in which the concentrations of nickel, manganese, and cobalt were constant but different from those at the outermost part of the core portion and the concentration gradient portion, thereby producing a composite metal hydroxide.

The concentrations of the aqueous metal solutions in Examples 1-7 to 1-10 are as presented in the following Table 4.

[Table 4]

| | First aqueous metal solution | | | Second aqueous metal solution | | | Third aqueous metal solution | | | Thickness of shell portion |
|---|---|---|---|---|---|---|---|---|---|---|
| | Ni | Co | Mn | Ni | Co | Mn | Ni | Co | Mn | |
| Example 1-7 | 85 | 6 | 9 | 62 | 13 | 25 | 48 | 20 | 32 | 0.5 μm |
| Example 1-8 | 85 | 6 | 9 | 62 | 13 | 25 | 48 | 20 | 32 | 1.0 μm |
| Example 1-9 | 90 | 5 | 5 | 65 | 10 | 25 | 40 | 30 | 30 | 0.3 μm |
| Example 1-10 | 90 | 5 | 5 | 65 | 10 | 25 | 50 | 20 | 30 | 0.3 μm |

The composite metal hydroxide thus prepared was filtered, washed with water, and then dried for 12 hours in a hot air dryer at 110°C. The composite metal hydroxide and lithium hydroxide (LiOH) were mixed at a molar ratio of 1 : 1, the mixture was subjected to the preliminary firing by heating at a temperature rise rate of 2°C/min and then maintaining at 450°C for 10 hours and then fired at from 700 to 900°C for 10 hours, thereby obtaining a positive electrode active material powder.

<Comparative Examples 1-4 and 1-5>

In Comparative Example 1-4, positive electrode active material particles were prepared in the same manner as in Example 1-7 except that the shell portion was not formed.

In Comparative Example 1-5, positive electrode active material particles were prepared in the same manner as in Example 1-9 except that the shell portion was not formed.

<Experimental Example> Taking of EDX image

The concentrations of Ni, Mn, and Co depending on the distance from the center in the particles prepared in Example 1-7 and Comparative Example 1-4 were measured by EDX, and the results are illustrated in Fig. 27.

From Fig. 27, it can be seen that the magnitude of the concentration gradient in the core portion and the concentration gradient portion is constant as a shell portion having constant concentrations of nickel, manganese, and cobalt that is formed on the outside of the core portion having a concentration gradient and the functional relation of the concentration to the distance is linear in the core portion and the concentration gradient portion in the case of the particles according to Example of the inventive concept.

<Experimental Example> Measurement of charge and discharge characteristics, cycle-life characteristics, and DSC

The charge and discharge characteristics, cycle-life characteristics, and DSC characteristics of the batteries containing the active materials prepared in Examples 1-7 to 1-10 and Comparative Examples 1-4 and 1-5 were measured, and the results are presented in the following Table 5.

[Table 5]

| | Discharge capacity | Cycle-life characteristics ($100^{th}$) | DSC |
|---|---|---|---|
| Example 1-7 | 196 mAh/g | 96.3% | 289°C |
| Example 1-8 | 192 mAh/g | 97.7% | 297°C |
| Example 1-9 | 196 mAh/g | 96.3% | 289°C |
| Example 1-10 | 192 mAh/g | 97.7% | 297°C |
| Comparative Example 1-4 | 199 mAh/g | 94.3% | 271°C |
| Comparative Example 1-5 | 204 mAh/g | 93.2% | 263°C |

The charge and discharge characteristics of the batteries containing the active materials prepared in Example 1-7 and Comparative Example 1-4 were measured, and the results are illustrated in Fig. 28.

<Examples 1-11 to 1-20>

In order to produce particles having different magnitudes of concentration gradient in the core portion and the concentration gradient portion, first, a first aqueous metal solution and a second aqueous metal solution were prepared by mixing nickel sulfate, cobalt sulfate, and manganese sulfate so as to have a composition of $Ni_{x1}Co_{y1}Mn_{z1}OH_2$ (X1, Y1, Z1) and a composition of $Ni_{x2}Co_{y2}Mn_{z2}OH_2$ (x2, y2, z2), respectively, the first aqueous metal solution and the second aqueous metal solution were continuously introduced into the reactor at 0.7 L/hr while mixing them and changing the mixing ratio thereof, and an ammonia solution having a concentration of 25 mol was also continuously introduced into the reactor at 0.07 L/hr, thereby forming the core portion having a first magnitude of concentration gradient.

Thereafter, a third aqueous metal solution was prepared by mixing nickel sulfate, cobalt sulfate, and manganese sulfate so as to have a constant composition of $Ni_{X3}Co_{y3}Mn_{z3}OH_2$, the third aqueous metal solution and the second aqueous metal solution were continuously introduced into the reactor at 0.7 L/hr while mixing them and changing the mixing ratio thereof, and an ammonia solution having a concentration of 25 mol was also continuously introduced into the reactor at 0.07 L/hr, thereby forming the concentration gradient portion having a second magnitude of concentration gradient.

Thereafter, only the third aqueous metal solution prepared by mixing nickel sulfate, cobalt sulfate, and manganese sulfate so as to have a constant composition of $Ni_{X3}Co_{y3}Mn_{z3}OH_2$ was supplied into the reactor to form the shell portion in which the concentrations of nickel, manganese, and cobalt were constant and the same as those at the outermost part of the concentration gradient portion having a second magnitude of concentration gradient. The concentrations of the aqueous metal solutions thus prepared in Examples 1-11 to 1-20 are as presented in the following Table 6.

[Table 6]

| | First aqueous metal solution | | | Second aqueous metal solution | | | Third aqueous metal solution | | | |
|---|---|---|---|---|---|---|---|---|---|---|
| | Ni | Co | Mn | Ni | Co | Mn | Ni | Co | Mn | Thickness of shell portion |
| Example 1-11 | 85 | 6 | 9 | 62 | 13 | 25 | 48 | 20 | 32 | 0.3 μm |
| Example 1-12 | 85 | 6 | 9 | 62 | 13 | 25 | 48 | 20 | 32 | 0.5 μm |
| Example 1-13 | 90 | 5 | 5 | 65 | 10 | 25 | 40 | 30 | 30 | 0.5 μm |
| Example 1-14 | 90 | 5 | 5 | 65 | 10 | 25 | 50 | 20 | 30 | 0.2 μm |
| Example 1-15 | 85 | 1 | 14 | 76 | 9 | 15 | 64 | 11 | 25 | 0.3 μm |
| Example 1-16 | 90 | 1 | 9 | 80 | 8 | 12 | 65 | 10 | 25 | 0.5 μm |
| Example 1-17 | 95 | 1 | 4 | 84 | 7 | 9 | 66 | 9 | 25 | 0.4 μm |
| Example 1-18 | 95 | 2 | 3 | 77 | 7 | 16 | 63 | 11 | 26 | 0.5 μm |
| Example 1-19 | 98 | 1 | 1 | 95 | 2 | 3 | 65 | 10 | 25 | 0.3 μm |
| Example 1-20 | 95 | 2 | 3 | 85 | 5 | 10 | 55 | 18 | 27 | 0.5 μm |

The composite metal hydroxide thus prepared was filtered, washed with water, and then dried for 12 hours in a hot air dryer at 110°C. The composite metal hydroxide and lithium hydroxide (LiOH) were mixed at a molar ratio of 1 : 1, the mixture was subjected to the preliminary firing by heating at a temperature rise rate of 2°C/min and then maintaining at 450°C for 10 hours and then fired at from 700 to 900°C for 10 hours, thereby obtaining a positive electrode active material powder.

<Comparative Examples 1-6 and 1-7>

In Comparative Example 1-6, composite oxide particles having constant concentrations of nickel, manganese, and cobalt in the entire particle were prepared using an aqueous metal solution having a composition of $Ni_{80}Co_7Mn_{13}OH_2$ which corresponds to the average composition of Example 1-11.

In Comparative Example 1-7, particles of a composite oxide which was represented by $LiNi_{0.8}Co_{0.15}Al_{0.05}O_2$ and known to have a capacity of 200 mAh/g were used.

<Experimental Example> Taking of EDX image

The concentrations of Ni, Mn, and Co depending on the distance from the center in the particles prepared in Example 1-11 were measured by EDX, and the results are illustrated in Fig. 29. From Fig. 29, it can be seen that the concentration is linear with respect to the distance from the center, the magnitudes of the concentration gradient in the core portion and the concentration gradient portion are different from each other, and a shell portion having constant concentrations of nickel, manganese, and cobalt is formed on the outside of the concentration gradient portion in the case of the particles according to Example of the inventive concept.

The concentrations of Ni, Mn, and Co depending on the distance from the center in the particles prepared in Example 1-13 were measured by EDX, and the results are illustrated in Fig. 30. From Fig. 30, it can be seen that the concentration to the distance from the center has two straight lines having different inclinations, the magnitudes of the concentration gradient in the core portion and the concentration gradient portion are different from each other, and a shell portion having constant concentrations of nickel, manganese, and cobalt is formed on the outside of the core portion and the concentration gradient portion in the case of the particles according to Example of the inventive concept.

<Experimental Example> Measurement of charge and discharge characteristics, cycle-life characteristics, and DSC

The charge and discharge characteristics, cycle-life characteristics, and DSC characteristics of the batteries containing the active materials prepared in Examples 1-11 to 1-20 and Comparative Examples 1-6 and 1-7 were measured, and the results are presented in the following Table 7.

[Table 7]

| | Discharge capacity | Cycle-life characteristics ($100^{th}$) | DSC |
|---|---|---|---|
| Example 1-11 | 221 mAh/g | 94.9% | 250°C |
| Example 1-12 | 211 mAh/g | 95.3% | 257°C |
| Example 1-13 | 201 mAh/g | 96.6% | 280°C |
| Example 1-14 | 205 mAh/g | 96.1% | 277°C |
| Example 1-15 | 204 mAh/g | 94.3% | 274°C |
| Example 1-16 | 212 mAh/g | 94.9% | 272°C |
| Example 1-17 | 216 mAh/g | 94.2% | 268°C |
| Example 1-18 | 207 mAh/g | 94.8% | 271°C |
| Example 1-19 | 220 mAh/g | 92.3% | 256°C |
| Example 1-20 | 209 mAh/g | 95.5% | 272°C |
| Comparative Example 1-6 | 203 mAh/g | 79.2% | 233°C |
| Comparative Example 1-7 | 198 mAh/g | 90.8% | 221°C |

The charge and discharge characteristics, cycle-life characteristics, and DSC characteristics of the particles prepared in Example 1-11 and Comparative Example 1-6 were measured, and the results are illustrated in Figs. 31 to 33, respectively.

From Figs. 31 to 33, it has been confirmed that the average composition of the particles in Example 1-11 is the same as the composition of the particles in Comparative Example 1-6, but the charge and discharge characteristics, cycle-life characteristics, and thermal stability are greatly improved in Example 1-11 since the particles in Example 1-11 includes the core portion, and the concentration gradient portion, and the shell portion which has constant concentrations of nickel, manganese, and cobalt and is formed on the outside of the core portion.

The charge and discharge characteristics, cycle-life characteristics, and DSC characteristics of the particles prepared in Example 1-13 and Comparative Example 1-7 were measured, and the results are illustrated in Figs. 34 to 36, respectively. From Figs. 34 to 36, it has been confirmed that the average composition of the particles in Example 1-13 is the same as the composition of the particles in Comparative Example 1-7, but the charge and discharge characteristics, cycle-life characteristics, and DSC characteristics are greatly improved in Example 1-13 as compared to those in Comparative Example 1-7 since the particles in Example 1-13 includes the core portion, and the concentration gradient portion, and the shell portion.

<Examples 1-21 to 1-28>

In order to produce particles having different magnitudes of concentration gradient in the core portion and the concentration gradient portion, first, a first aqueous metal solution and a second aqueous metal solution were prepared by mixing nickel sulfate, cobalt sulfate, and manganese sulfate so as to have a composition of $Ni_{x1}Co_{y1}Mn_{z1}OH_2$ (X1, Y1, Z1) and a composition of $Ni_{x2}Co_{y2}Mn_{z2}OH_2$ (x2, y2, z2), respectively, the first aqueous metal solution and the second aqueous metal solution were continuously introduced into the reactor at 0.7 L/hr while mixing them and changing the mixing ratio thereof, and an ammonia solution having a concentration of 25 mol was also continuously introduced into the reactor at 0.07 L/hr, thereby forming the core portion having a first concentration gradient.

Thereafter, a third aqueous metal solution prepared by mixing nickel sulfate, cobalt sulfate, and manganese sulfate so as to have a constant composition of $Ni_{x3}Co_{y3}Mn_{z3}OH_2$ and the second aqueous metal solution were continuously introduced into the reactor at 0.7 L/hr while mixing them and changing the mixing ratio thereof, and an ammonia solution having a concentration of 25 mol was also continuously introduced into the reactor at 0.07 L/hr, thereby forming the concentration gradient portion having a second concentration gradient.

Thereafter, only a fourth aqueous metal solution prepared by mixing nickel sulfate, cobalt sulfate, and manganese sulfate so as to have a constant composition of $Ni_{X4}Co_{y4}Mn_{z4}OH_2$ was supplied into the reactor to form the shell portion having constant concentrations of nickel, manganese, and cobalt.

The concentrations of the aqueous metal solutions thus prepared in Examples 1-21 to 1-28 are as presented in the following Table 8.

[Table 8]

| | First aqueous metal solution | | | Second aqueous metal solution | | | Third aqueous metal solution | | | Fourth aqueous metal solution | | | |
|---|---|---|---|---|---|---|---|---|---|---|---|---|---|
| | Ni | Co | Mn | Ni | Co | Mn | Ni | Co | Mn | Ni | Co | Mn | Thickness of shell portion |
| Example 1-21 | 95 | 2 | 3 | 90 | 4 | 6 | 67 | 9 | 24 | 60 | 15 | 25 | 0.3 μm |
| Example 1-22 | 95 | 2 | 3 | 85 | 5 | 10 | 67 | 11 | 22 | 60 | 13 | 27 | 0.4 μm |
| Example 1-23 | 96 | 2 | 2 | 91 | 4 | 5 | 70 | 10 | 20 | 63 | 12 | 25 | 0.5 μm |
| Example 1-24 | 95 | 2 | 3 | 90 | 4 | 6 | 67 | 9 | 24 | 56 | 17 | 27 | 0.2 μm |
| Example 1-25 | 96 | 2 | 2 | 85 | 5 | 10 | 67 | 11 | 22 | 55 | 15 | 30 | 0.3 μm |
| Example 1-26 | 95 | 2 | 3 | 90 | 4 | 6 | 75 | 8 | 17 | 57 | 16 | 27 | 0.5 μm |
| Example 1-27 | 96 | 2 | 2 | 91 | 3 | 6 | 80 | 7 | 13 | 57 | 16 | 27 | 0.4 μm |
| Example 1-28 | 85 | 5 | 10 | 80 | 7 | 13 | 55 | 15 | 30 | 45 | 20 | 35 | 0.5 μm |

The composite metal hydroxide thus prepared was filtered, washed with water, and then dried for 12 hours in a hot air dryer at 110°C. The composite metal hydroxide and lithium hydroxide (LiOH) were mixed at a molar ratio of 1 : 1, the mixture was subjected to the preliminary firing by heating at a temperature rise rate of 2°C/min and then maintaining at 450°C for 10 hours and then fired at from 700 to 900°C for 10 hours, thereby obtaining a positive electrode active material powder.

<Comparative Example 1-8>

In Comparative Example 1-8, composite oxide particles having constant concentrations of nickel, manganese, and cobalt in the entire particle were prepared using an aqueous metal solution having a composition of $Ni_{76}Co_8Mn_{16}OH_2$ which corresponds to the average composition of Example 1-24.

<Experimental Example> Taking of EDX image

The image of the cross section of the particles prepared in Example 21 was taken using a TEM, and the concentrations of Ni, Mn, and Co depending on the distance from the center in the particles were measured by EDX, and the results are illustrated in Fig. 37.

From Fig. 37, it can be seen that the concentration is linear with respect to the distance from the center, the magnitudes of the concentration gradients of nickel, manganese, and cobalt in the core portion are constant, and the magnitudes of the concentration gradients are different in the concentration gradient portion, and the magnitudes of the concentration gradient in the core portion and the concentration gradient portion are two different from each other in the case of the particles according to Example of the inventive concept.

<Experimental Example> Measurement of charge and discharge characteristics, cycle-life characteristics, and DSC

The charge and discharge characteristics, cycle-life characteristics, and DSC characteristics of the batteries containing the active materials prepared in Examples 1-21 to 1-28 and Comparative Examples 1-6 and 1-8 were measured, and the results are presented in the following Table 9.

[Table 9]

| | Discharge capacity | Cycle-life characteristics ($100^{th}$) | DSC |
|---|---|---|---|
| Example 1-21 | 220 mAh/g | 95.9% | 260°C |
| Example 1-22 | 215 mAh/g | 95.2% | 262°C |
| Example 1-23 | 223 mAh/g | 93.7% | 257°C |
| Example 1-24 | 212 mAh/g | 96.2% | 270°C |
| Example 1-25 | 211 mAh/g | 96.0% | 271°C |
| Example 1-26 | 221 mAh/g | 93.9% | 263°C |
| Example 1-27 | 225 mAh/g | 94.2% | 253°C |
| Example 1-28 | 195 mAh/g | 97.8% | 291°C |
| Comparative Example 1-6 | 203 mAh/g | 79.2% | 237°C |
| Comparative Example 1-8 | 195 mAh/g | 82.5% | 233°C |

The charge and discharge characteristics, cycle-life characteristics, and DSC characteristics of the particles prepared in Example 1-24 and Comparative Example 1-8 were measured, and the results are illustrated in Figs. 38 to 40, respectively.

From Figs. 38 to 40, it has been confirmed that the average composition of the particles in Example 1-24 is the same as the composition of the particles in Comparative Example 1-8, but the charge and discharge characteristics, cycle-life characteristics, and DSC characteristics are greatly improved in Example 1-24 as compared to Comparative Example since the particles in Example 1-24 includes the core portion and the concentration gradient portion in which the concentrations of nickel, manganese, and cobalt have gradients and the shell portion in which the concentrations of nickel, manganese, and cobalt are constant.

<Experimental Example> Measurement of residual lithium

The amounts of residual LiOH and $Li_2CO_3$ in the particles prepared in Example 1-21 and Comparative Example 1-6 were measured, and the results are as presented in the following Table 10.

[Table 10]

| | Residual LiOH | $Li_2CO_3$ | Sum |
|---|---|---|---|
| Example 1-21 | 5927 | 3950 | 9877 |
| Comparative Example 1-6 | 9469 | 11466 | 20935 |

<Experimental Example> Measurement of tap density and BET surface area

The tap density and surface area by the BET method of the particles prepared in Example 1-21 and Comparative Example 1-6 are as presented in the following Table 11 and illustrated in Fig. 41, respectively.

[Table 11]

| | Tap density |
|---|---|
| Example 1-21 | 2.54 |
| Comparative Example 1-6 | 2.37 |

It can be seen that the tap density is greatly improved in the active material particles prepared in Example of the inventive concept as compared to Comparative Example.

<Examples 2-1 to 2-4> Case having constant concentration in core portion

Into a coprecipitation reactor (volume: 16 L, output of rotary motor: 80 W or more), 2.5 L of distilled water was introduced, $N_2$ gas was then supplied thereto at a rate of 2 L/min, and the distilled water was stirred at 400 rpm while maintaining the temperature of the reactor at 45°C.

A first aqueous metal solution was prepared by mixing nickel sulfate, cobalt sulfate, and manganese sulfate so as to have concentrations of $Ni_{X1}Co_{y1}Mn_{z1}OH_2$ (X1, Y1, Z1), the first aqueous metal solution was continuously introduced into the reactor at 0.7 L/hr, and an ammonia solution having a concentration of 25 mol was also continuously introduced into the reactor at 0.07 L/hr, thereby forming the inner core portion having constant concentrations of nickel, manganese, and cobalt.

A second aqueous metal solution was prepared so as to have a composition of $Ni_{x2}Co_{y2}Mn_{z2}OH_2$ (x2, y2, z2), the first aqueous metal solution and the second aqueous metal solution were continuously introduced into the reactor at 0.7 L/hr while mixing them and changing the mixing ratio thereof, and an ammonia solution having a concentration of 25 mol was also continuously introduced into the reactor at 0.07 L/hr, thereby forming the first concentration gradient portion having a concentration gradient. In addition, a sodium hydroxide solution having a concentration of 5 mol was supplied into the reactor in order to adjust the pH so that the pH was maintained at 11.5. The speed of impeller was controlled at 400 rpm.

Thereafter, a third aqueous metal solution was prepared by mixing nickel sulfate, cobalt sulfate, and manganese sulfate so as to have a constant composition of $Ni_{X3}Co_{y3}Mn_{z3}OH_2$, and the third aqueous metal solution and the second aqueous metal solution were continuously introduced into the reactor at 0.7 L/hr while mixing them and changing the mixing ratio thereof, and an ammonia solution having a concentration of 25 mol was also continuously introduced into the reactor at 0.07 L/hr, thereby forming the second concentration gradient portion having a concentration gradient. In addition, a sodium hydroxide solution having a concentration of 5 mol was supplied into the reactor in order to adjust the pH so that the pH was maintained at 11.5. The speed of impeller was controlled at 400 rpm.

Thereafter, only the third aqueous metal solution was supplied into the reactor to form the shell portion.

The concentrations of the aqueous metal solutions in Examples 2-1 to 2-4 are as presented in the following Table 12.

[Table 12]

| | First aqueous metal solution | | | Second aqueous metal solution | | | Third aqueous metal solution | | | |
|---|---|---|---|---|---|---|---|---|---|---|
| | Ni | Co | Mn | Ni | Co | Mn | Ni | Co | Mn | Thickness of shell portion |
| Example 2-1 | 95 | 2 | 3 | 85 | 6 | 9 | 67 | 9 | 24 | 0.5 μm |
| Example 2-2 | 98 | 0 | 2 | 88 | 4 | 8 | 67 | 9 | 24 | 0.3 μm |
| Example 2-3 | 85 | 5 | 10 | 78 | 6 | 16 | 60 | 15 | 25 | 0.5 μm |
| Example 2-4 | 97 | 0 | 3 | 82 | 5 | 13 | 55 | 15 | 30 | 0.3 μm |

The composite metal hydroxide thus prepared was filtered, washed with water, and then dried for 12 hours in a hot air dryer at 110°C. The composite metal hydroxide and lithium hydroxide (LiOH) were mixed at a molar ratio of 1 : 1, the mixture was subjected to the preliminary firing by heating at a temperature rise rate of 2°C/min and then maintaining at 450°C for 10 hours and then fired at from 700 to 900°C for 10 hours, thereby obtaining a positive electrode active material powder.

<Comparative Examples 2-1 and 2-2>

In Comparative Example 2-1, positive electrode active material particles having constant concentrations of nickel, manganese, and cobalt in the entire particle were prepared using an aqueous metal solution having a composition of $Ni_{82}Co_5Mn_{13}OH_2$ which corresponds to the average composition of the entire particle in Example 2-2.

In Comparative Example 2-2, positive electrode active material particles having constant concentrations of nickel, manganese, and cobalt in the entire particle were prepared using an aqueous metal solution having a composition of $Ni_{76}Co_7Mn_{17}OH_2$ which corresponds to the average composition of the entire particle in Example 2-4.

<Experimental Example> Taking of EDX image

The concentrations of Ni, Mn, and Co depending on the distance from the center in the particles prepared in Example 2-2 were measured by EDX, and the results are illustrated in Fig. 42.

From Fig. 42, it can be seen that the first concentration gradient portion and the second concentration gradient portion are disposed between the inner core portion and the outermost shell portion which have constant concentrations of nickel, manganese, and cobalt in the case of the particles according to Example of the inventive concept.

<Experimental Example> Measurement of charge and discharge characteristics, cycle-life characteristics, and DSC

The charge and discharge characteristics, cycle-life characteristics, and DSC characteristics of the batteries containing the active materials prepared in Examples 2-1 to 2-4 and Comparative Examples 2-1 and 2-2 were measured, and the results are presented in the following Table 13.

[Table 13]

| | Discharge capacity | Cycle-life characteristics (100$^{th}$) | DSC |
|---|---|---|---|
| Example 2-1 | 217.6 mAh/g | 93.6% | 263.5°C |
| Example 2-2 | 220.1 mAh/g | 93.1% | 259.6°C |
| Example 2-3 | 205.3 mAh/g | 94.8% | 272.7°C |
| Example 2-4 | 211.8 mAh/g | 94.3% | 268.2°C |
| Comparative Example 2-1 | 209.3 mAh/g | 81.7% | 243.6°C |
| Comparative Example 2-2 | 198.7 mAh/g | 83.2% | 247.3°C |

The charge and discharge characteristics, cycle-life characteristics, and DSC characteristics of the particles prepared in Example 2-2 and Comparative Example 2-1 were measured, and the results are illustrated in Figs. 43 to 45, respectively.

From Figs. 43 to 45, it has been confirmed that the average composition of the particles in Example 2-2 is the same as the composition of the particles in Comparative Example 2-1, but the charge and discharge characteristics, cycle-life characteristics, and thermal stability are greatly improved in Example 2-2 as compared to Comparative Example 2-1 since the particles in Example 2-2 includes the inner core portion, and the first concentration gradient portion, the second concentration gradient portion, and the shell portion continuous to the second concentration gradient portion although the average concentrations of nickel, manganese, and cobalt thereof are the same as those of the particles in Comparative Example 2-1.

<Examples 2-5 to 2-7>

Into a coprecipitation reactor (volume: 16 L, output of rotary motor: 80 W or more), 2.5 L of distilled water was introduced, $N_2$ gas was then supplied thereto at a rate of 2 L/min, and the distilled water was stirred at 400 rpm while maintaining the temperature of the reactor at 45°C.

A first aqueous metal solution was prepared by mixing nickel sulfate, cobalt sulfate, and manganese sulfate so as to have concentrations of $Ni_{X1}Co_{y1}Mn_{z1}OH_2$ (X1, Y1, Z1), the first aqueous metal solution was continuously introduced into the reactor at 0.7 L/hr, and an ammonia solution having a concentration of 25 mol was also continuously introduced into the reactor at 0.07 L/hr, thereby forming the inner core portion having constant concentrations of nickel, manganese, and cobalt.

A second aqueous metal solution was prepared so as to have a composition of $Ni_{x2}Co_{y2}Mn_{z2}OH_2$ (x2, y2, z2), the first aqueous metal solution and the second aqueous metal solution were continuously introduced into the reactor at 0.7 L/hr while mixing them and changing the mixing ratio thereof, and an ammonia solution having a concentration of 25 mol was also continuously introduced into the reactor at 0.07 L/hr, thereby forming the first concentration gradient portion having a concentration gradient. In addition, a sodium hydroxide solution having a concentration of 5 mol was supplied into the reactor in order to adjust the pH so that the pH was maintained at 11.5. The speed of impeller was controlled at 400 rpm.

Thereafter, a third aqueous metal solution was prepared by mixing nickel sulfate, cobalt sulfate, and manganese sulfate so as to have a constant composition of $Ni_{x3}Co_{y3}Mn_{z3}OH_2$ and only the third aqueous metal solution was supplied into the reactor to form the shell portion. In addition, a sodium hydroxide solution having a concentration of 5 mol was supplied into the reactor in order to adjust the pH so that the pH was maintained at 11.5. The speed of impeller was controlled at 400 rpm.

The concentrations of the aqueous metal solutions in Examples 2-5 to 2-7 are as presented in the following Table 14.

[Table 14]

| | First aqueous metal solution | | | Second aqueous metal solution | | | Third aqueous metal solution | | | |
|---|---|---|---|---|---|---|---|---|---|---|
| | Ni | Co | Mn | Ni | Co | Mn | Ni | Co | Mn | Thickness of shell portion |
| Example 2-5 | 98 | 0 | 2 | 69 | 8 | 23 | 59 | 11 | 30 | 0.5 μm |
| Example 2-6 | 90 | 3 | 7 | 70 | 10 | 20 | 50 | 15 | 35 | 0.3 μm |
| Example 2-7 | 80 | 10 | 10 | 60 | 15 | 25 | 40 | 20 | 40 | 0.3 μm |

The composite metal hydroxide thus prepared was filtered, washed with water, and then dried for 12 hours in a hot air dryer at 110°C. The composite metal hydroxide and lithium hydroxide (LiOH) were mixed at a molar ratio of 1 : 1, the mixture was subjected to the preliminary firing by heating at a temperature rise rate of 2°C/min and then maintaining at 450°C for 10 hours and then fired at from 700 to 900°C for 10 hours, thereby obtaining a positive electrode active material powder.

<Comparative Examples 2-3 and 2-4>

In Comparative Example 2-3, positive electrode active material particles having constant concentrations of nickel, manganese, and cobalt in the entire particle were prepared using an aqueous metal solution having a composition of $Ni_{81}Co_5Mn_{14}OH_2$ which corresponds to the average composition of the entire particle in Example 2-5.

In Comparative Example 2-4, positive electrode active material particles having constant concentrations of nickel, manganese, and cobalt in the entire particle were prepared using an aqueous metal solution having a composition of $Ni_{68}Co_{13}Mn_{19}OH_2$ which corresponds to the average composition of the entire particle in Example 2-4.

<Experimental Example> Taking of EDX image

The concentrations of Ni, Mn, and Co depending on the distance from the center in the particles prepared in Example 2-5 were measured by EDX, and the results are illustrated in Fig. 46.

From Fig. 46, it can be seen that the concentration gradient portion is formed on the outside of the inner core portion and the shell portion having constant concentrations of nickel, manganese, and cobalt is formed on the concentration gradient portion in the case of the particles according to Example of the inventive concept.

<Experimental Example> Measurement of charge and discharge characteristics, cycle-life characteristics, and DSC

The charge and discharge characteristics, cycle-life characteristics, and DSC characteristics of the batteries containing the active materials prepared in Examples 2-5 to 2-7 and Comparative Examples 2-3 and 2-4 were measured, and the results are presented in the following Table 15.

[Table 15]

| | Discharge capacity | Cycle-life characteristics (100th) | DSC |
|---|---|---|---|
| Example 2-5 | 220.4 mAh/g | 94.7% | 269.7°C |
| Example 2-6 | 215.7 mAh/g | 94.9% | 272.2°C |
| Example 2-7 | 201.8 mAh/g | 96.3% | 286.4°C |
| Comparative Example 2-3 | 206.7 mAh/g | 84.8% | 234.3°C |
| Comparative Example 2-4 | 193.2 mAh/g | 88.3% | 271.6°C |

The charge and discharge characteristics, cycle-life characteristics, and DSC characteristics of the particles prepared in Example 2-5 and Comparative Example 2-3 were measured, and the results are illustrated in Figs. 47 to 49, respectively.

From Figs. 47 to 49, it has been confirmed that the average composition of the particles in Example 2-5 is the same as the composition of the particles in Comparative Example 2-3, but the charge and discharge characteristics, cycle-life characteristics, and thermal stability are greatly improved in Example 2-5 as compared to Comparative Example 2-3 since the particles in Example 2-5 includes the shell portion having a constant concentration on the outside of the inner core portion and the first concentration gradient portion.

<Experimental Example> Measurement of residual lithium

The amounts of LiOH and $Li_2CO_3$ were measured in order to determine the amount of residual lithium in the particles prepared in Example 2-5 and Comparative Example 2-3, and the results are as presented in the following Table 16.

[Table 16]

| Sample | LiOH | $Li_2CO_3$ | Sum of residual lithium |
|---|---|---|---|
| Comparative Example 2-3 | 7124 | 5397 | 12521 |
| Example 2-5 | 3512 | 2699 | 6211 |

It has been confirmed that residual lithium is improved by nearly 50% in the active material according to Example 2-5 of the inventive concept as compared to the active material prepared in Comparative example 2-3.

<Examples 3-1 and 3-2>

In order to produce particles having two concentration gradients in the core portion, first, a first aqueous metal solution and a second aqueous metal solution were prepared by mixing nickel sulfate, cobalt sulfate, and manganese sulfate so as to have a composition of $Ni_{x1}Co_{y1}Mn_{z1}OH_2$ (X1, Y1, Z1) and a composition of $Ni_{x2}Co_{y2}Mn_{z2}OH_2$ (x2, y2, z2), respectively, the first aqueous metal solution and the second aqueous metal solution were continuously introduced into the reactor at 0.7 L/hr while mixing them and changing the mixing ratio thereof, and an ammonia solution having a concentration of 25 mol was also continuously introduced into the reactor at 0.07 L/hr, thereby forming the core portion having a first concentration gradient.

Thereafter, a third aqueous metal solution prepared by mixing nickel sulfate, cobalt sulfate, and manganese sulfate so as to have a constant composition of $Ni_{x3}Co_{y3}Mn_{z3}OH_2$ and the second aqueous metal solution were continuously introduced into the reactor at 0.7 L/hr while mixing them and changing the mixing ratio thereof, and an ammonia solution having a concentration of 25 mol was also continuously introduced into the reactor at 0.07 L/hr, thereby forming the core portion having a second concentration gradient.

Thereafter, an aqueous solution for the formation of shell portion that was prepared by mixing nickel sulfate, cobalt sulfate, and manganese sulfate so as to have a constant composition of $Ni_{X4}Co_{y4}Mn_{z4}OH_2$ was supplied into the reactor to form the shell portion having a concentration that is different from the concentration at the end of the core portion having a second concentration gradient.

The concentrations of the aqueous metal solutions thus prepared in Examples 3-1 and 3-2 are as presented in the following Table 17.

[Table 17]

| | First aqueous metal solution | | | Second aqueous metal solution | | | Third aqueous metal solution | | | Fourth aqueous metal solution | | | Thickness of shell portion |
|---|---|---|---|---|---|---|---|---|---|---|---|---|---|
| | Ni | Co | Mn | Ni | Co | Mn | Ni | Co | Mn | Ni | Co | Mn | |
| Example 3-1 | 98 | 2 | 2 | 90 | 4 | 6 | 69 | 08 | 23 | 60 | 12 | 28 | 0.5 μm |
| Example 3-2 | 98 | 2 | 2 | 90 | 4 | 6 | 70 | 7 | 23 | 60 | 10 | 30 | 0.5 μm |

The composite metal hydroxide thus prepared was filtered, washed with water, and then dried for 12 hours in a hot air dryer at 110°C. The composite metal hydroxide and lithium hydroxide (LiOH) were mixed at a molar ratio of 1 : 1, the mixture was subjected to the preliminary firing by heating at a temperature rise rate of 2°C/min and then maintaining at 450°C for 10 hours and then fired at from 700 to 900°C for 10 hours, thereby obtaining a positive electrode active material powder.

<Comparative Example 3-1 >

In Comparative Example 3-1, composite oxide particles having constant concentrations of nickel, manganese, and cobalt in the entire particle were prepared using an aqueous metal solution having a composition of $Ni_{80}Co_6Mn_{14}OH_2$.

<Experimental Example> Taking of EDX image

The concentrations of Ni, Mn, and Co depending on the distance from the center in the particles prepared in Example 3-1 were measured by EDX, and the results are illustrated in Fig. 50.

From Fig. 50, it can be seen that the core portion has two magnitudes of concentration gradient and the shell portion in which the concentration at the end is maintained is formed in the case of the particles according to Example of the inventive concept.

<Experimental Example> Measurement of charge and discharge characteristics, cycle-life characteristics, and DSC

The charge and discharge characteristics, cycle-life characteristics, and DSC characteristics of the batteries containing the active materials prepared in Examples 3-1 and 3-2 and Comparative Example 3-1 were measured, and the results are presented in the following Table 18 and illustrated in Figs. 51 to 54.

[Table 18]

| | Discharge capacity | Cycle-life characteristics ($100^{th}$) | DSC |
|---|---|---|---|
| Example 3-1 | 223 mAh/g | 95.5% | 270°C |
| Example 3-2 | 222 mAh/g | 95.9% | 275°C |
| Comparative Example 3-1 | 207 mAh/g | 84.8% | 234°C |

From Table 18 above and Fig. 51 illustrating the charge and discharge characteristics, it has been confirmed that the capacity of the battery including the positive electrode active material according to the inventive concept is 220 mAh/g or more, and from Fig. 54, it can be seen that the thermal stability thereof is greatly improved in the DSC characteristics as the ignition temperature is higher than that in Comparative Example by 40°C or higher although a high content of nickel is contained to have a high capacity.

<Experimental Example> Measurement of residual lithium

The amounts of residual LiOH and $Li_2CO_3$ in the particles prepared in Example 3-1 and Comparative Example 3-1 were measured, and the results are as presented in the following Table 19.

[Table 19]

| | Residual LiOH | $Li_2CO_3$ | Sum |
|---|---|---|---|
| Comparative Example 3-1 | 7124 | 5397 | 12521 |
| Example 3-1 | 3208 | 3095 | 6307 |

From Table 19 above, it has been confirmed that residual lithium in Example 3-1 of the inventive concept has decreased to about 50% of that in Comparative example.

<Experimental Example> Measurement of tap density and BET surface area

The tap density of the particles prepared in Example 3-1 and Comparative Example 3-1 are as presented in the following Table 20.

[Table 20]

| | Tap density |
|---|---|
| Example 3-1 | 2.52 |
| Comparative Example 3-1 | 2.62 |

In the positive electrode active material according to embodiments of the inventive concept, a shell portion having a constant concentration is formed on the surface of the core portion in which concentrations of nickel, manganese, and cobalt have gradients, and thus the positive electrode active material exhibits excellent cycle-life characteristics and charge and discharge characteristics, has a stabilized crystal structure while having a high capacity, and is structurally stabilized even when being used at a high voltage.

In addition, according to an embodiment of the inventive concept, the positive electrode active material includes a first element containing a first metal and a second element composed of one or more first elements. The second element may include a concentration gradient portion having a content of the first metal changed and a concentration maintained portion having a constant content of the first metal. Consequently, it is possible to provide a positive electrode active material containing the second element with characteristics improved by the first metal as the content of the first metal in the second element can be controlled.

While the inventive concept has been described with reference to exemplary embodiments, it will be apparent to those skilled in the art that various changes and modifications may be made without departing from the spirit and scope of the inventive concept. Therefore, it should be understood that the above embodiments are not limiting, but illustrative.

## Claims

**1.** A positive electrode active material for lithium secondary battery, the positive electrode active material comprising:

a core portion having gradients of concentrations of nickel, manganese, and cobalt in a direction from a center to a surface; and
a shell portion having constant concentrations of nickel, manganese, and cobalt,
wherein concentrations of nickel, manganese, and cobalt in a center of the core portion are represented by CC1-Ni, CC1-Mn, and CC1-Co, respectively,
wherein the core portion comprises:

a first core portion in which magnitudes of the concentration gradients of nickel, manganese, and cobalt are represented by CS1-Ni, CS1-Mn, and CS1-Co, respectively; and
a second core portion in which magnitudes of the concentration gradients of nickel, manganese, and cobalt are represented by CS2-Ni, CS2-Mn, and CS2-Co, respectively,
wherein the concentration CC1-Ni of the nickel in the center is 0.95 or more,
wherein the concentrations of nickel, manganese, and cobalt in the shell portion are represented by SC-Ni, SC-Mn, and SC-Co, respectively, and
wherein the concentration SC-Ni of nickel in the shell portion is 0.6 or less.

**2.** The positive electrode active material of claim 1, wherein the magnitudes CS1-Ni, CS1-Mn, and CS1-Co of concentration gradients of nickel, manganese, and cobalt in the first core portion and the magnitudes CS2-Ni, CS2-Mn, and CS2-Co of concentration gradients of nickel, manganese, and cobalt in the second core portion satisfy the following relational expressions: CS1-Ni < 0, CS1-Mn > 0, CS1-Co > 0, CS2-Ni < 0, CS2-Mn > 0, and CS2-Co >0.

**3.** The positive electrode active material of claim 1 or 2, wherein the concentrations of nickel, manganese, and cobalt in the shell portion are represented by SC1-Ni, SC1-Mn, and SC1-Co, respectively, and the concentrations of nickel, manganese, and cobalt in the shell portion are constant.

**4.** The positive electrode active material of any one of claims 1 to 3, wherein the concentrations SC1-Ni, SC1-Mn, and SC1-Co of nickel, manganese, and cobalt in the shell portion are equal to the concentrations of nickel, manganese, and cobalt of the outermost part of the core portion, respectively.

**5.** The positive electrode active material of any one of claims 1 to 4, wherein an average cobalt concentration of the core portion and the shell portion is 6%.

**6.** The positive electrode active material of any one of claims 1 to 5, wherein a concentration of nickel at a contact point between the first core portion and the second core portion is 0.9.

**7.** The positive electrode active material of any one of claims 1 to 6, wherein a volume of the shell portion is 30% or less of a total volume of a particle.

**8.** A positive electrode active material comprising:

a first element formed of a plurality of metals including nickel; and
a second element composed of one or more first elements,
wherein the first element extends from a center part of the second element toward a surface part of the second element, and
wherein the second element comprises: a concentration gradient portion in which a content of nickel changes; and a concentration maintained portion in which a content of the first metal is constant.

**9.** The positive electrode active material of claim 8, wherein the plurality of metals further includes manganese, wherein the content of manganese increases as the content of nickel decreases in the direction from the center part to the surface part in the concentration gradient portion.

**10.** The positive electrode active material of claim 8 or 9, wherein the center part includes a region of the inside of the second element, and
wherein the first element has a rod shape radiated from the center part toward the surface part.

**11.** The positive electrode active material of any one of claims 8 to 10, wherein an average content of nickel in the concentration gradient portion is higher than an average content of nickel in the concentration maintained portion.

**12.** The positive electrode active material of any one of claims 8 to 11, wherein a content of $Li_2CO_3$ of a surface of the positive electrode active material is 2,000 ppm or less

**13.** The positive electrode active material of any one of claims 8 to 12, wherein a content of LiOH of a surface of the positive electrode active material is 2,000 ppm or less.

【Fig. 1a】

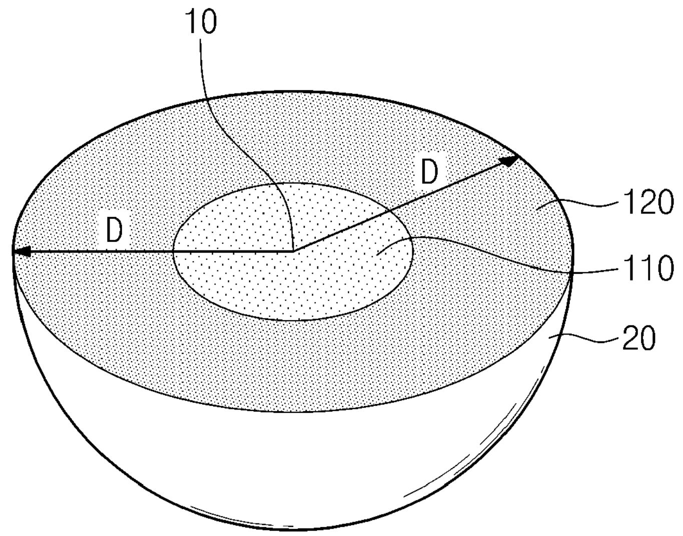


【Fig. 1b】

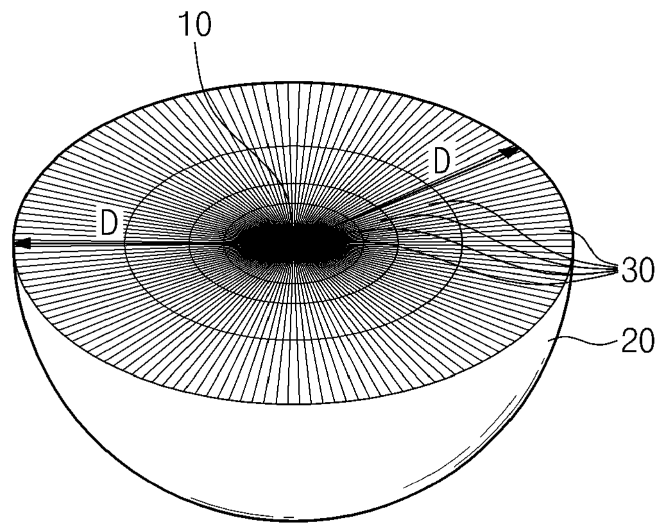

【Fig. 2】

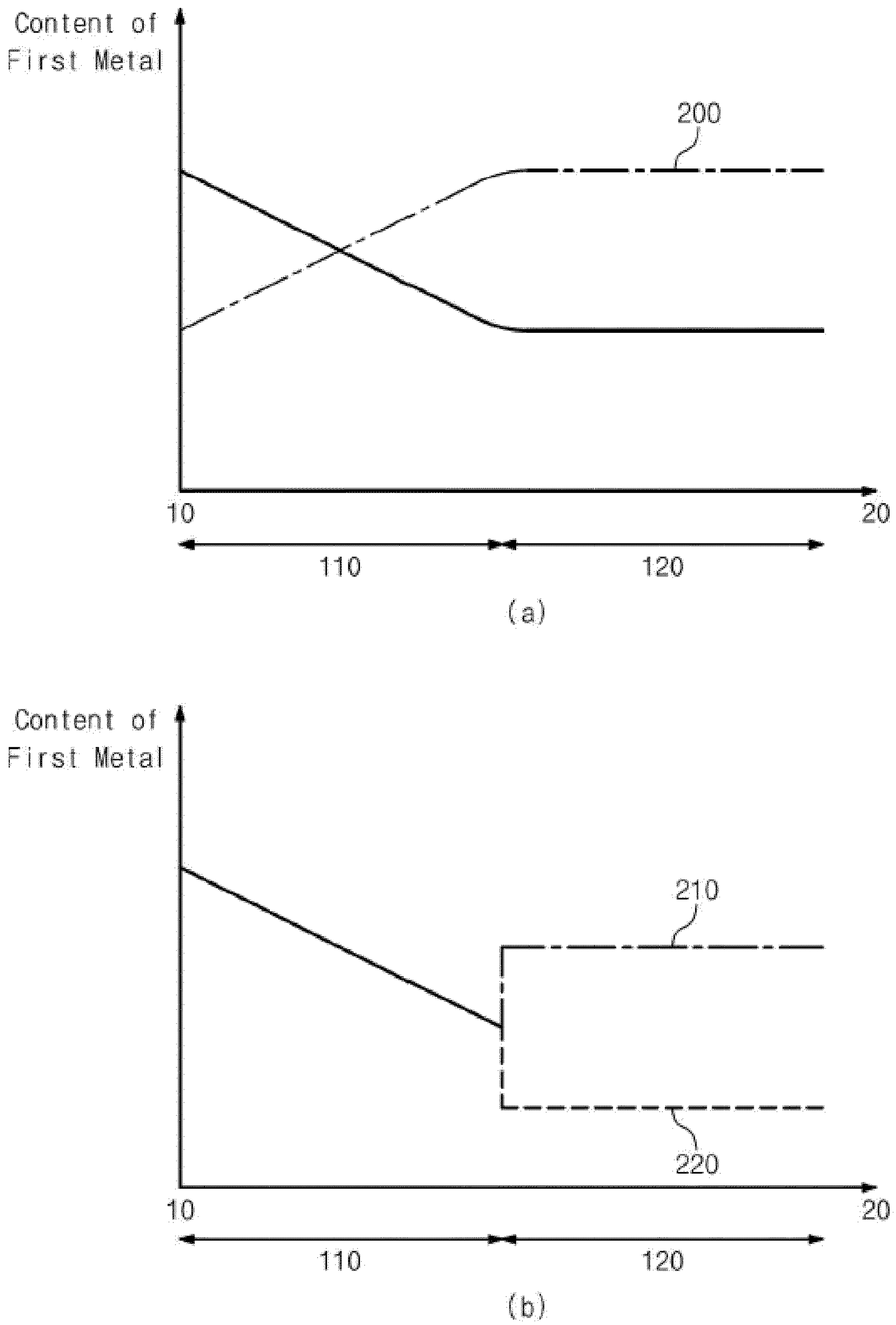
Content of
First Metal
200
10
20
110
120
(a)
Content of
First Metal
210
220
10
20
110
120
(b)

【Fig. 3】

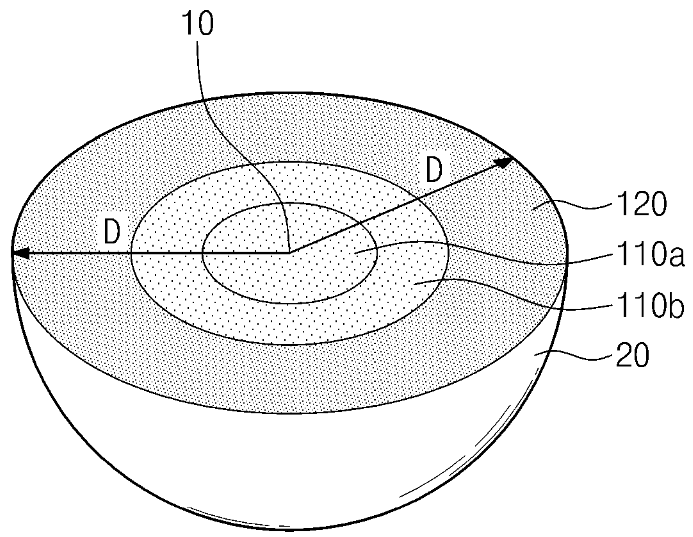

【Fig. 4】

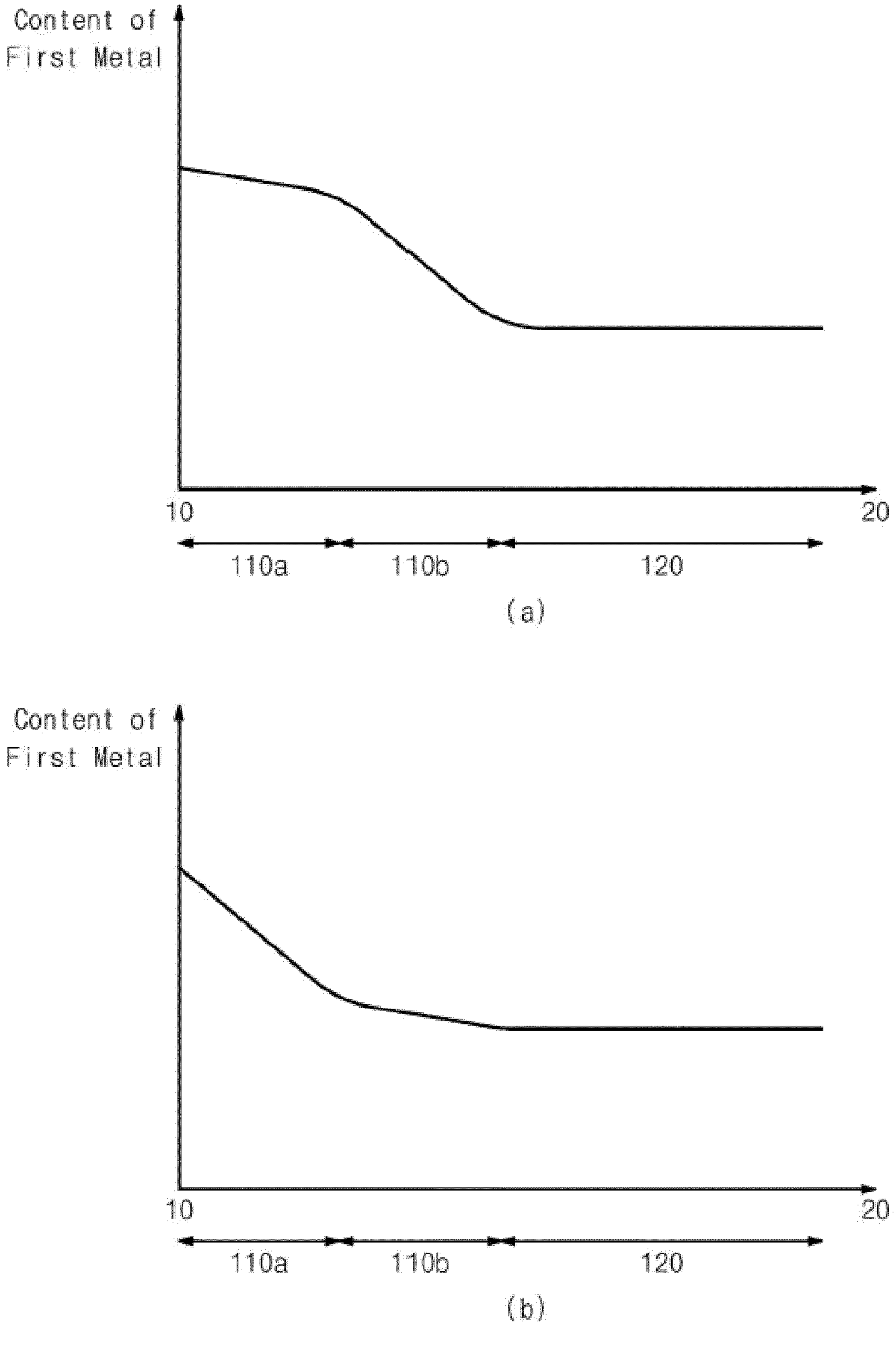
Content of First Metal
10
20
110a
110b
120
(a)
Content of First Metal
10
20
110a
110b
120
(b)

【Fig. 5】

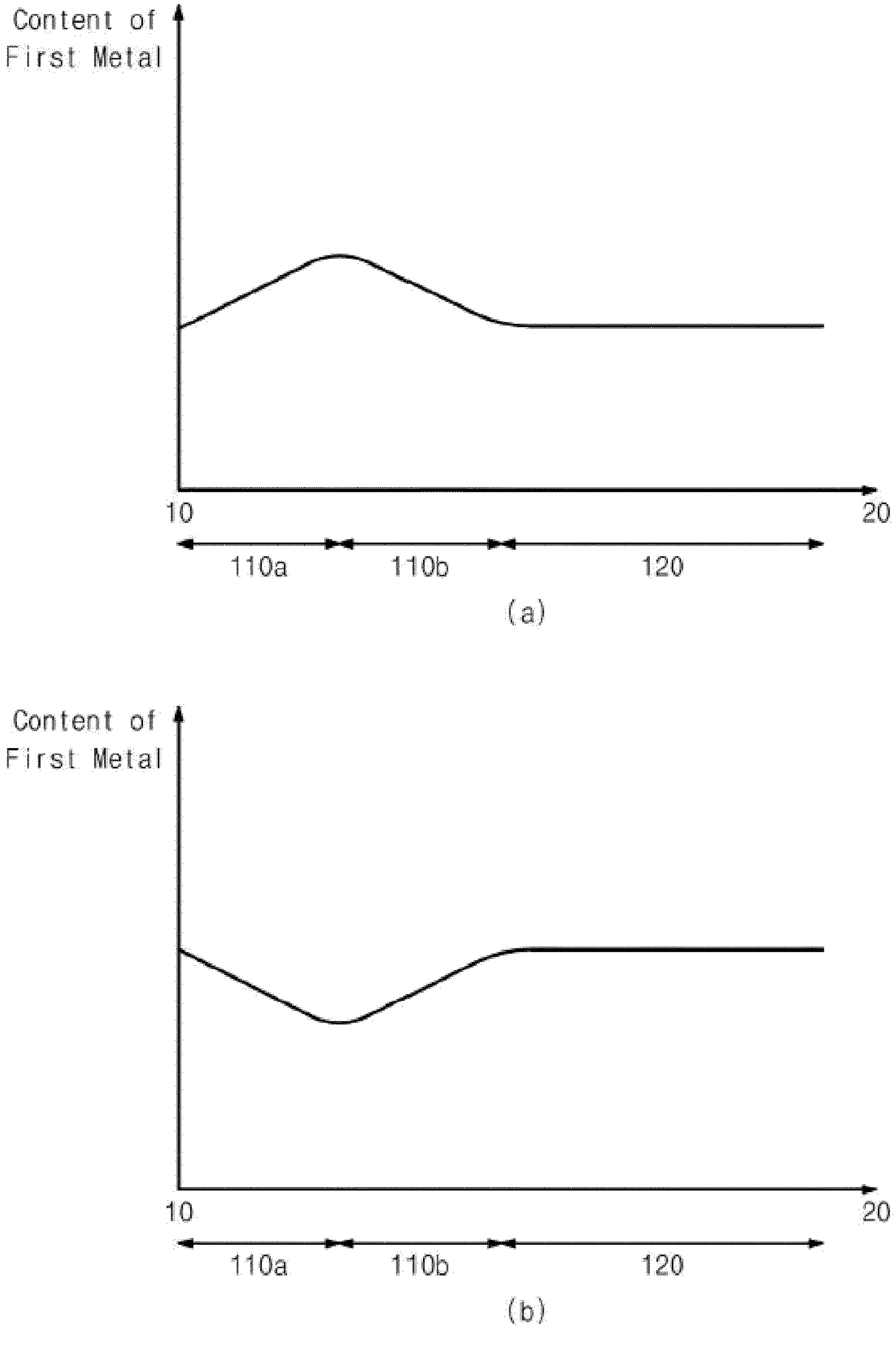
Content of First Metal
10
20
110a
110b
120
(a)
Content of First Metal
10
20
110a
110b
120
(b)

【Fig. 6】

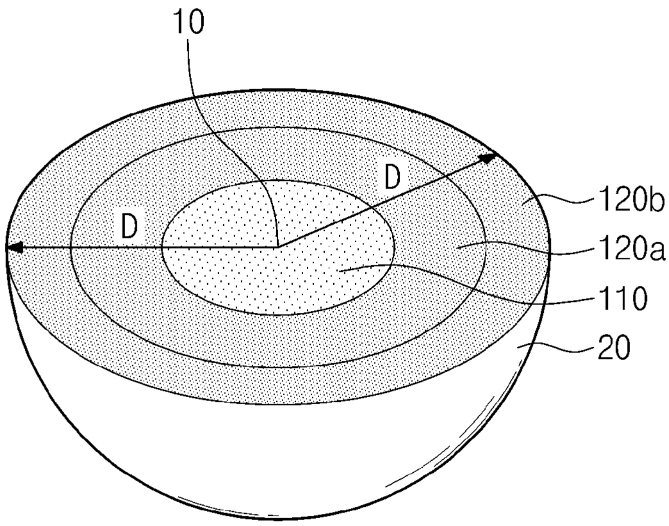
10
D
D
120b
120a
110
20

【Fig. 7】

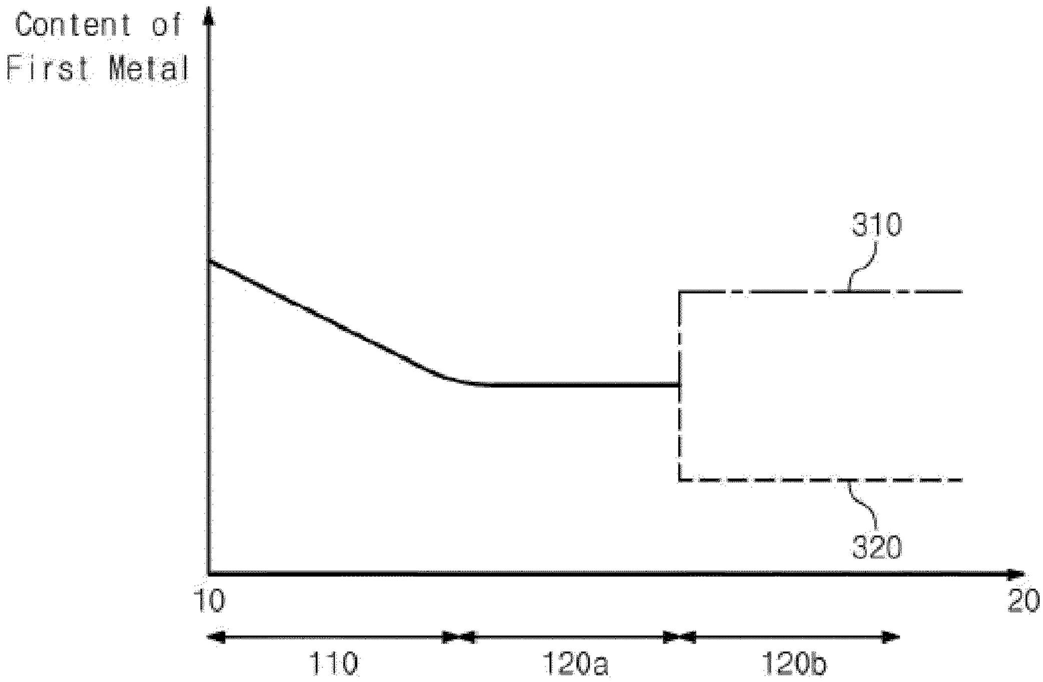
Content of
First Metal
310
320
10
20
110
120a
120b

【Fig. 8】

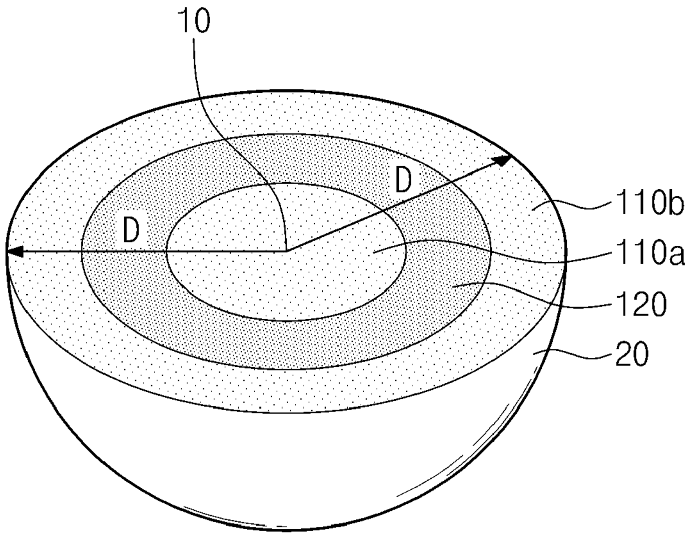

【Fig. 9】

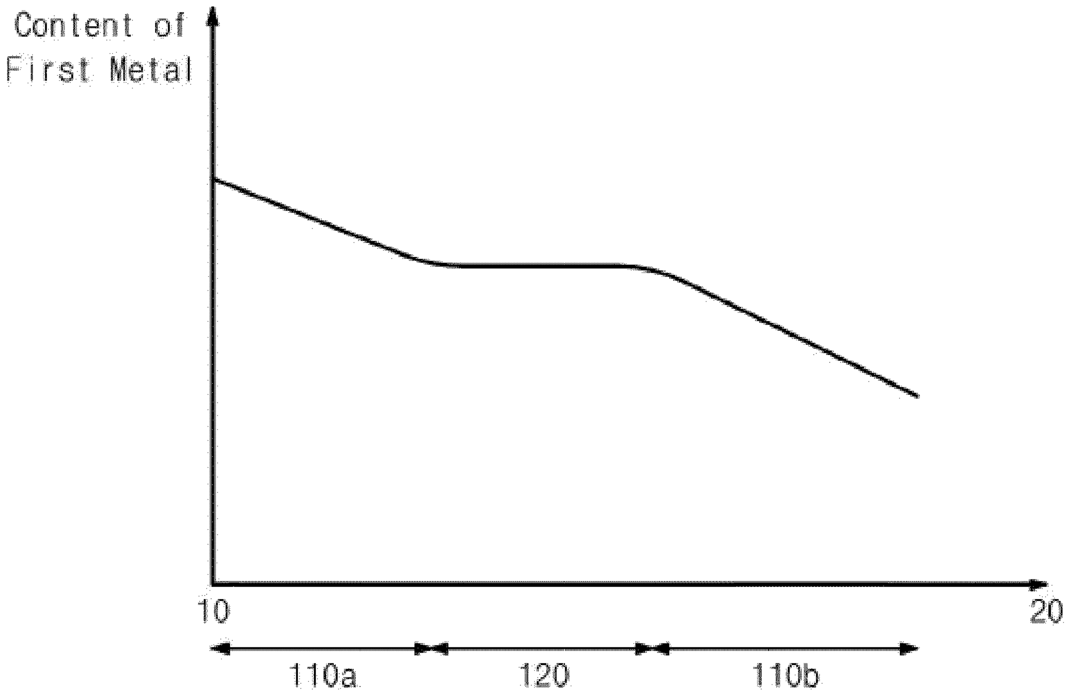
Content of
First Metal
10
20
110a
120
110b

(a)

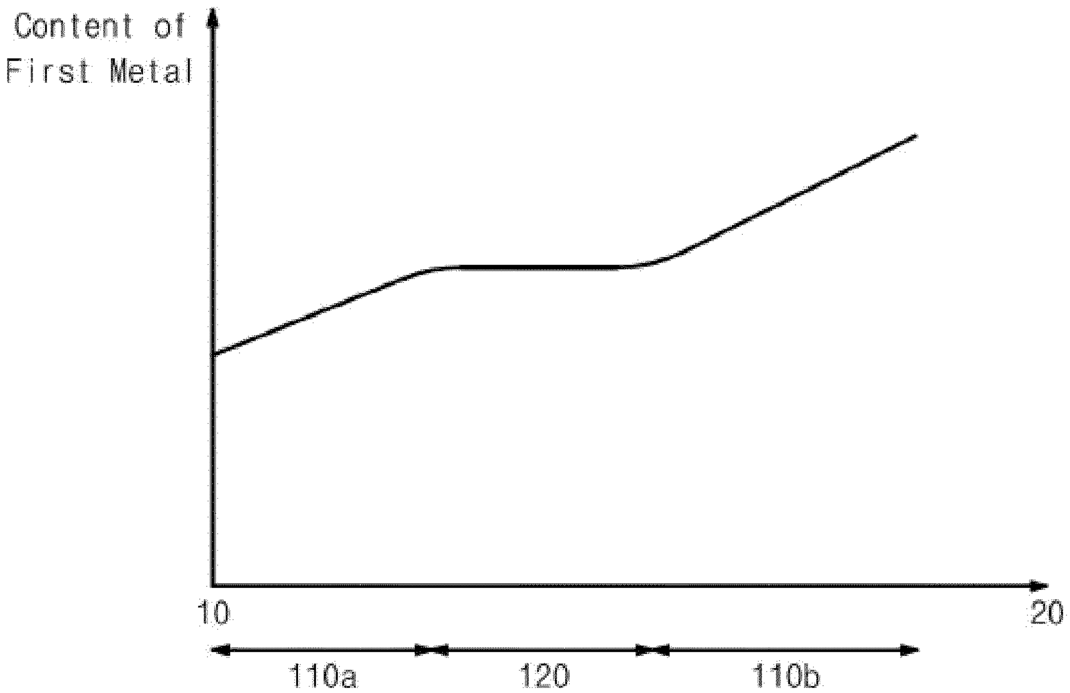
Content of
First Metal
10
20
110a
120
110b

(b)

【Fig. 10】

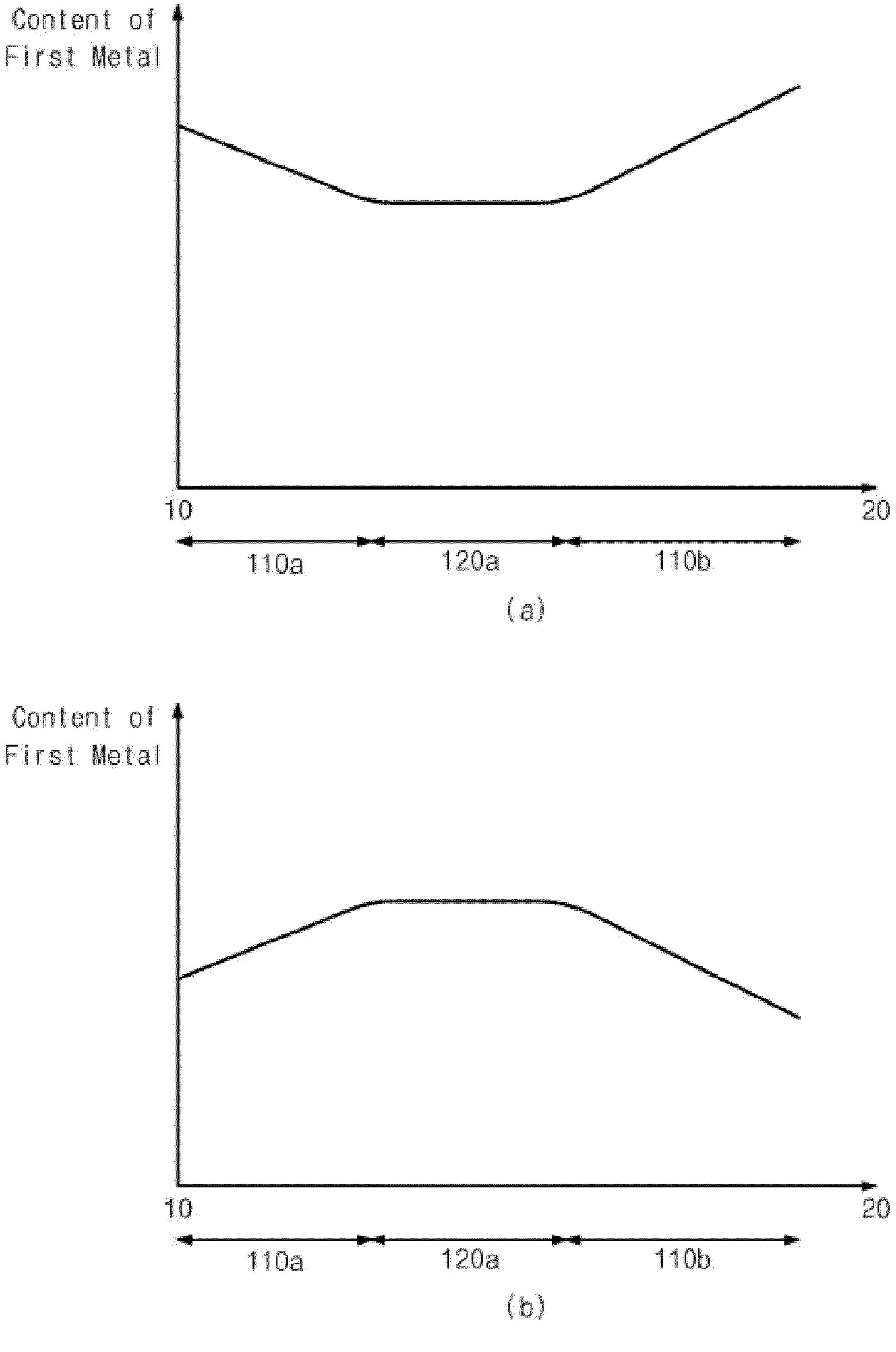
Content of First Metal
10
20
110a
120a
110b
(a)
Content of First Metal
10
20
110a
120a
110b
(b)

【Fig. 11】

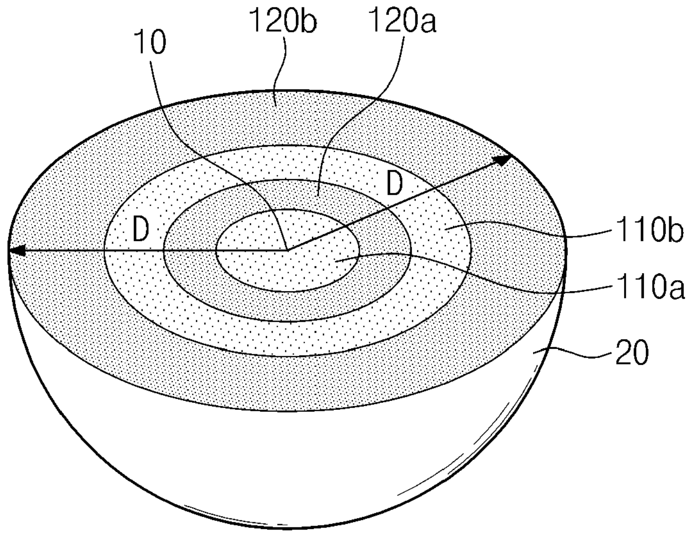


【Fig. 12】

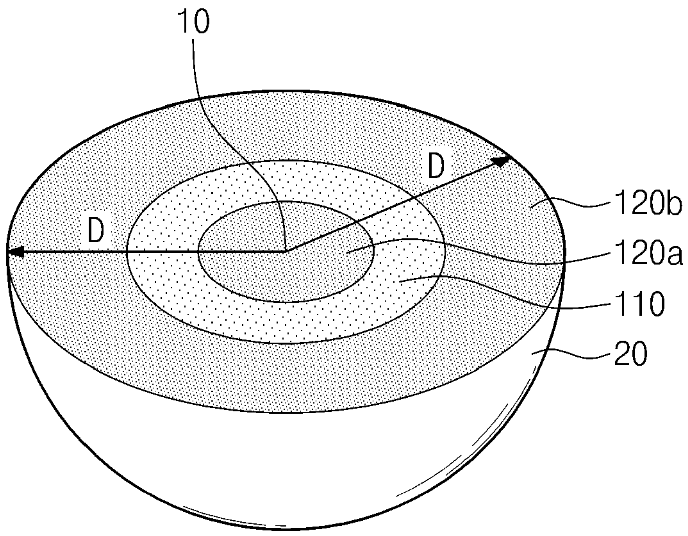

【Fig. 13】

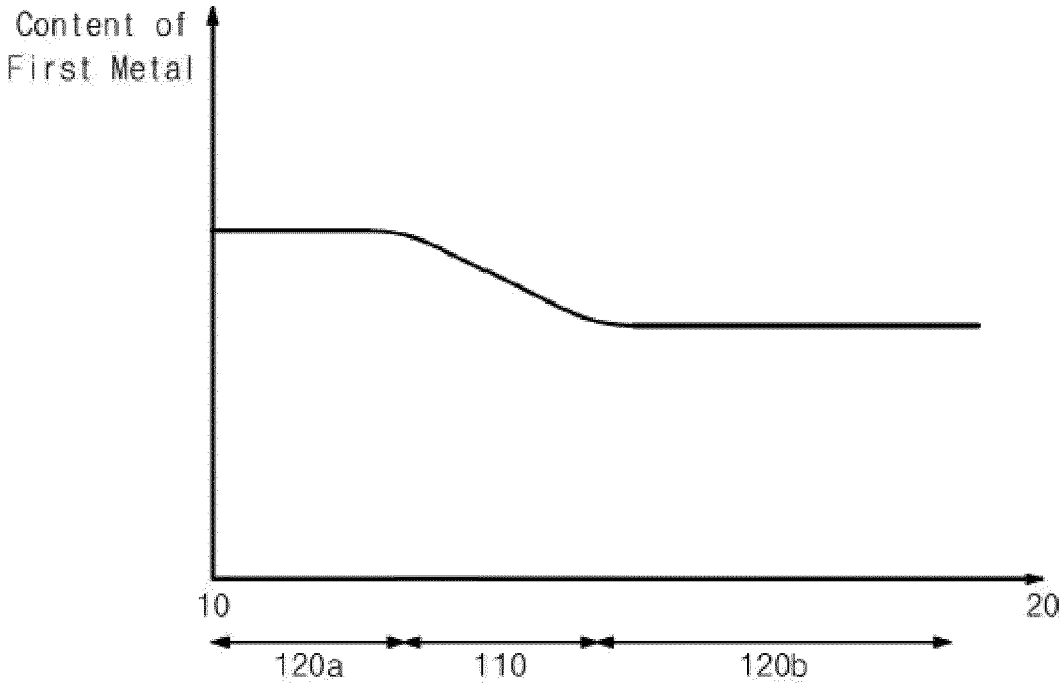
Content of
First Metal
10
20
120a
110
120b

(a)

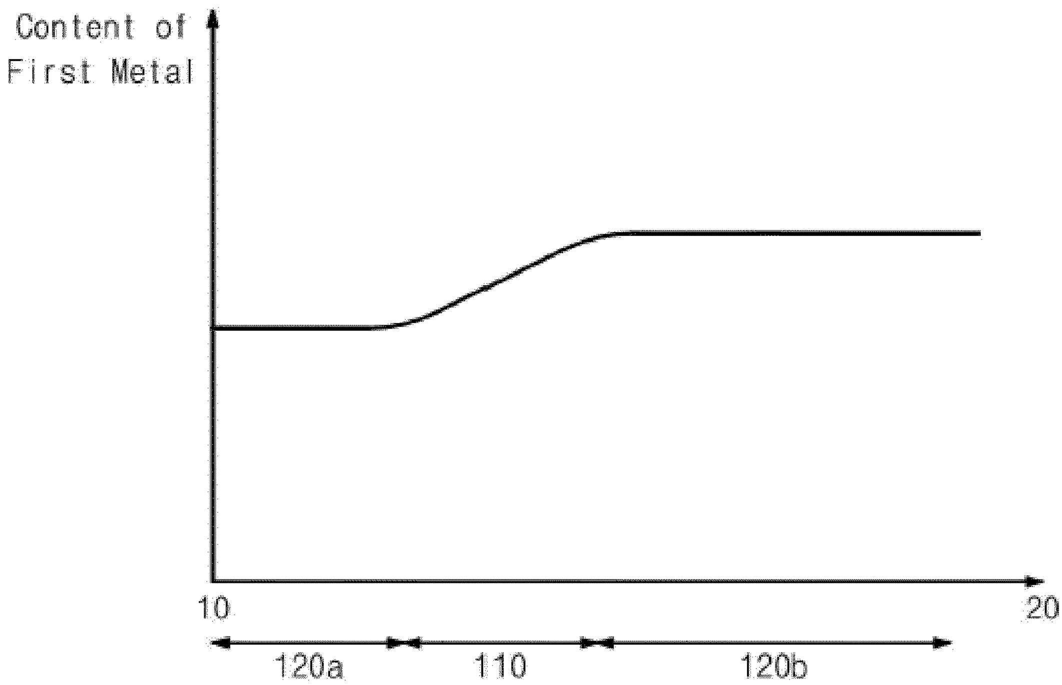
Content of
First Metal
10
20
120a
110
120b

(b)

【Fig. 14】

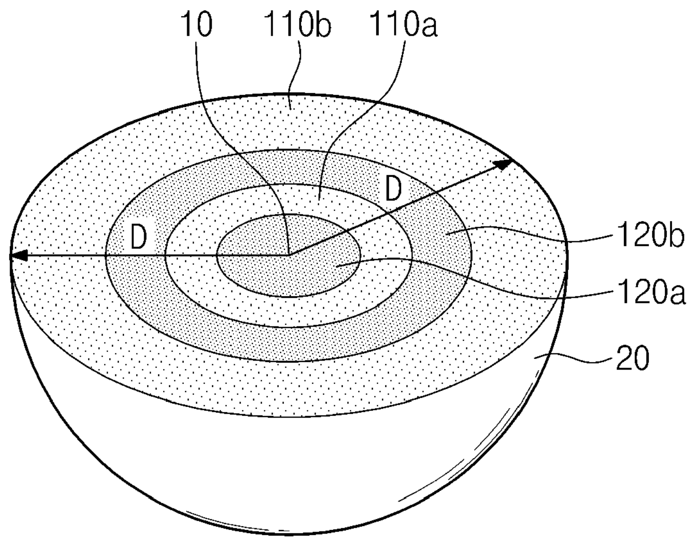

【Fig. 15】

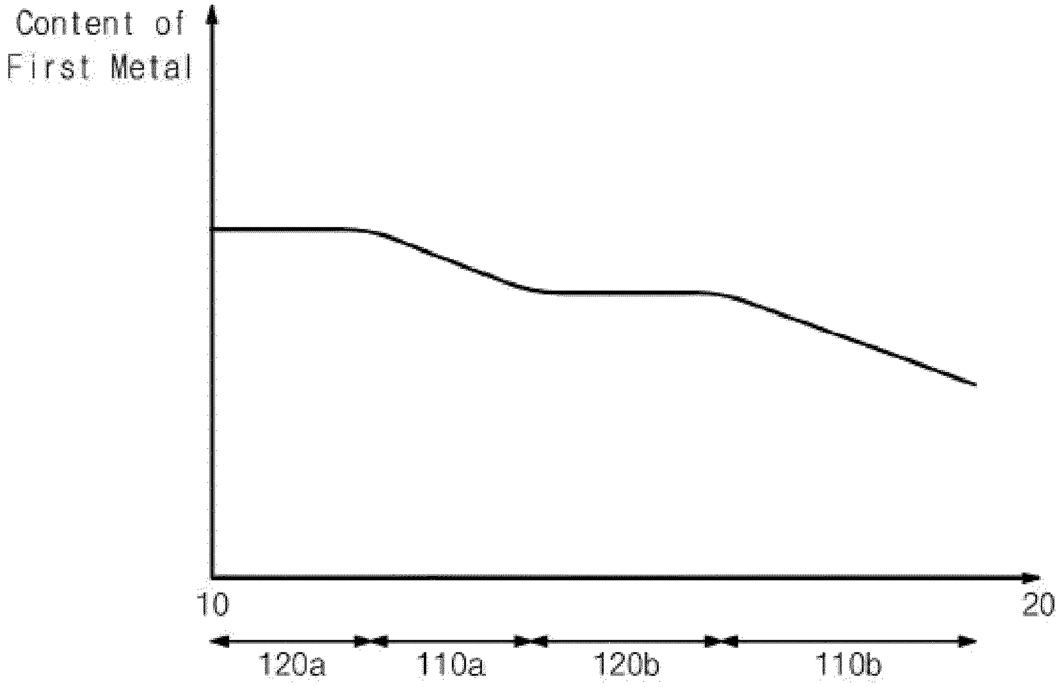
Content of First Metal
10
20
120a
110a
120b
110b

(a)

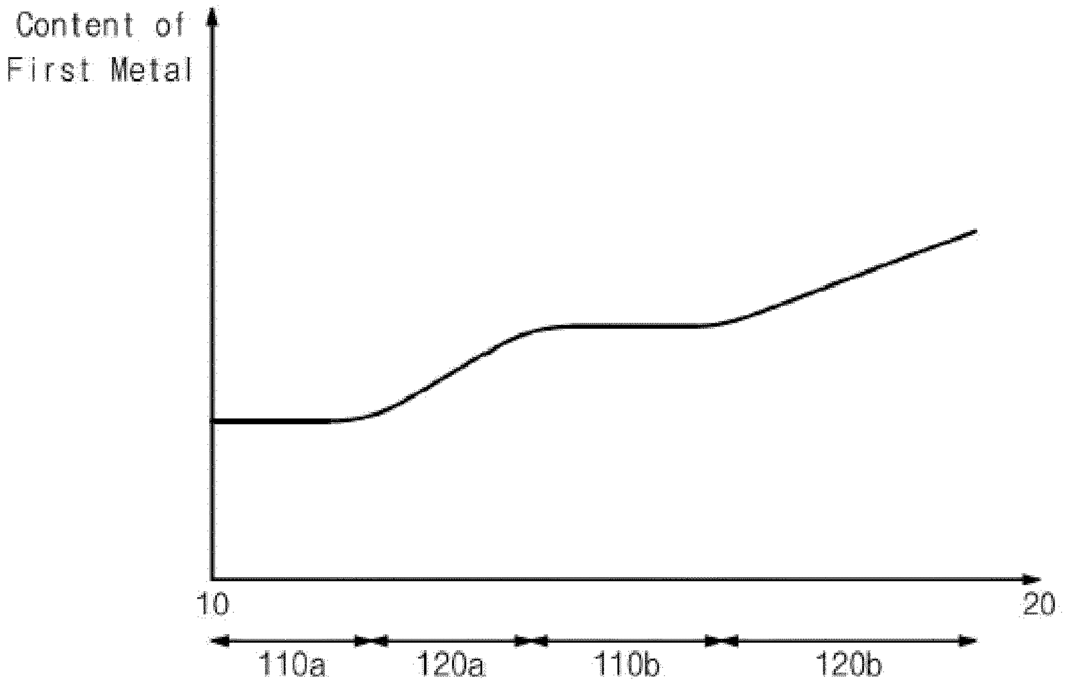
Content of First Metal
10
20
110a
120a
110b
120b

(b)

【Fig. 16】

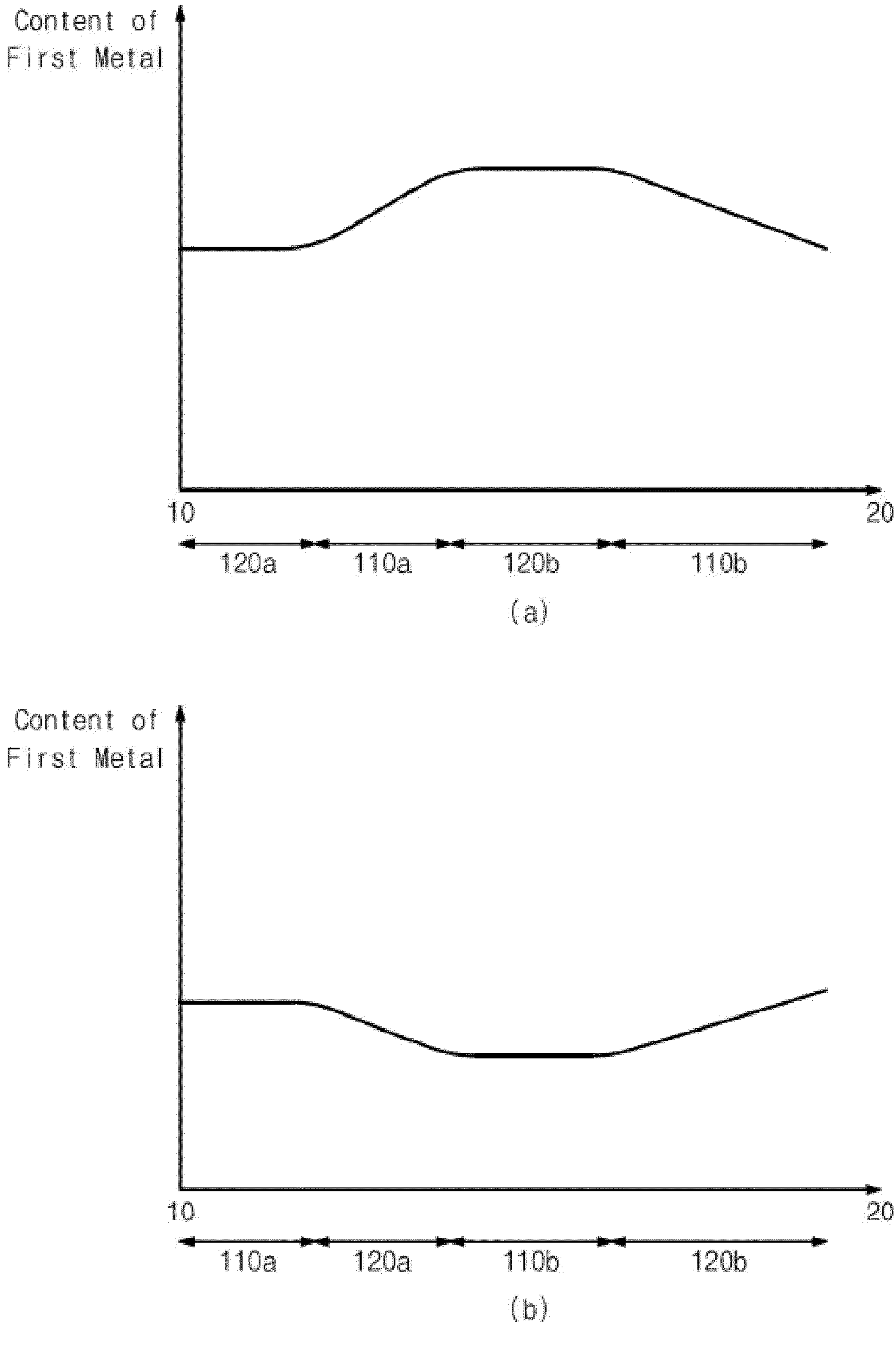
Content of
First Metal
10
20
120a
110a
120b
110b
(a)
Content of
First Metal
10
20
110a
120a
110b
120b
(b)

【Fig. 17】

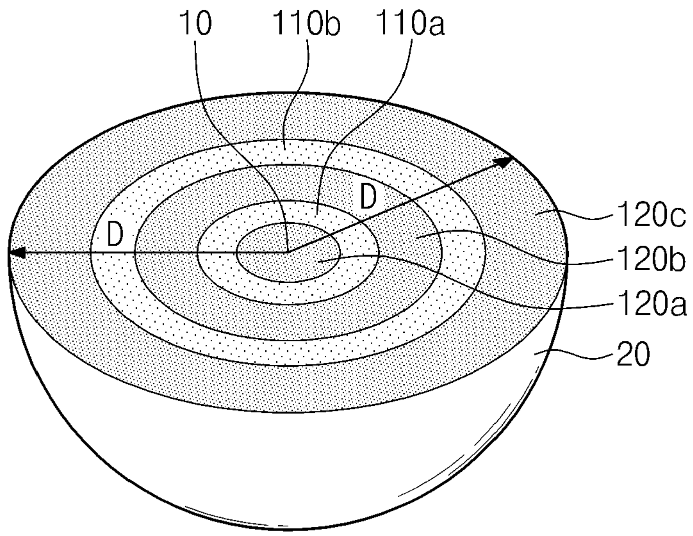


【Fig. 18】

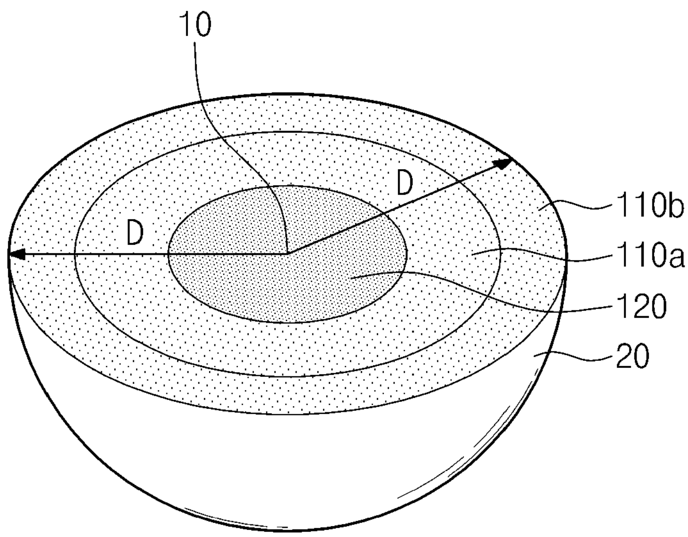

【Fig. 19】

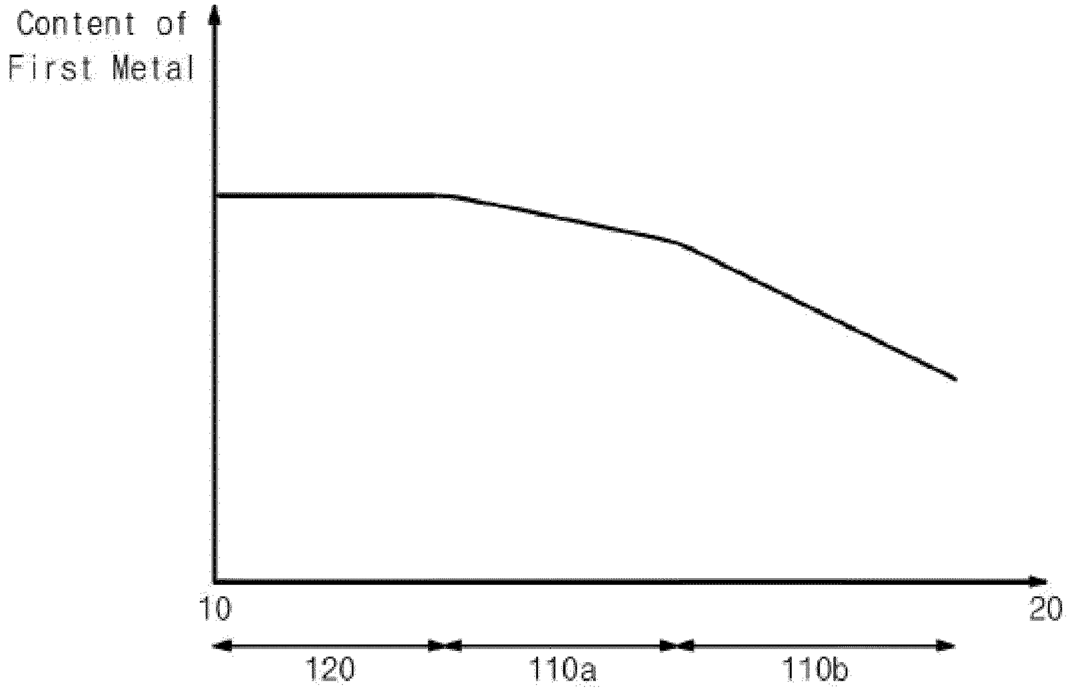
Content of
First Metal
10
20
120
110a
110b

(a)

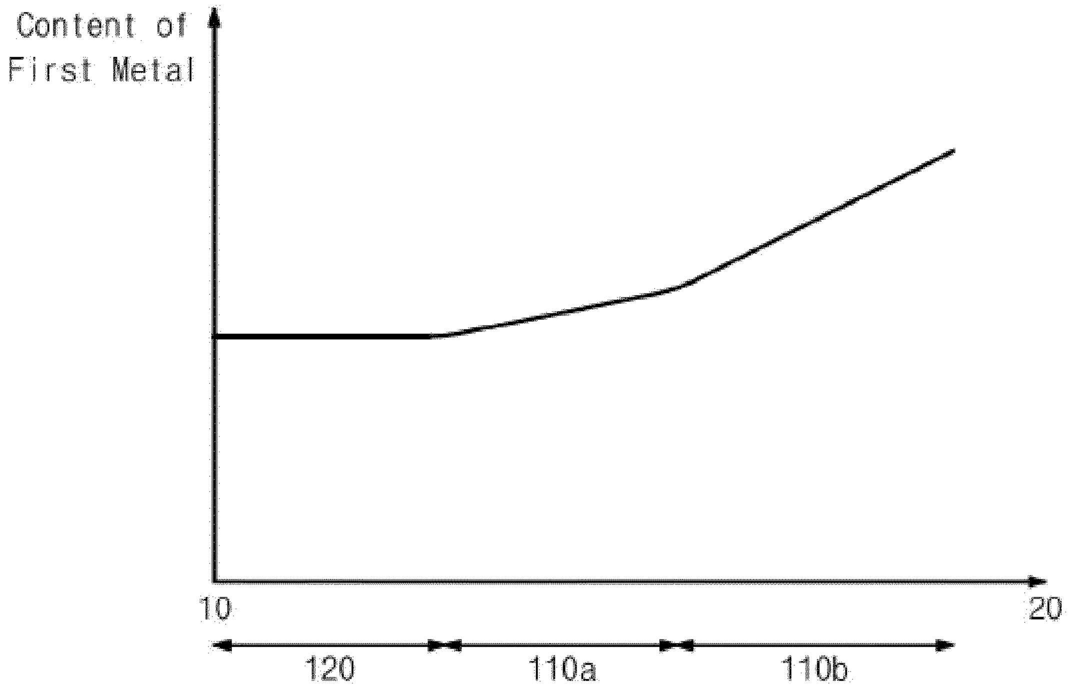
Content of
First Metal
10
20
120
110a
110b

(b)

【Fig. 20】

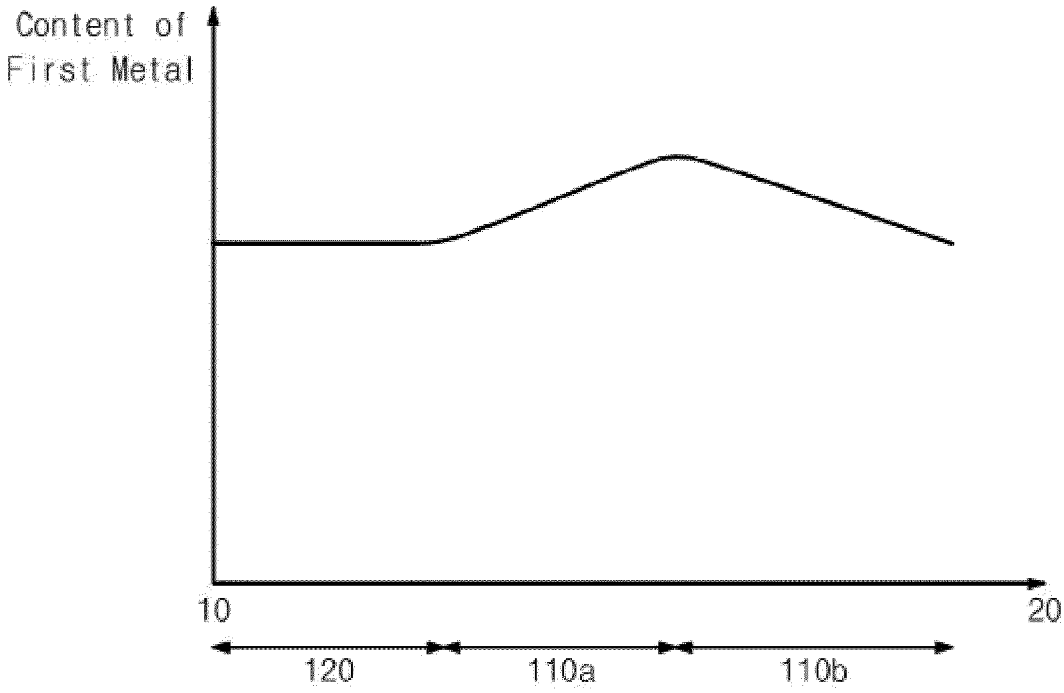
Content of
First Metal
10
20
120
110a
110b

(a)

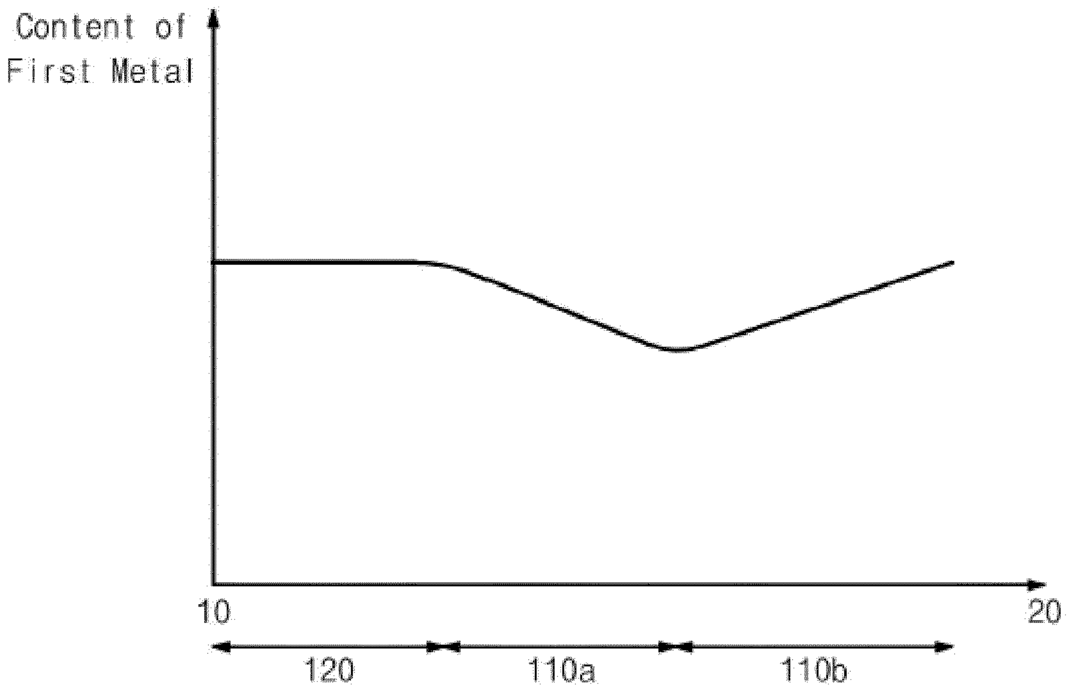
Content of
First Metal
10
20
120
110a
110b

(b)

【Fig. 21】

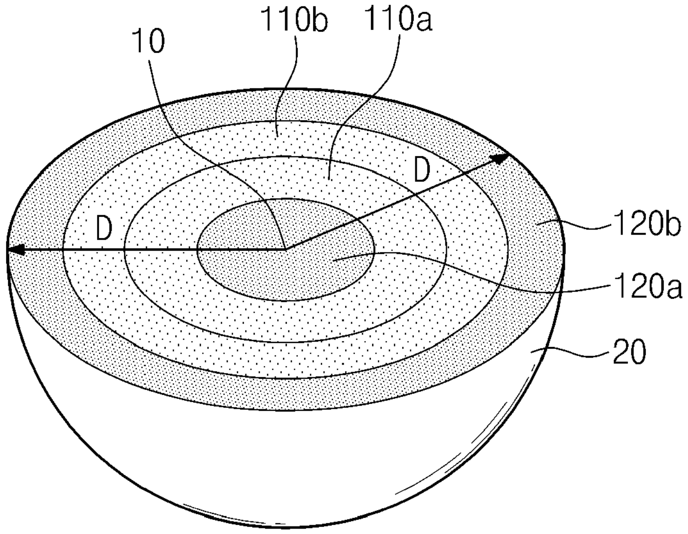


【Fig. 22】

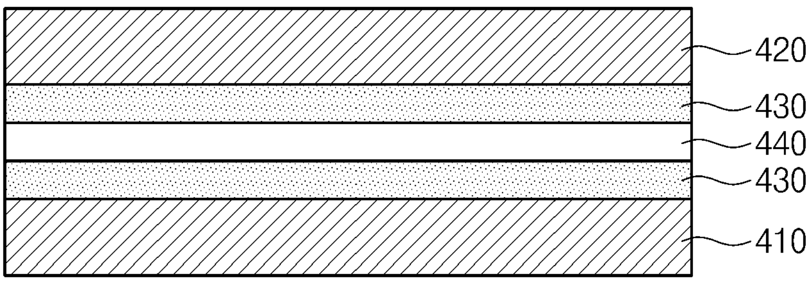

【Fig. 23】

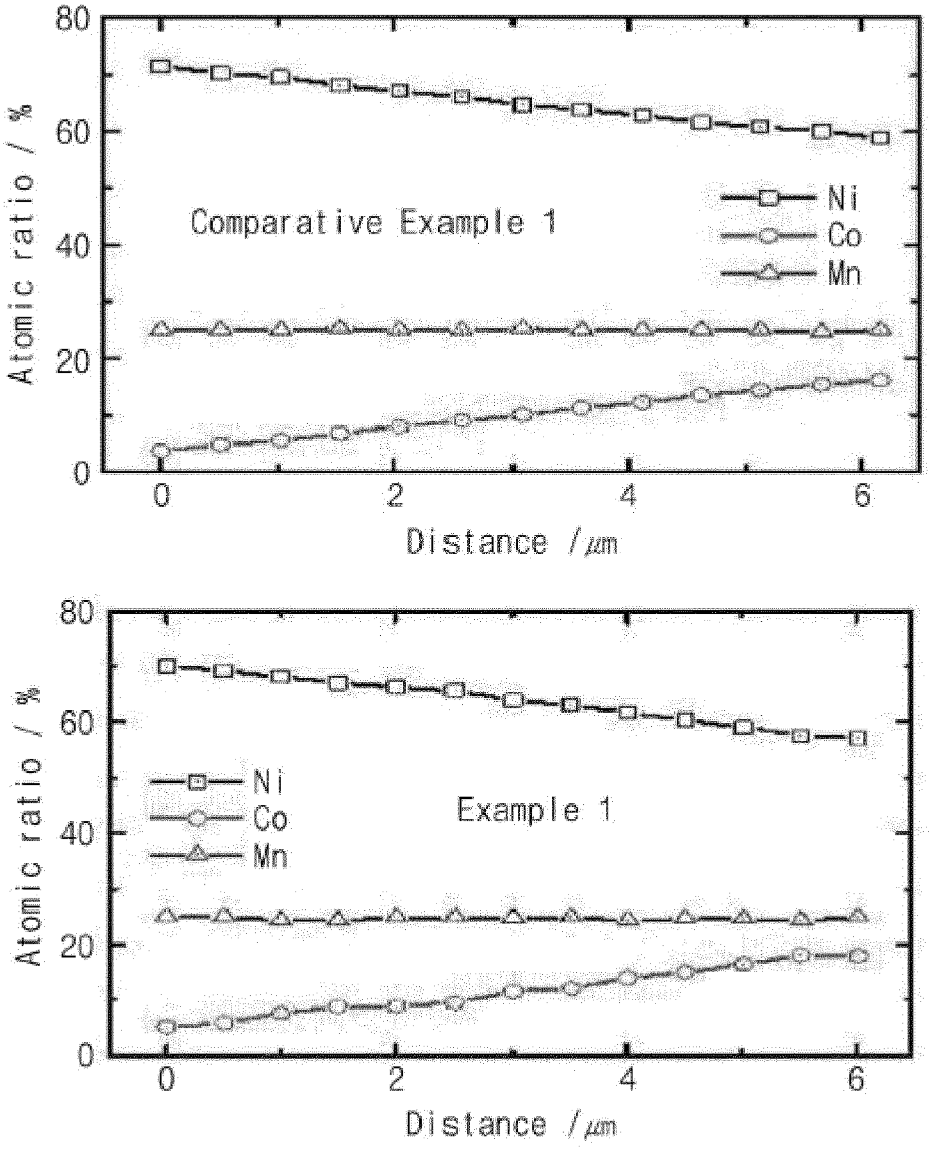
Comparative Example 1
Ni
Co
Mn
Atomic ratio / %
Distance /µm
Example 1
Ni
Co
Mn
Atomic ratio / %
Distance /µm

【Fig. 24】

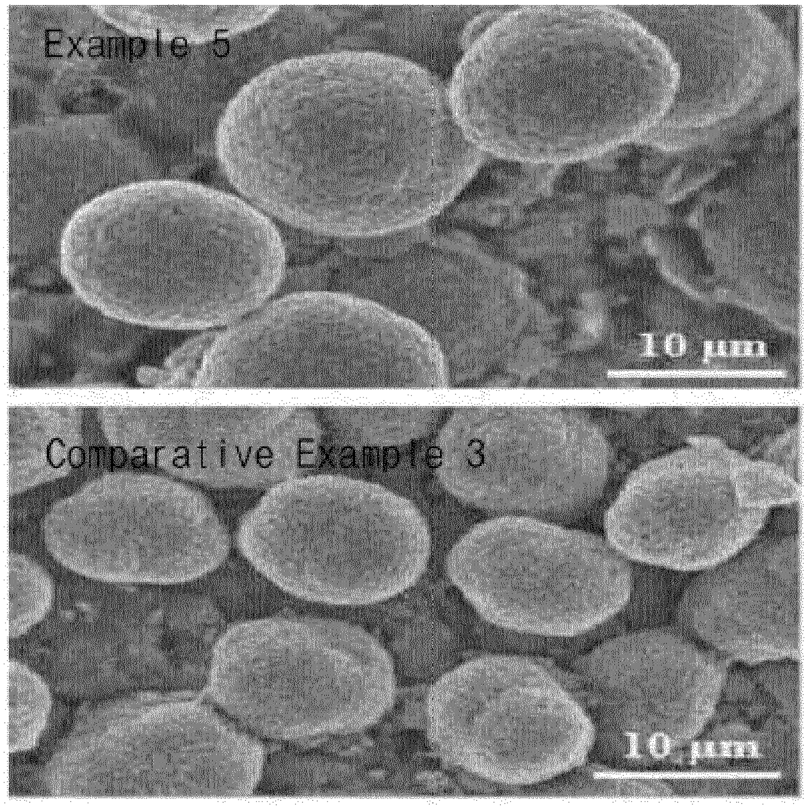

【Fig. 25】

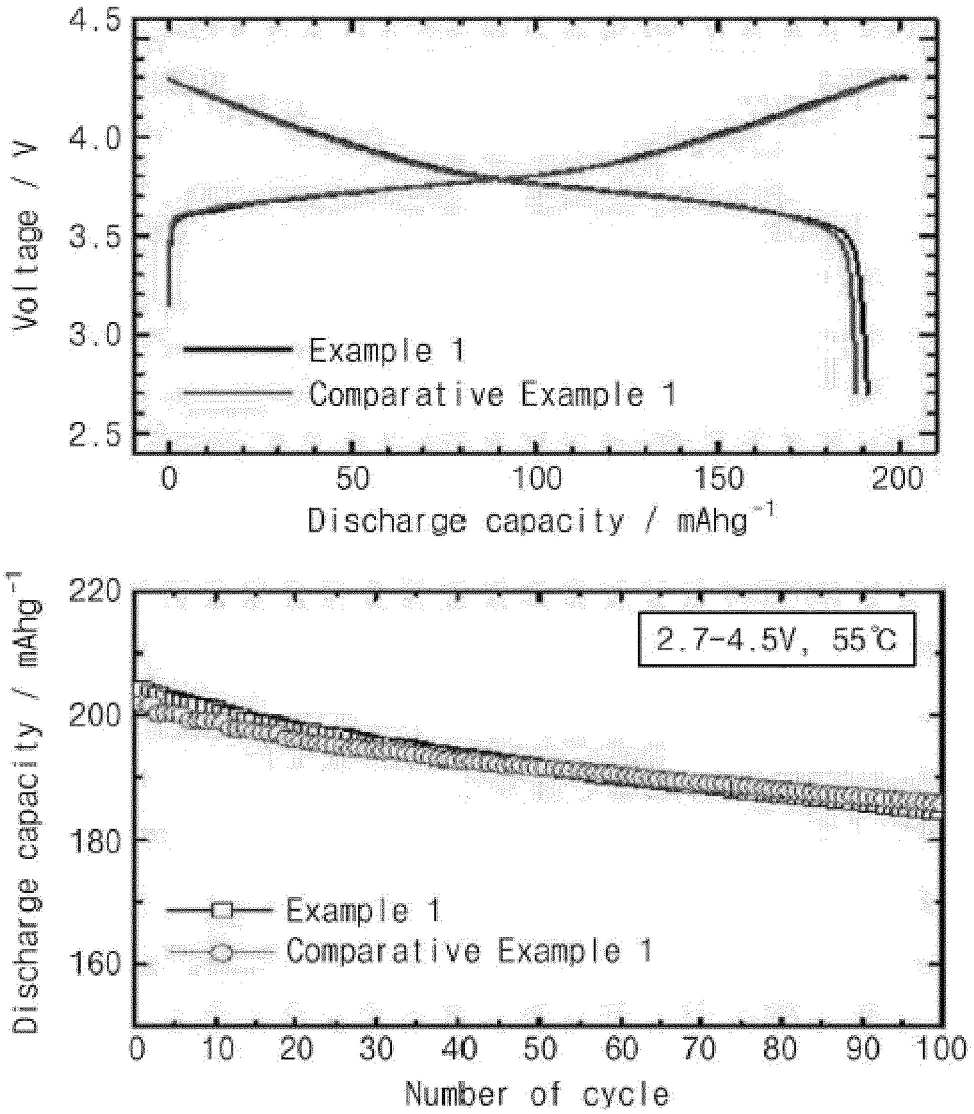
4.5
4.0
3.5
3.0
2.5
Voltage / V
Example 1
Comparative Example 1
0
50
100
150
200
Discharge capacity / mAhg⁻¹
220
200
180
160
Discharge capacity / mAhg⁻¹
2.7-4.5V, 55℃
Example 1
Comparative Example 1
0
10
20
30
40
50
60
70
80
90
100
Number of cycle

【Fig. 26】

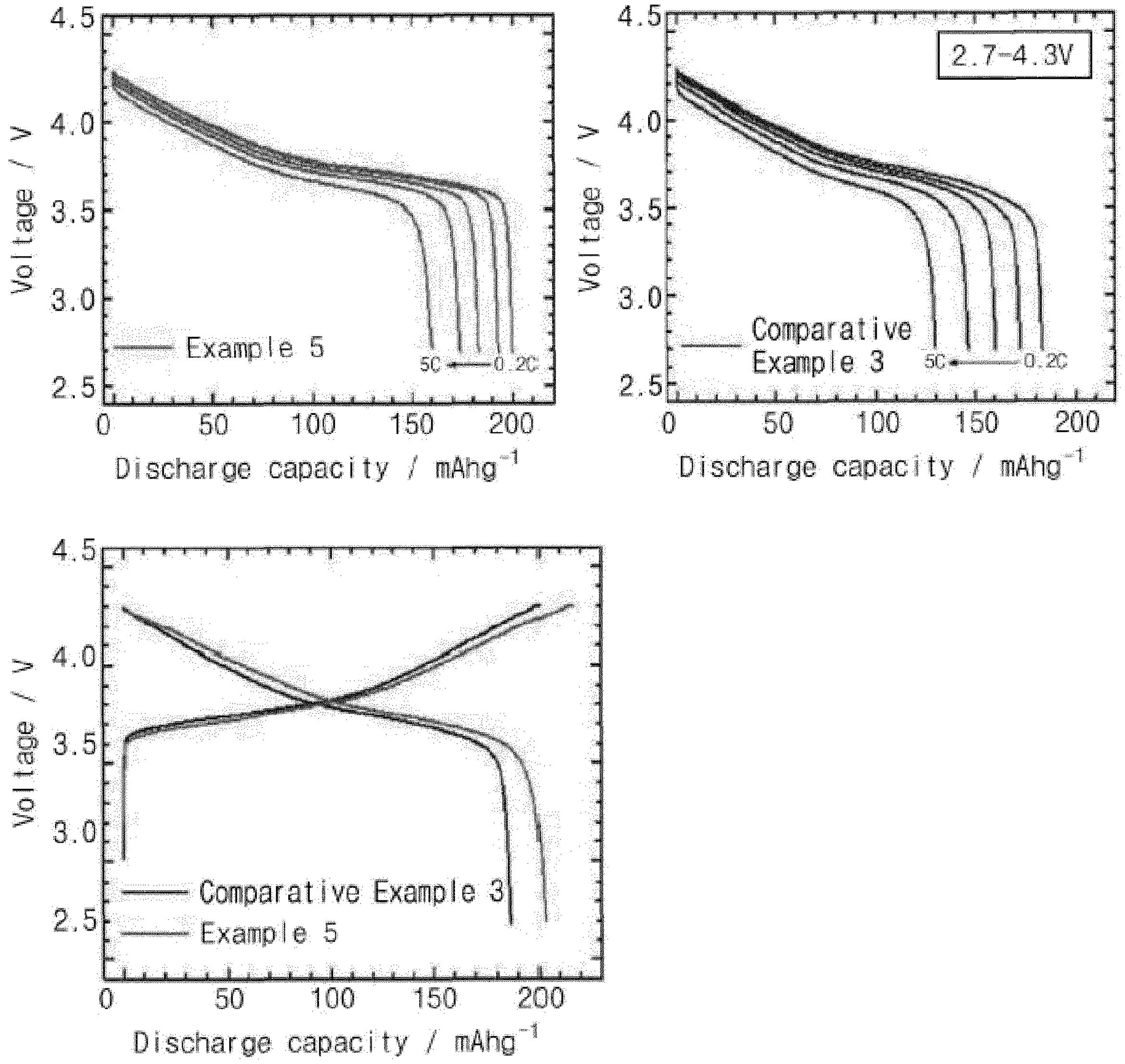
Voltage / V
Discharge capacity / mAhg$^{-1}$
Example 5
5C ← 0.2C
2.7-4.3V
Comparative Example 3
5C ← 0.2C
Comparative Example 3
Example 5

【Fig. 27】

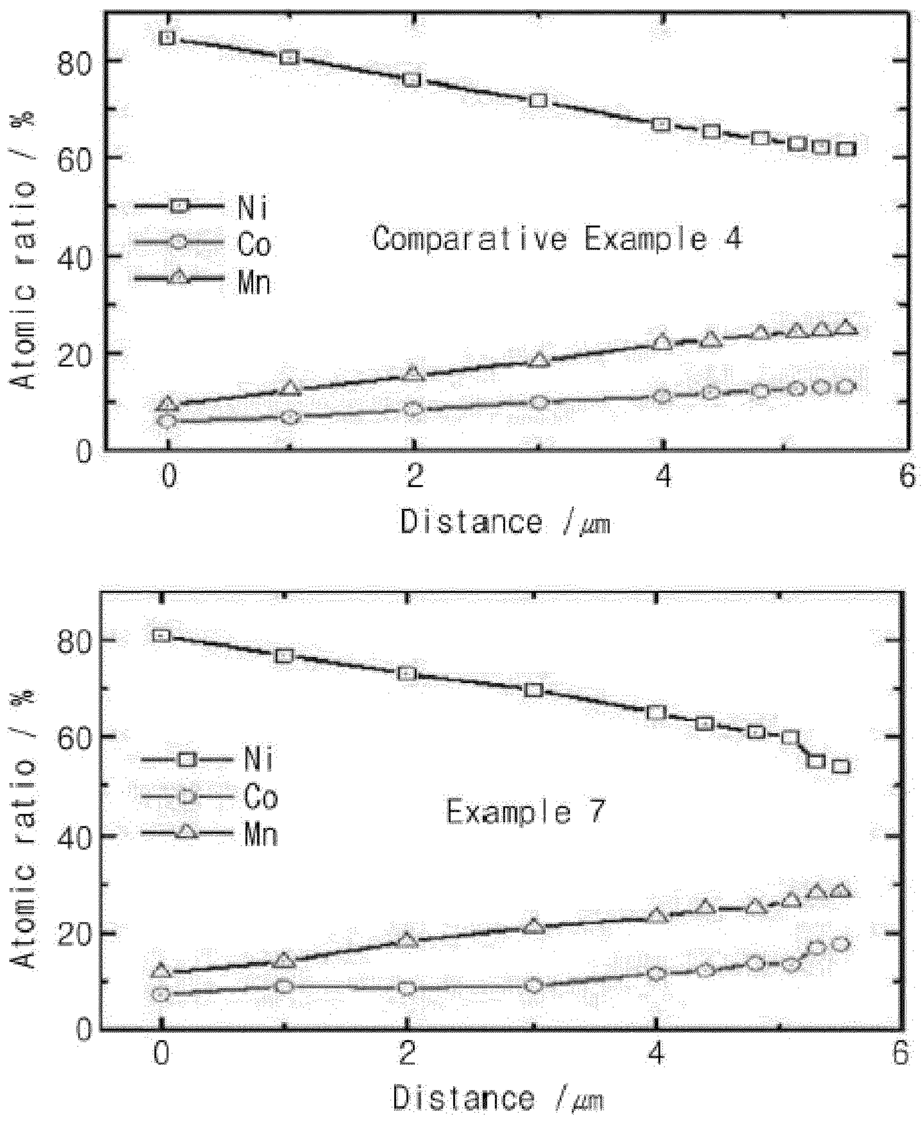
Comparative Example 4
Ni
Co
Mn
Atomic ratio / %
Distance /μm
Example 7
Ni
Co
Mn
Atomic ratio / %
Distance /μm

【Fig. 28】

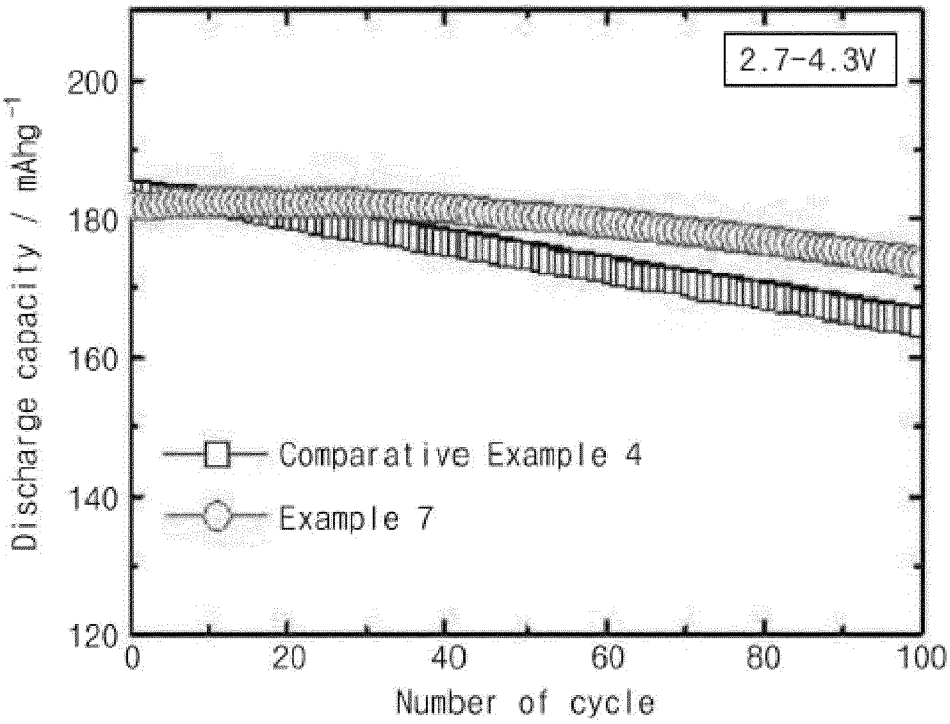
2.7-4.3V
Discharge capacity / mAhg$^{-1}$
Comparative Example 4
Example 7
Number of cycle
200
180
160
140
120
0
20
40
60
80
100

【Fig. 29】

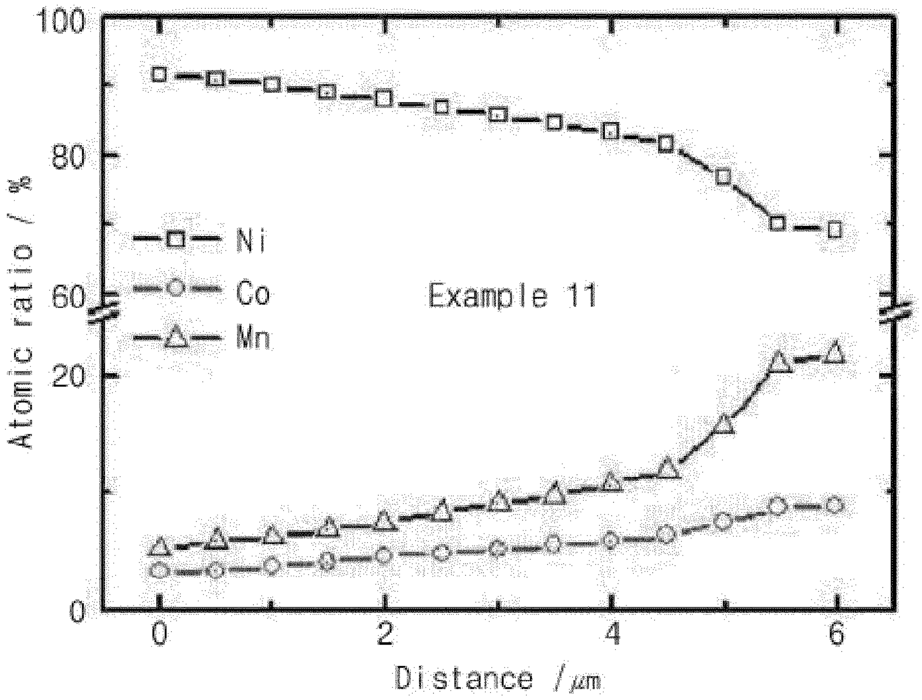
Atomic ratio / %
Ni
Co
Mn
Example 11
Distance /μm
100
80
60
20
0
0
2
4
6

【Fig. 30】

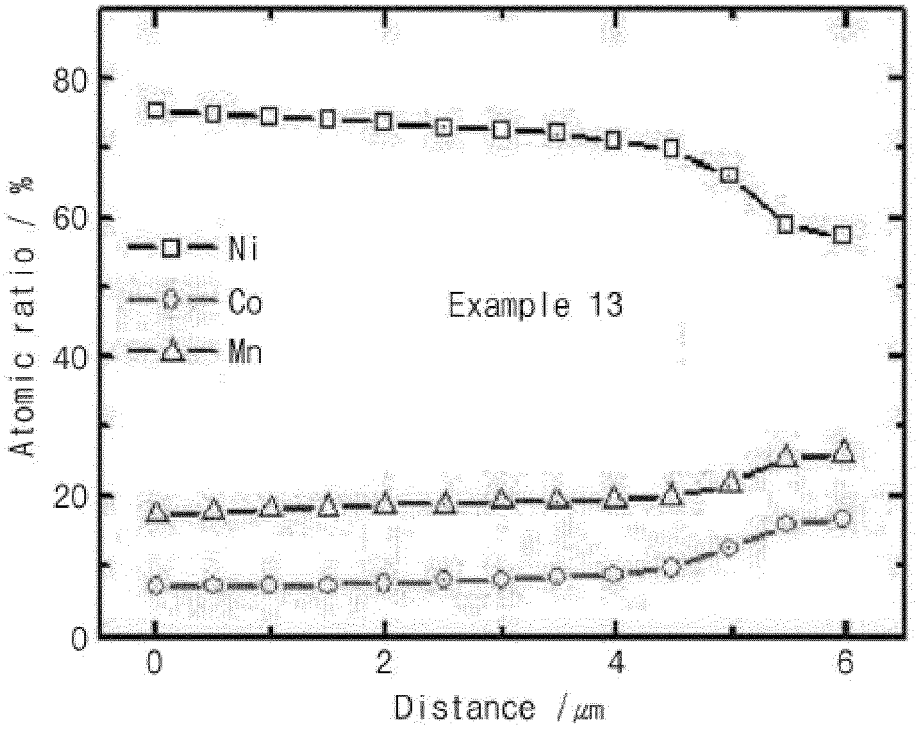

【Fig. 31】

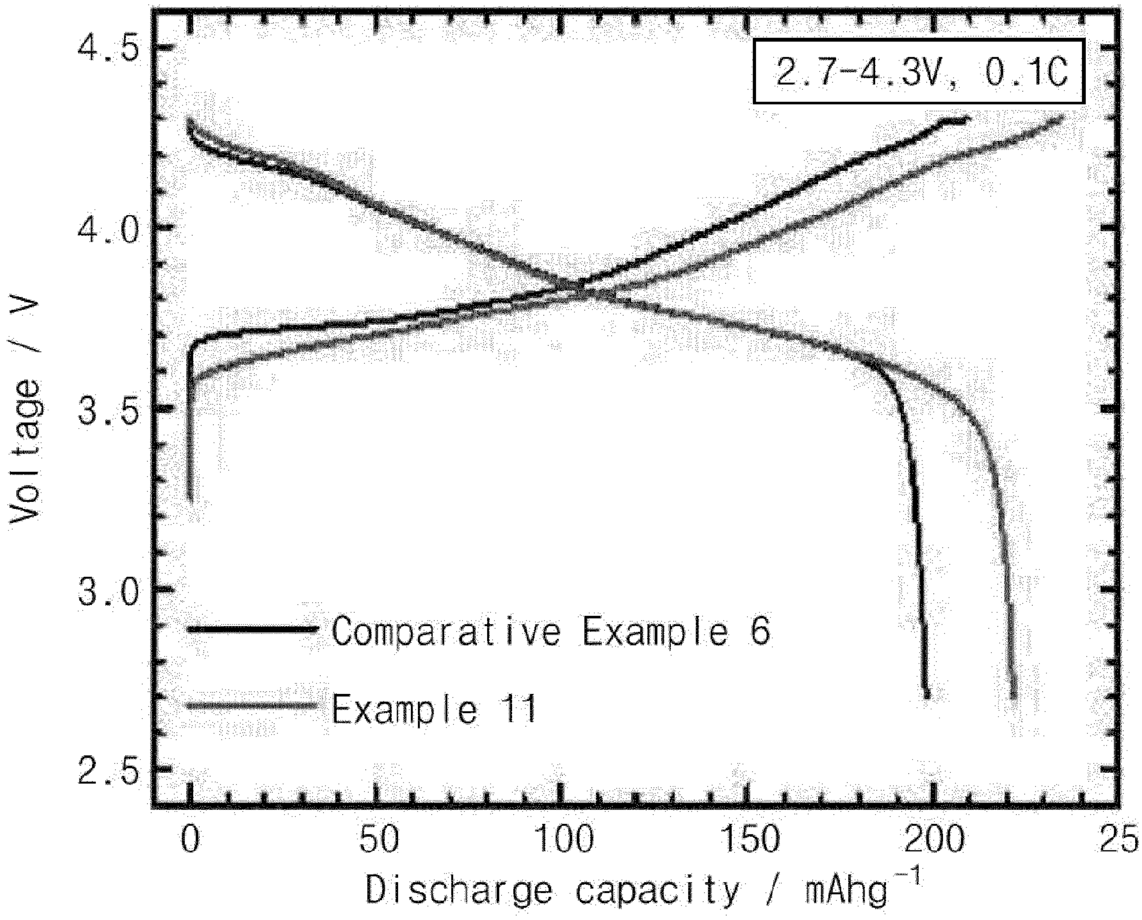
2.7-4.3V, 0.1C
Voltage / V
4.5
4.0
3.5
3.0
2.5
0
50
100
150
200
25
Discharge capacity / mAhg-1
Comparative Example 6
Example 11

【Fig. 32】

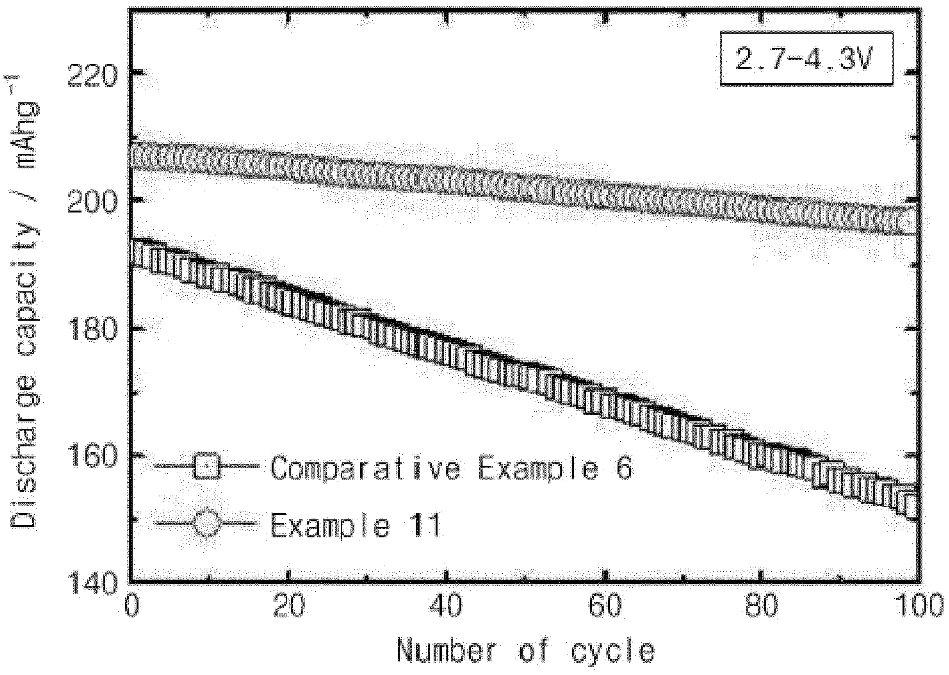
2.7-4.3V
Discharge capacity / mAhg$^{-1}$
220
200
180
160
140
0
20
40
60
80
100
Number of cycle
Comparative Example 6
Example 11

【Fig. 33】

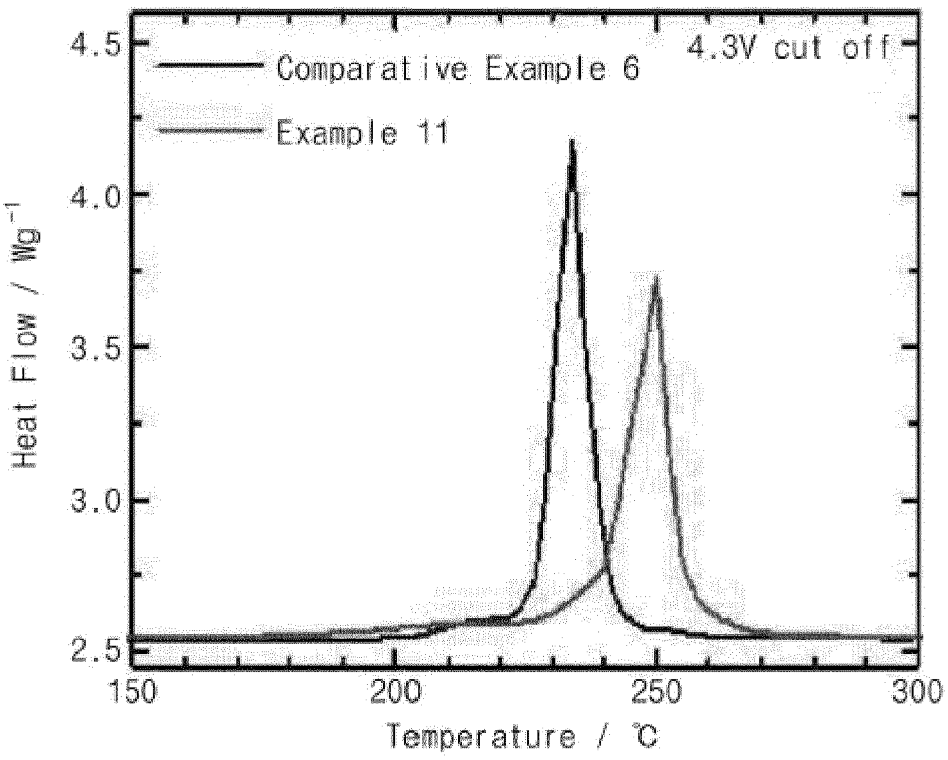
4.3V cut off
Comparative Example 6
Example 11
Heat Flow / Wg$^{-1}$
4.5
4.0
3.5
3.0
2.5
150
200
250
300
Temperature / ℃

【Fig. 34】

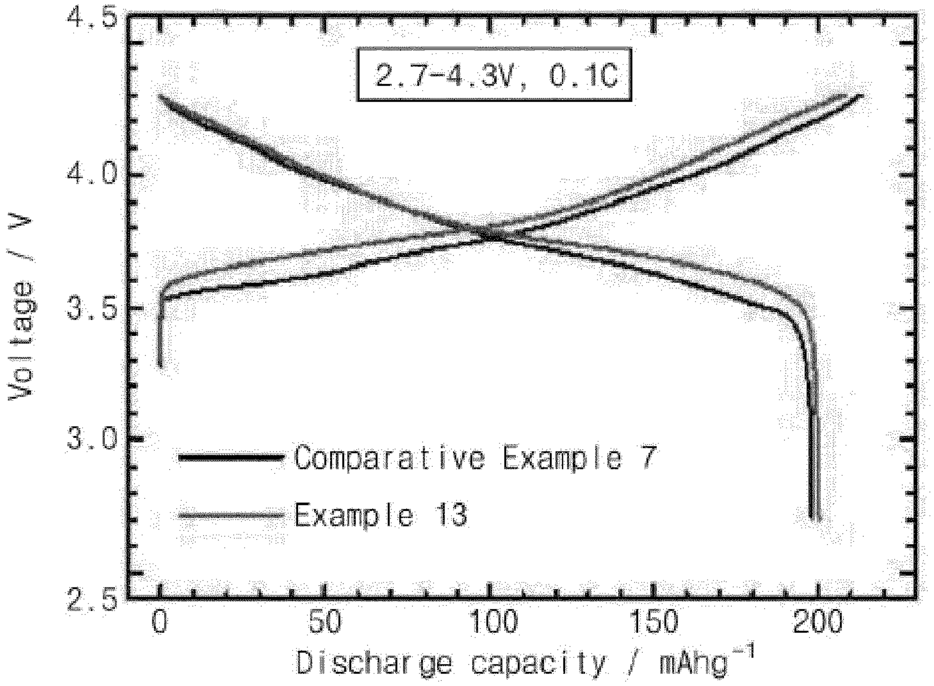
2.7-4.3V, 0.1C
Comparative Example 7
Example 13
Voltage / V
4.5
4.0
3.5
3.0
2.5
0
50
100
150
200
Discharge capacity / mAhg-1

【Fig. 35】

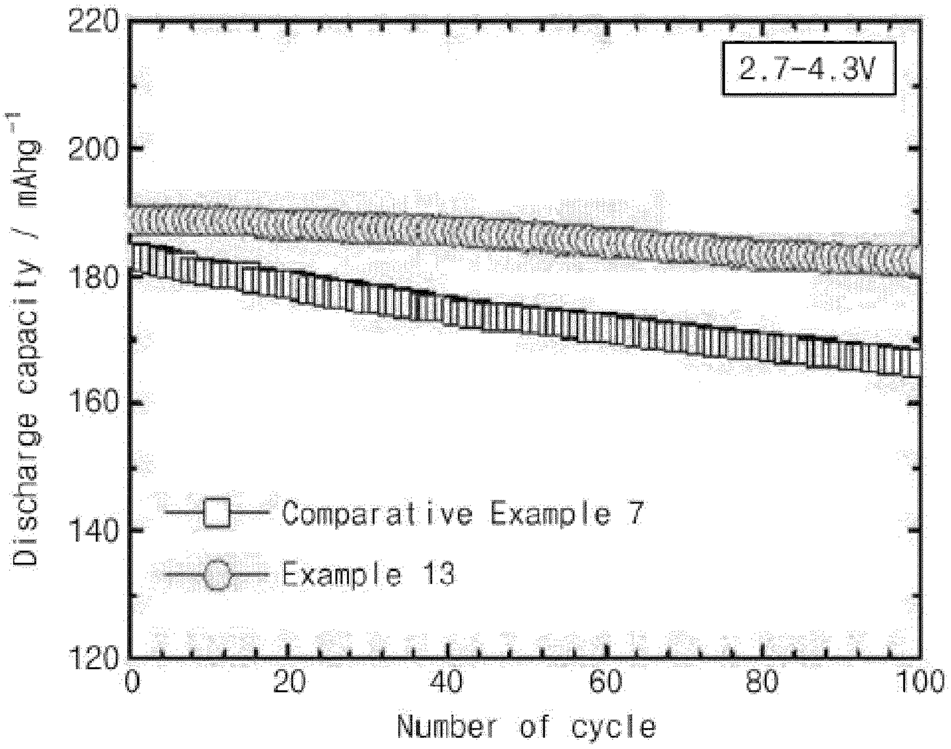
2.7-4.3V
Comparative Example 7
Example 13
Discharge capacity / mAhg-1
220
200
180
160
140
120
0
20
40
60
80
100
Number of cycle

【Fig. 36】

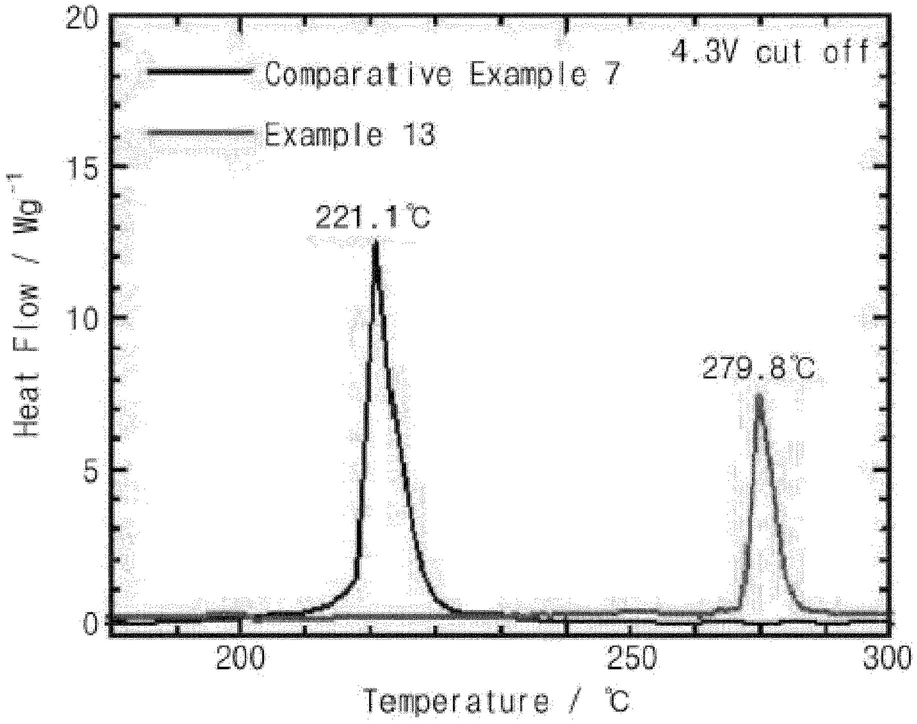
4.3V cut off
Comparative Example 7
Example 13
221.1℃
279.8℃
Heat Flow / Wg⁻¹
Temperature / ℃
0
5
10
15
20
200
250
300

【Fig. 37】

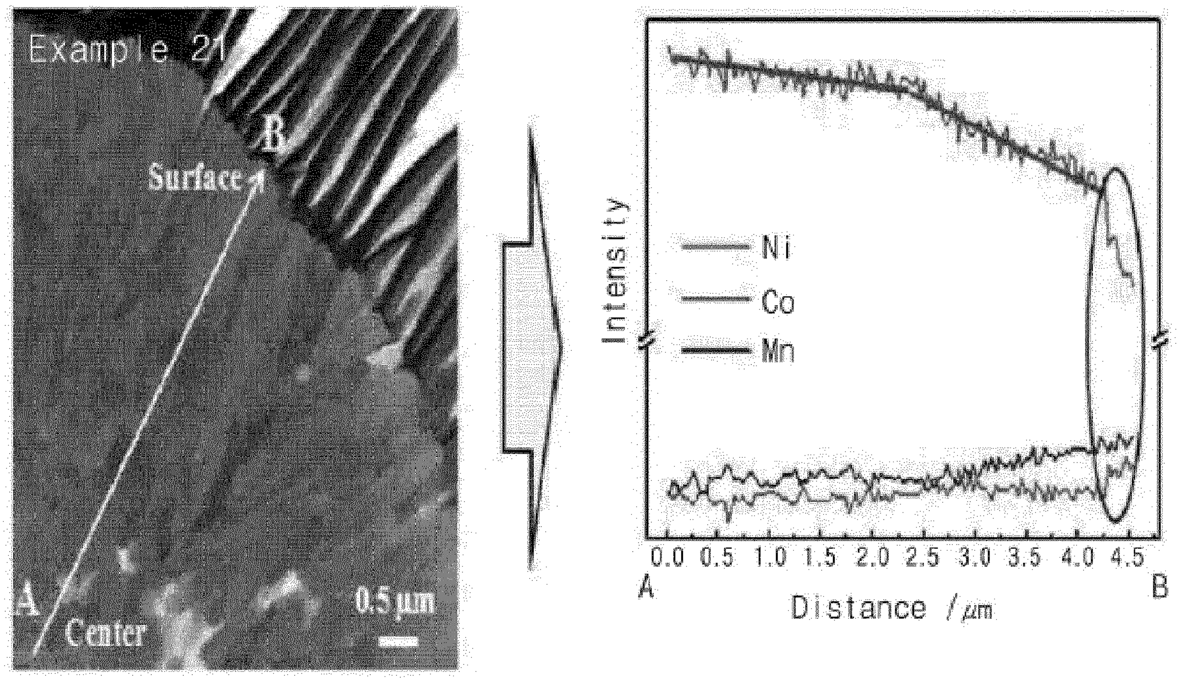
Example 21
B
Surface
A
Center
0.5 μm
Intensity
Ni
Co
Mn
0.0 0.5 1.0 1.5 2.0 2.5 3.0 3.5 4.0 4.5
A
B
Distance / μm

【Fig. 38】

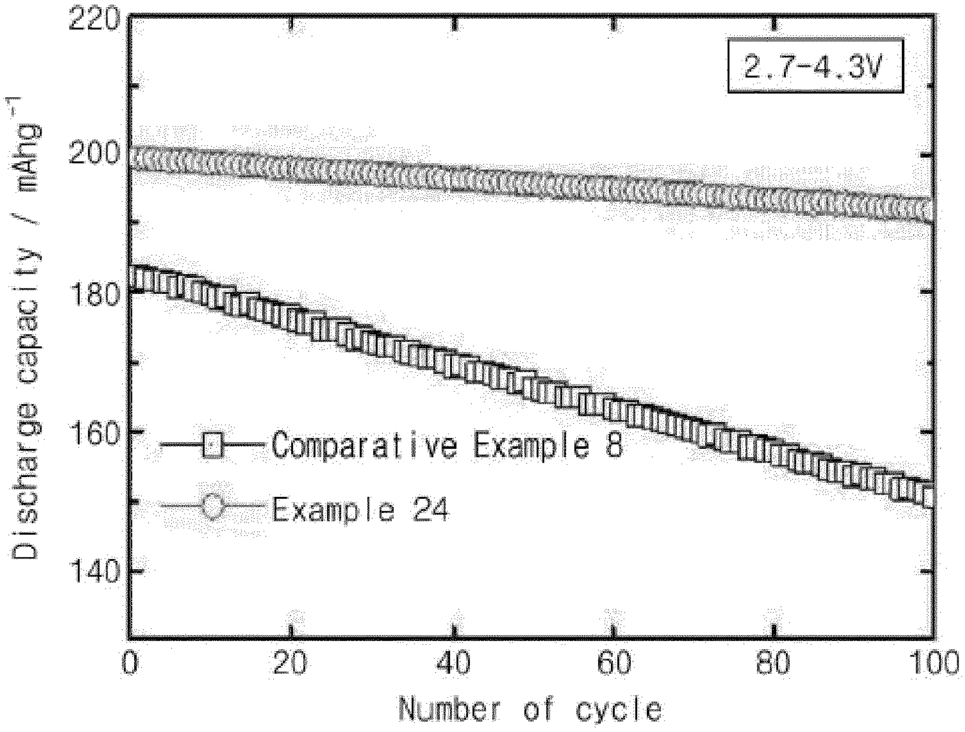

2.7-4.3V
Discharge capacity / mAhg-1
220
200
180
160
140
Comparative Example 8
Example 24
0
20
40
60
80
100
Number of cycle

【Fig. 39】

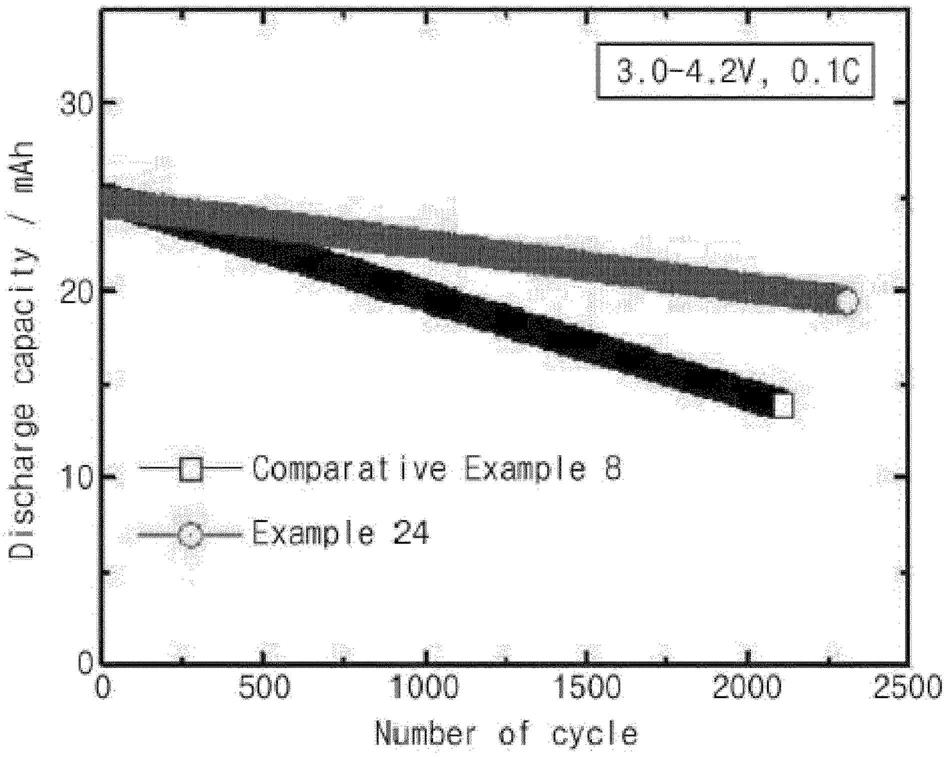
3.0-4.2V, 0.1C
Discharge capacity / mAh
Number of cycle
Comparative Example 8
Example 24
0
10
20
30
500
1000
1500
2000
2500

【Fig. 40】

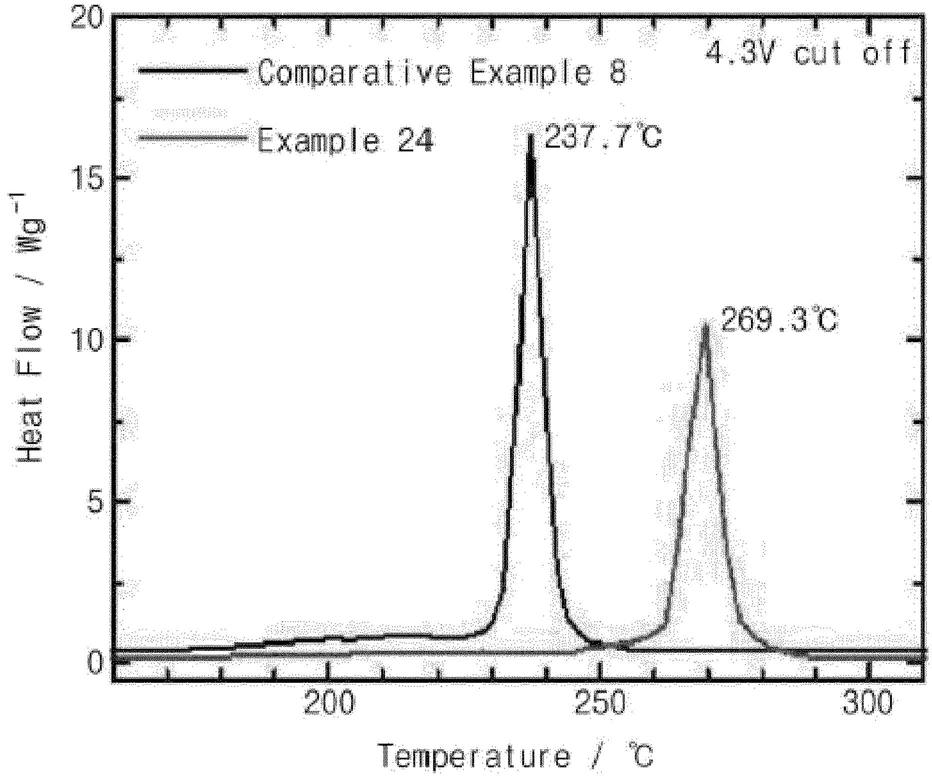
Comparative Example 8
Example 24
4.3V cut off
237.7℃
269.3℃
Heat Flow / Wg⁻¹
Temperature / ℃
0
5
10
15
20
200
250
300

【Fig. 41】

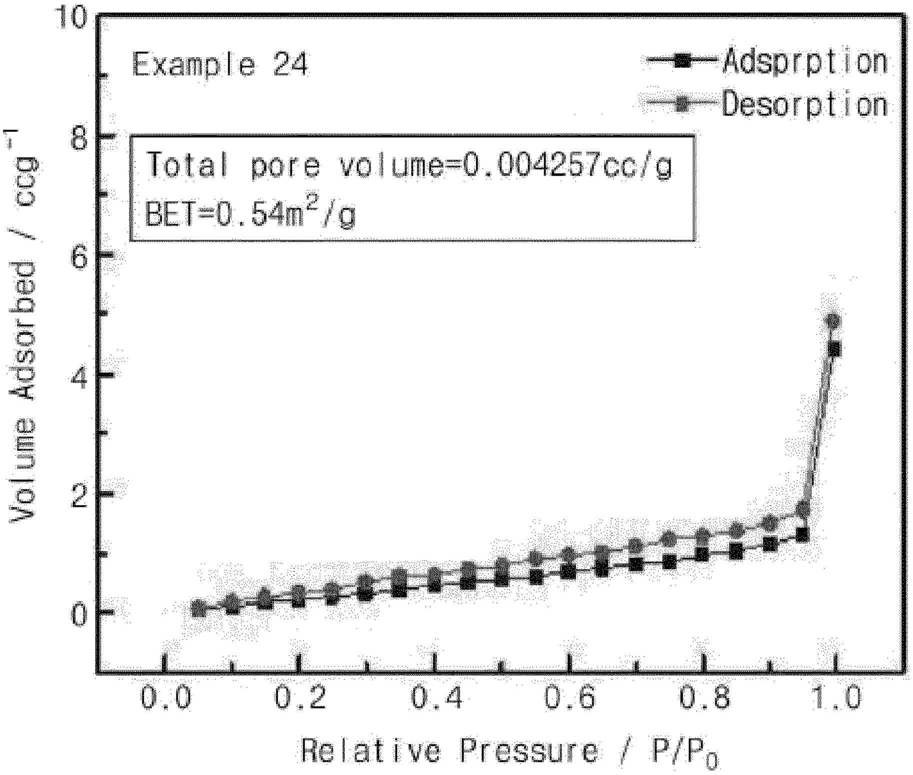
Example 24
Adsprption
Desorption
Total pore volume=0.004257cc/g
BET=0.54m2/g
Volume Adsorbed / ccg-1
Relative Pressure / P/P0
10
8
6
4
2
0
0.0
0.2
0.4
0.6
0.8
1.0

【Fig. 42】

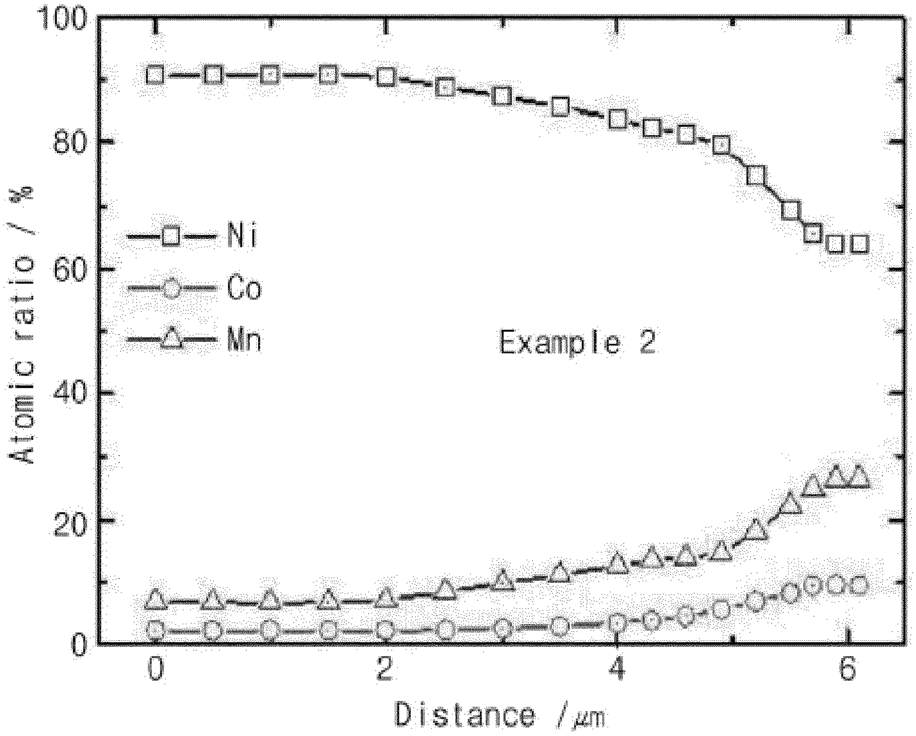
100
80
60
40
20
0
Atomic ratio / %
Ni
Co
Mn
Example 2
0
2
4
6
Distance /μm

【Fig. 43】

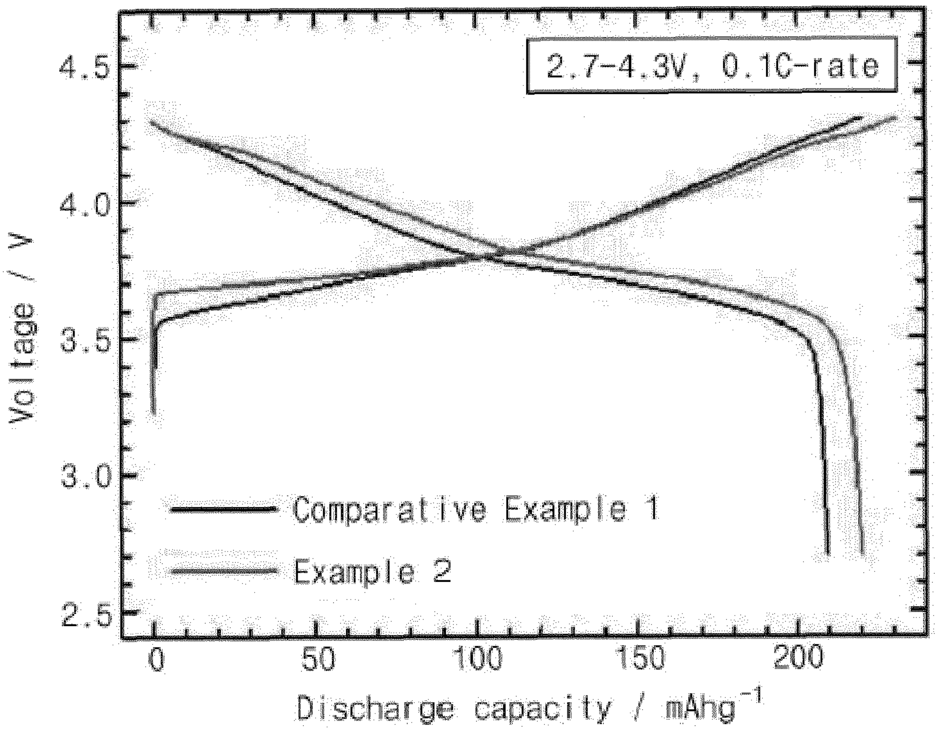
2.7-4.3V, 0.1C-rate
Voltage / V
4.5
4.0
3.5
3.0
2.5
0
50
100
150
200
Discharge capacity / mAhg-1
Comparative Example 1
Example 2

【Fig. 44】

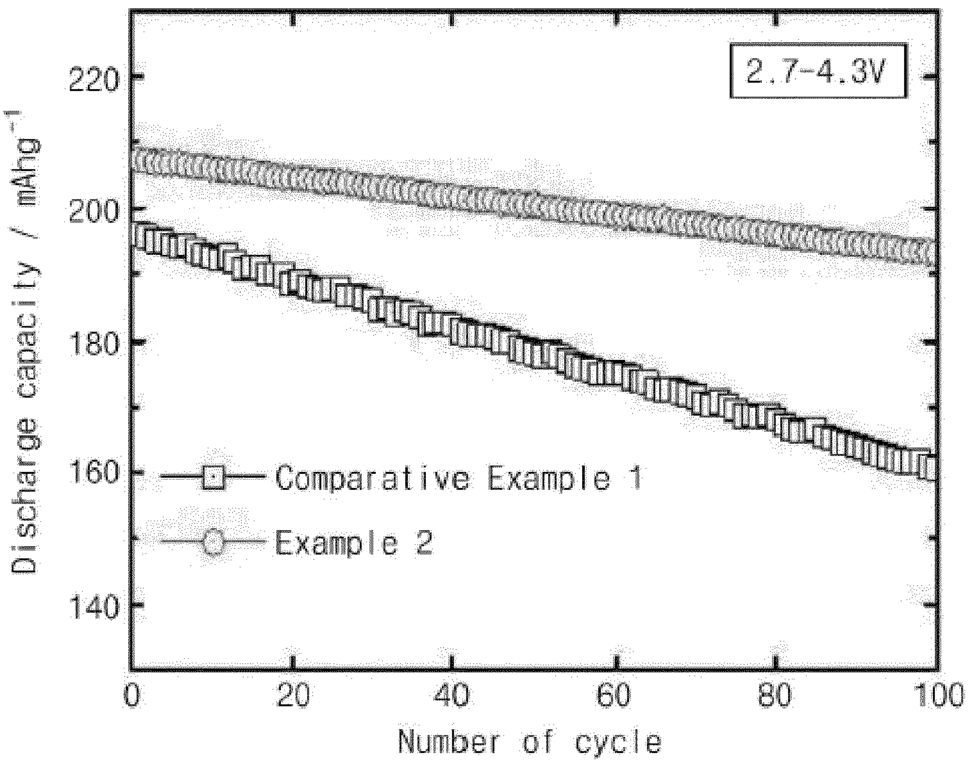
2.7-4.3V
Discharge capacity / mAhg-1
220
200
180
160
140
0
20
40
60
80
100
Number of cycle
Comparative Example 1
Example 2

【Fig. 45】

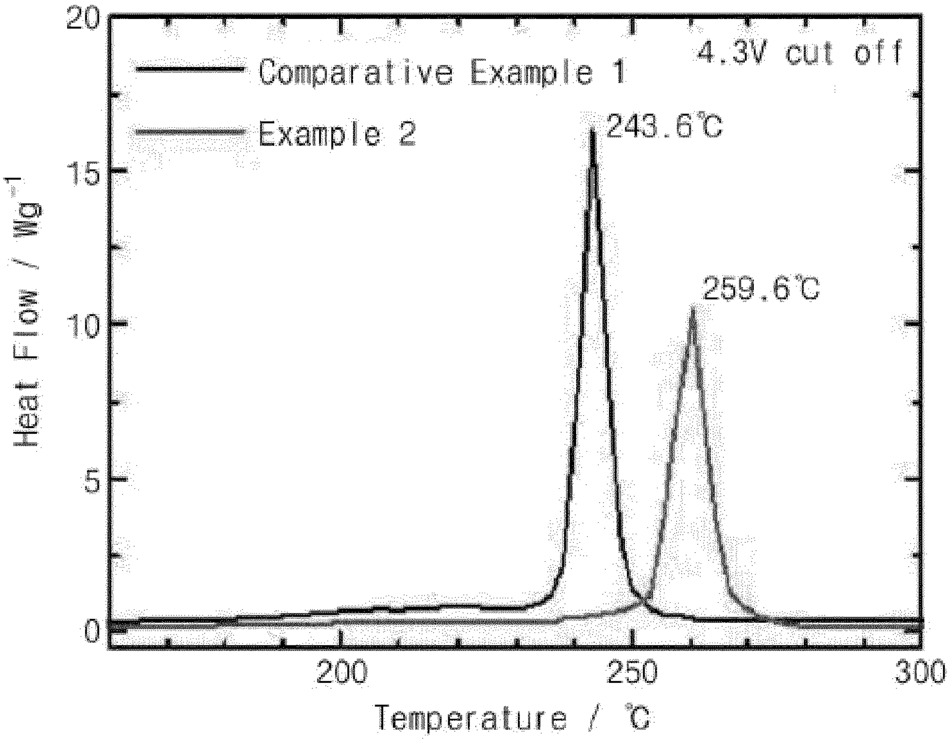
4.3V cut off
Comparative Example 1
Example 2
243.6℃
259.6℃
Heat Flow / Wg⁻¹
Temperature / ℃
0
5
10
15
20
200
250
300

【Fig. 46】

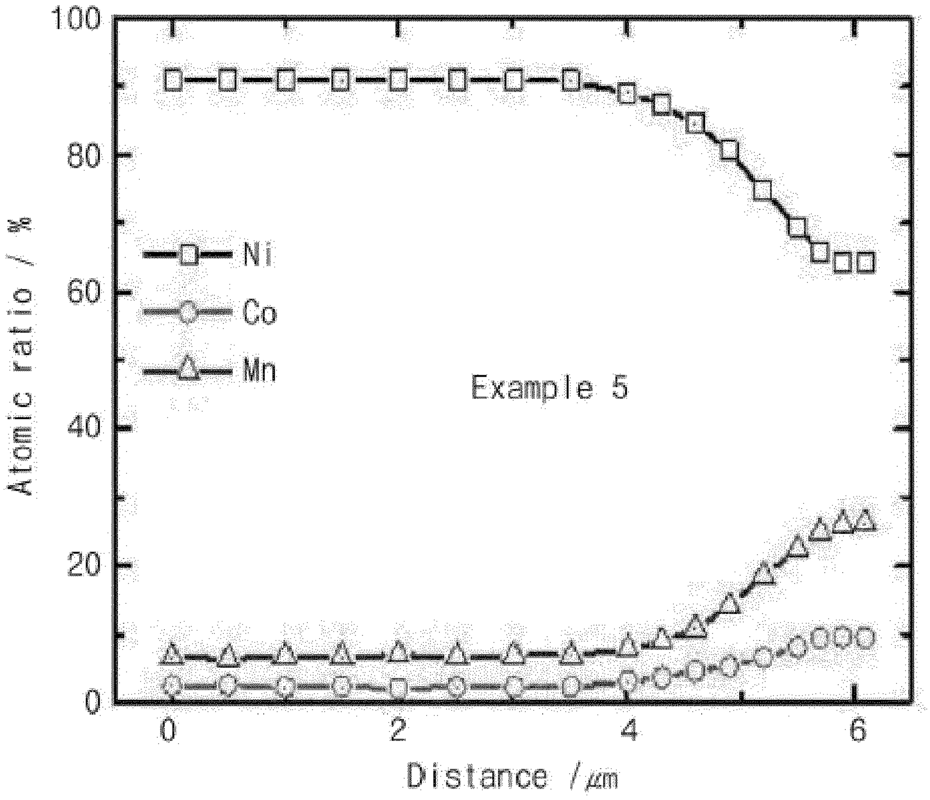

【Fig. 47】

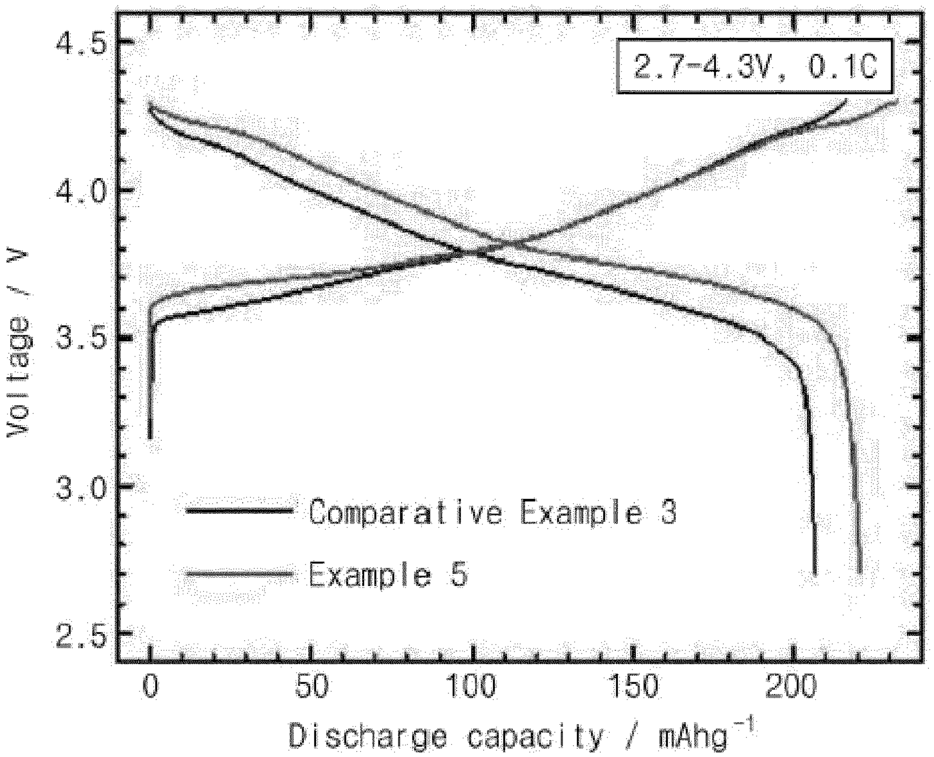
2.7-4.3V, 0.1C
Voltage / V
4.5
4.0
3.5
3.0
2.5
0
50
100
150
200
Discharge capacity / mAhg⁻¹
Comparative Example 3
Example 5

【Fig. 48】

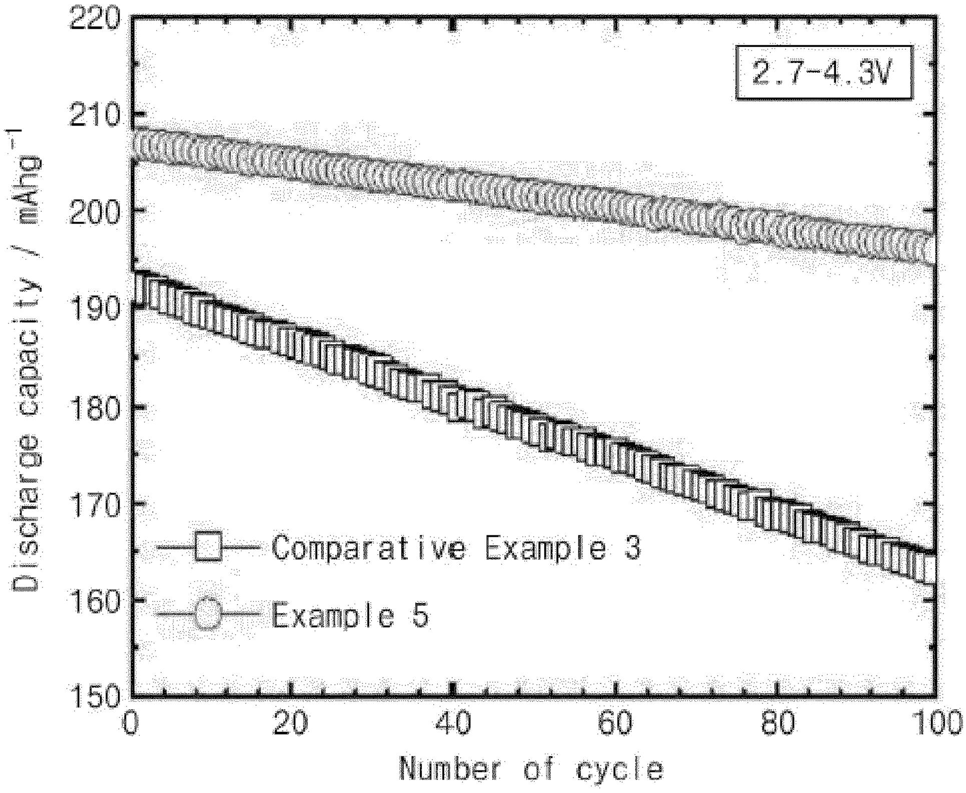
2.7-4.3V
Discharge capacity / mAhg$^{-1}$
220
210
200
190
180
170
160
150
0
20
40
60
80
100
Number of cycle
Comparative Example 3
Example 5

【Fig. 49】

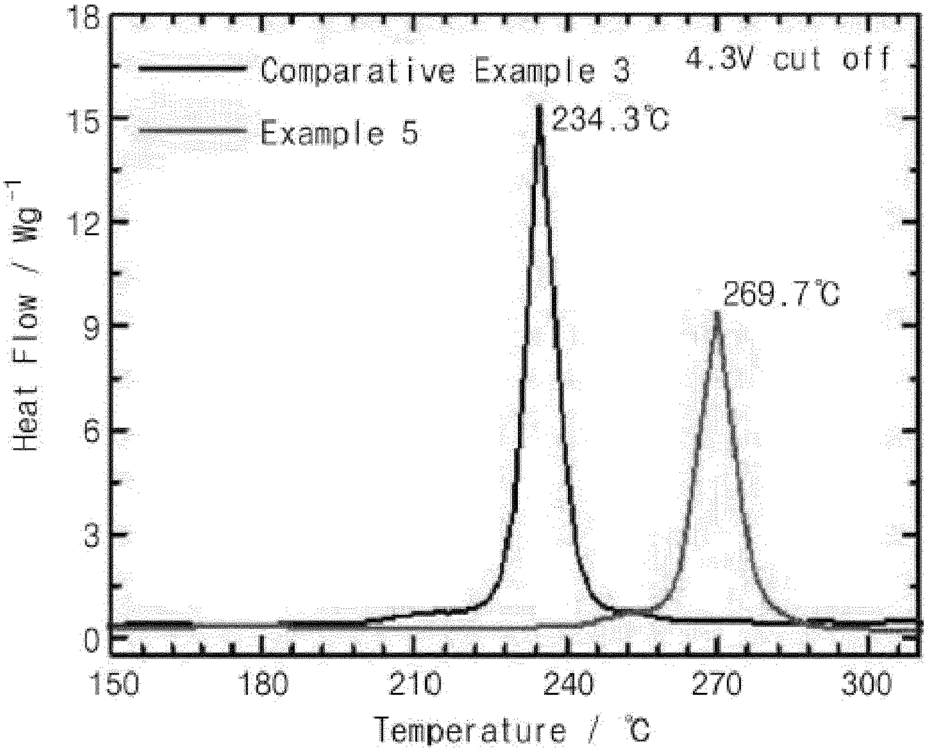
Comparative Example 3
Example 5
4.3V cut off
234.3℃
269.7℃
Heat Flow / Wg$^{-1}$
Temperature / ℃
0
3
6
9
12
15
18
150
180
210
240
270
300

【Fig. 50】

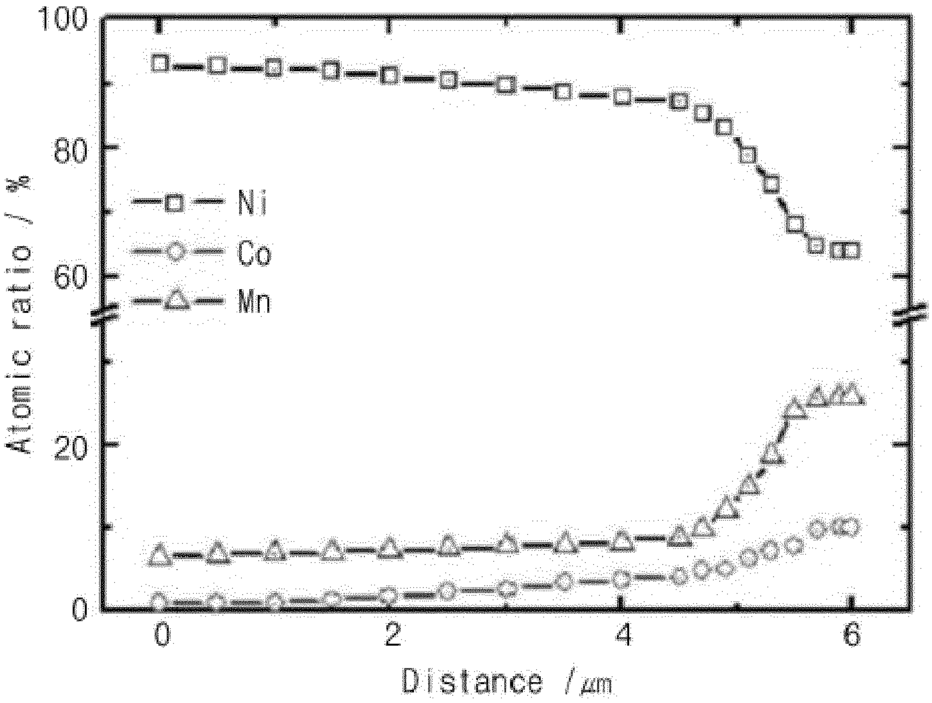

【Fig. 51】

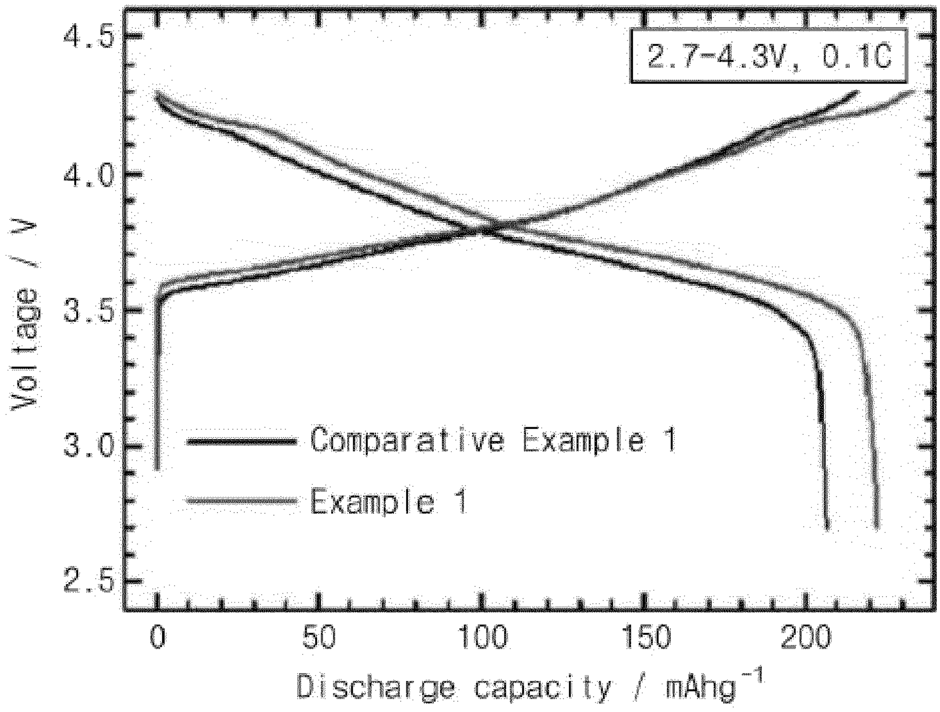
2.7-4.3V, 0.1C
Comparative Example 1
Example 1
Voltage / V
4.5
4.0
3.5
3.0
2.5
0
50
100
150
200
Discharge capacity / mAhg$^{-1}$

【Fig. 52】

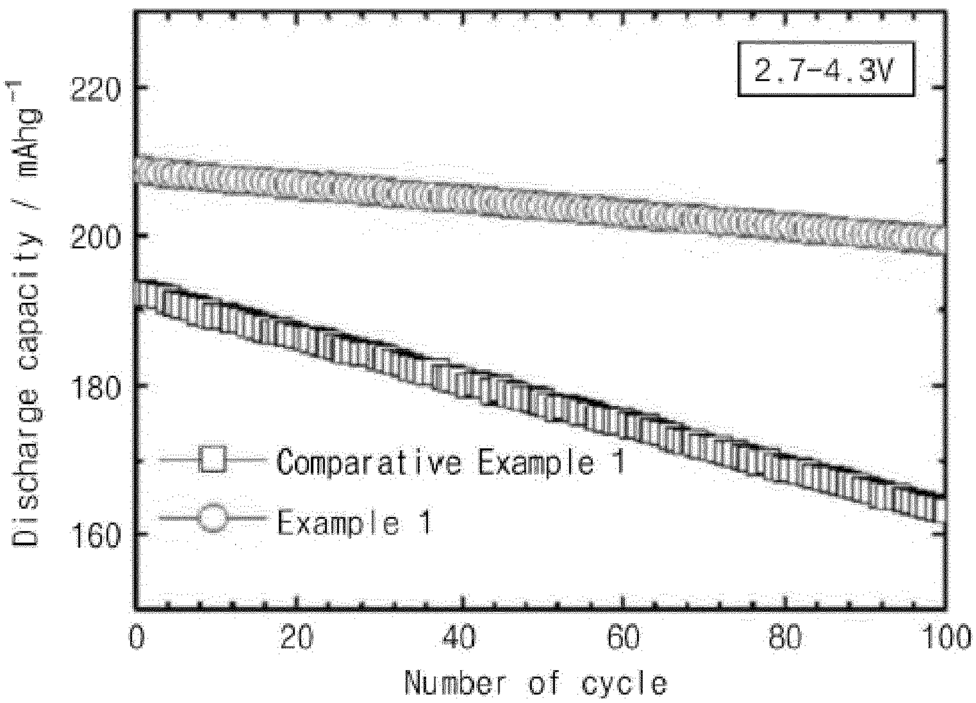
2.7-4.3V
Discharge capacity / mAhg$^{-1}$
220
200
180
160
Comparative Example 1
Example 1
0
20
40
60
80
100
Number of cycle

【Fig. 53】

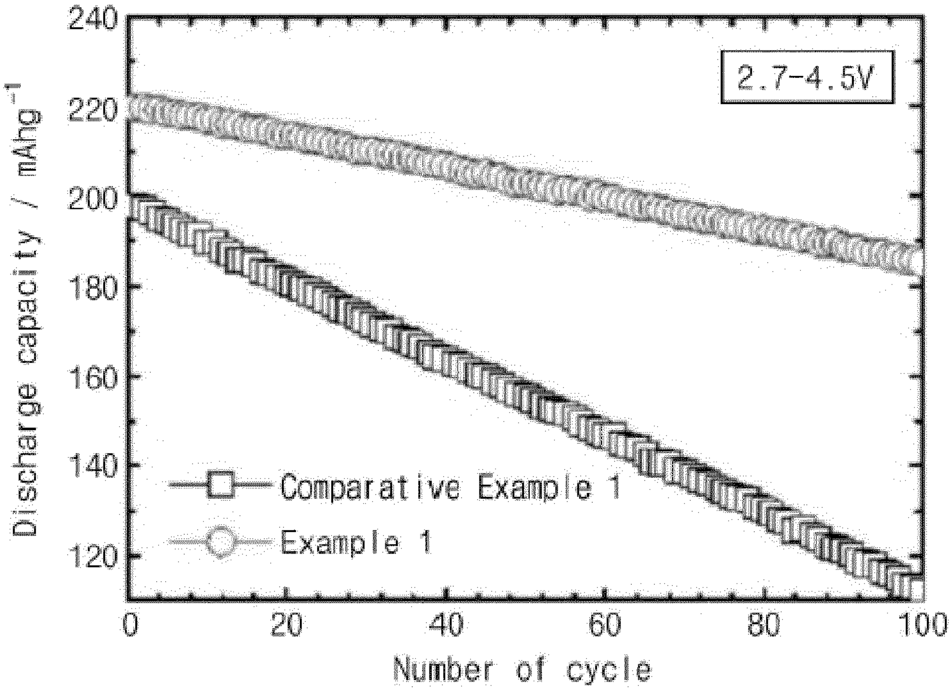
2.7-4.5V
Comparative Example 1
Example 1
Discharge capacity / mAhg$^{-1}$
Number of cycle
240
220
200
180
160
140
120
0
20
40
60
80
100

【Fig. 54】

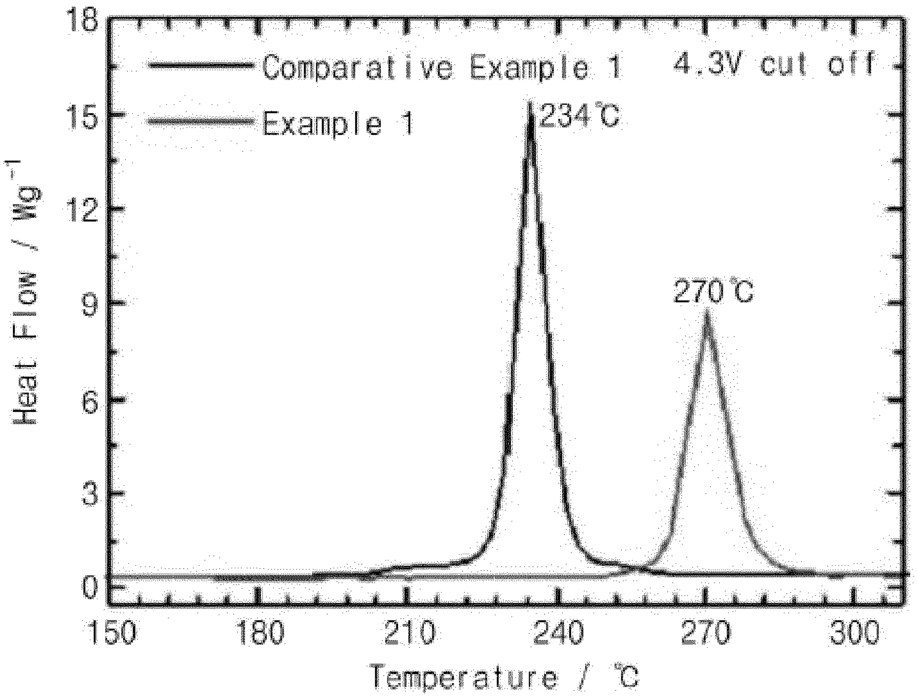
Comparative Example 1
Example 1
4.3V cut off
234℃
270℃
Heat Flow / Wg$^{-1}$
Temperature / ℃
18
15
12
9
6
3
0
150
180
210
240
270
300

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020140148503
- KR 1020140119621
- KR 1020130150315
- EP 0872450 A
- KR 20050083869
- KR 20070097923

### Non-patent literature cited in the description

- *J. Power Sources,* 2004, vol. 134, 293